# EUROPEAN PATENT APPLICATION

(11) **EP 3 375 844 A1**
(43) Date of publication of application: **19.09.2018**
(21) Application number: 18161354.8
(22) Date of filing: 13.03.2018
(51) Int. Cl.: C09K 19/30, C09K 19/54, C09K 19/34, C09K 19/04, C09K 19/12

(54) **LIQUID-CRYSTALLINE MEDIUM**

(30) Priority: 16.03.2017 EP 17161352
(71) Applicant: Merck Patent GmbH, 64293 Darmstadt (DE)
(72) Inventor: Choi, Chang-Suk, ASAN-SI, CHUNGCHEONGNAM-DO 31575 (KR); Yun, Chang-Jun, HWASEONG-SI, GYEONGGI-DO 18476 (KR); Han, Yeon-Jeong, GUNPO-SI, GYEONGGI-DO 15865 (KR); Jin, Heui-Seok, YONGIN-SI, GYEONGGI-DO 16811 (KR); Yun, Yong-Kuk, HWASEONG 18477 (KR)

(57) **Abstract**

The invention relates to a liquid-crystalline medium which comprises at least one compound of the formula I, 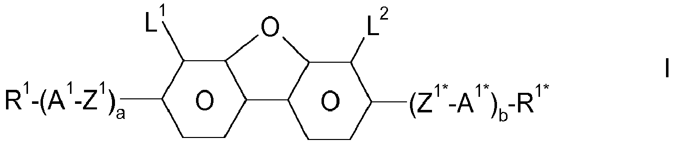 and
one or more compounds of the formula ST 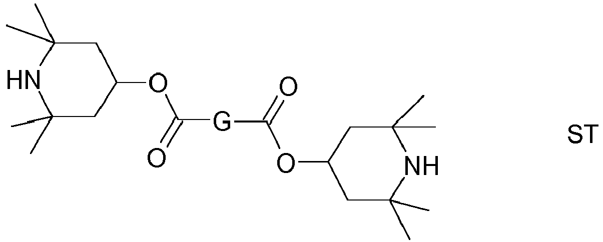 wherein the occurring groups and parameters have the meanings indicated in claim 1,
and to the use thereof for an active-matrix display, in particular based on the VA, PSA, PA-VA, SS-VA, SA-VA, PS-VA, PALC, IPS, PS-IPS, UB-FFS, U-IPS, FFS or PS-FFS effect.

## Description

The invention relates to a liquid-crystalline medium which comprises one or more compounds of the formula I, 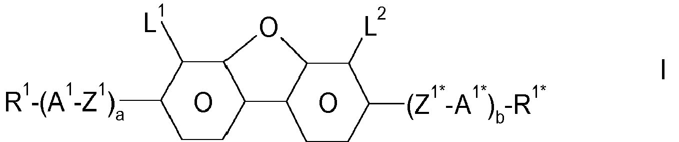 in which
- R¹ and R^{1*}: 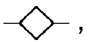 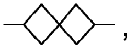 each, independently of one another, denote H, an alkyl or alkoxy radical having 1 to 15 C atoms, where, in addition, one or more CH₂ groups in these radicals may each be replaced, independently of one another, by -C≡C-, -CF₂O-, -OCF₂-, -CH=CH-, -O-, -CO-O-, -O-CO- in such a way that O atoms are not linked directly to one another, and in which, in addition, one or more H atoms may be replaced by halogen,
- A¹ and A¹*: each, independently of one another, denote
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo[2.2.2]-octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
   where the radicals a), b) and c) may be mono- or polysubstituted by halogen atoms,
- Z¹ and Z¹*: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond, and
- L¹ and L²: each, independently of one another, denote F, Cl, CF₃ or CHF₂,
- a and b: each, independently of one another, are 0 or 1,
and
one or more compounds of the formula ST, 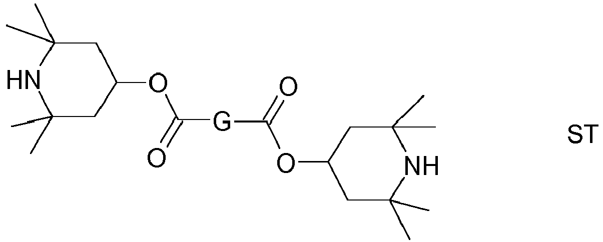 wherein
- G: denotes a single bond or a divalent aliphatic or cycloaliphatic radical having 1 to 20 C atoms.

Media of this type can be used, in particular, for electro-optical displays having active-matrix addressing based on the ECB effect and for IPS (in-plane switching) displays or FFS (fringe field switching) displays.

The principle of electrically controlled birefringence, the ECB effect or also DAP (deformation of aligned phases) effect, was described for the first time in 1971 (M.F. Schieckel and K. Fahrenschon, "Deformation of nematic liquid crystals with vertical orientation in electrical fields", Appl. Phys. Lett. 19 (1971), 3912). This was followed by papers by J.F. Kahn (Appl. Phys. Lett. 20 (1972), 1193) and G. Labrunie and J. Robert (J. Appl. Phys. 44 (1973), 4869).

The papers by J. Robert and F. Clerc (SID 80 Digest Techn. Papers (1980), 30), J. Duchene (Displays 7 (1986), 3) and H. Schad (SID 82 Digest Techn. Papers (1982), 244) showed that liquid-crystalline phases must have high values for the ratio of the elastic constants K₃/K₁, high values for the optical anisotropy Δn and values for the dielectric anisotropy of Δε ≤ -0.5 in order to be suitable for use in high-information display elements based on the ECB effect. Electro-optical display elements based on the ECB effect have a homeotropic edge alignment (VA technology = vertically aligned). Dielectrically negative liquid-crystal media can also be used in displays which use the so-called IPS or FFS effect.

Displays which use the ECB effect, as so-called VAN (vertically aligned nematic) displays, for example in the MVA (multi-domain vertical alignment, for example: Yoshide, H. et al., paper 3.1: "MVA LCD for Notebook or Mobile PCs ...", SID 2004 International Symposium, Digest of Technical Papers, XXXV, Book I, pp. 6 to 9, and Liu, C.T. et al., paper 15.1: "A 46-inch TFT-LCD HDTV Technology ...", SID 2004 International Symposium, Digest of Technical Papers, XXXV, Book II, pp. 750 to 753), PVA (patterned vertical alignment, for example: Kim, Sang Soo, paper 15.4: "Super PVA Sets New State-of-the-Art for LCD-TV", SID 2004 International Symposium, Digest of Technical Papers, XXXV, Book II, pp. 760 to 763), ASV (advanced super view, for example: Shigeta, Mitzuhiro and Fukuoka, Hirofumi, paper 15.2: "Development of High Quality LCDTV", SID 2004 International Symposium, Digest of Technical Papers, XXXV, Book II, pp. 754 to 757) modes, have established themselves as one of the three more recent types of liquid-crystal display that are currently the most important, in particular for television applications, besides IPS (in-plane switching) displays (for example: Yeo, S.D., paper 15.3: "An LC Display for the TV Application", SID 2004 International Symposium, Digest of Technical Papers, XXXV, Book II, pp. 758 & 759) and the long-known TN (twisted nematic) displays. The technologies are compared in general form, for example, in Souk, Jun, SID Seminar 2004, seminar M-6: "Recent Advances in LCD Technology", Seminar Lecture Notes, M-6/1 to M-6/26, and Miller, Ian, SID Seminar 2004, seminar M-7: "LCD-Television", Seminar Lecture Notes, M-7/1 to M-7/32. Although the response times of modern ECB displays have already been significantly improved by addressing methods with overdrive, for example: Kim, Hyeon Kyeong et al., paper 9.1: "A 57-in. Wide UXGA TFT-LCD for HDTV Application", SID 2004 International Symposium, Digest of Technical Papers, XXXV, Book I, pp. 106 to 109, the achievement of video-compatible response times, in particular on switching of grey shades, is still a problem which has not yet been satisfactorily solved.

Industrial application of this effect in electro-optical display elements requires LC phases, which have to satisfy a multiplicity of requirements. Particularly important here are chemical resistance to moisture, air and physical influences, such as heat, infrared, visible and ultraviolet radiation and direct and alternating electric fields.

Furthermore, industrially usable LC phases are required to have a liquid-crystalline mesophase in a suitable temperature range and low viscosity.

None of the hitherto-disclosed series of compounds having a liquid-crystalline mesophase includes a single compound which meets all these requirements. Mixtures of two to 25, preferably three to 18, compounds are therefore generally prepared in order to obtain substances which can be used as LC phases. However, it has not been possible to prepare optimum phases easily in this way since no liquid-crystal materials having significantly negative dielectric anisotropy and adequate long-term stability were hitherto available.

Matrix liquid-crystal displays (MLC displays) are known. Non-linear elements which can be used for individual switching of the individual pixels are, for example, active elements (i.e. transistors). The term "active matrix" is then used, where a distinction can be made between two types:
1. MOS (metal oxide semiconductor) transistors on a silicon wafer as substrate
2. thin-film transistors (TFTs) on a glass plate as substrate.

In the case of type 1, the electro-optical effect used is usually dynamic scattering or the guest-host effect. The use of single-crystal silicon as substrate material restricts the display size, since even modular assembly of various part-displays results in problems at the joints.

In the case of the more promising type 2, which is preferred, the electro-optical effect used is usually the TN effect.

A distinction is made between two technologies: TFTs comprising compound semiconductors, such as, for example, CdSe, or TFTs based on polycrystalline or amorphous silicon. The latter technology is being worked on intensively worldwide.

The TFT matrix is applied to the inside of one glass plate of the display, while the other glass plate carries the transparent counter electrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The term MLC displays here covers any matrix display with integrated non-linear elements, i.e. besides the active matrix, also displays with passive elements, such as varistors or diodes (MIM = metal-insulator-metal).

MLC displays of this type are particularly suitable for TV applications (for example pocket TVs) or for high-information displays in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORI-MACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

There is thus still a great demand for MLC displays having very high specific resistance at the same time as a large working-temperature range, short response times and a low threshold voltage, with the aid of which various grey shades can be generated.

The disadvantage of the MLC-TN displays frequently used is due to their comparatively low contrast, the relatively high viewing-angle dependence and the difficulty of generating grey shades in these displays.

The market for VA, PS-VA, IPS, FFS and UB-FFS applications is looking for LC mixtures having fast response times and very high reliability. One approach for achieving fast response times is the identification of highly polar LC materials having low rotational viscosities, whose use in LC mixtures facilitates the desired effect. However, the use of highly polar LC materials of this type has an adverse effect on the reliability parameters, in particular after exposure to light.

The invention is based on the object of providing liquid-crystal mixtures, in particular for monitor and TV applications, based on the ECB, UB-FFS, IPS or FFS effect, which do not have the disadvantages indicated above, or only do so to a reduced extent. In particular, it must be ensured for monitors and televisions that they also work at extremely high and extremely low temperatures and at the same time have very short response times and at the same time have an improved reliability behaviour, in particular exhibit no or significantly reduced image sticking after long operating times.

Surprisingly, it is possible to obtain fast response times of LC mixtures at the same time as good reliability through the use of the compounds of the formula I if suitable stabilisers are added. Stabilisers for the use in liquid-crystalline media are known and described in e.g. WO 2016/146245 A1. One reliability parameter which can be specifically influenced here is the voltage holding ratio before or after exposure to light, such as, for example, exposure to UV light (sun test) or exposure by the backlighting of an LCD. The use of stabilisers of this type increases the voltage holding ratio after exposure to light.

The invention thus relates to a liquid-crystalline medium which comprises at least one compound of the formula I and one or more compounds of the formula ST. These media are particularly well suitable in order to achieve liquid crystal displays that do not show display defects such as image sticking or drop mura or at least do so to a much reduced extent sufficient for applications.

The mixtures according to the invention preferably exhibit very broad nematic phase ranges with clearing points ≥ 70°C, preferably ≥ 75°C, in particular ≥ 80°C, very favourable values of the capacitive threshold, relatively high values of the holding ratio and at the same time very good low-temperature stabilities at -20°C and -30°C, as well as very low rotational viscosity values and short response times. The mixtures according to the invention are furthermore distinguished by the fact that, in addition to the improvement in the rotational viscosity γ₁, relatively high values of the elastic constants K₃₃ for improving the response times can be observed. The use of the compounds of the formula I in LC mixtures, preferably having negative dielectric anisotropy, the ratio of rotational viscosity γ₁ and elastic constants Kᵢ is reduced.

Some preferred embodiments of the mixtures according to the invention are indicated below.

In the compounds of the formula I, R¹ and R^{1*} preferably each, independently of one another, denote straight-chain alkoxy, in particular OCH₃, n-C₂H₅O, n-OC₃H₇, n-OC₄H₉, n-OC₅H₁₁, n-OC₆H₁₃, furthermore alkenyl, in particular CH=CH₂, CH₂CH=CH₂, *trans*-CH₂CH=CHCH₃, *trans-*CH₂CH=CHC₂H₅, branched alkoxy, in particular OC₃H₆CH(CH₃)₂, and alkenyloxy, in particular OCH=CH₂, OCH₂CH=CH₂, *trans*-OCH₂CH=CHCH₃, *trans*-OCH₂CH=CHC₂H₅.

R¹ and R^{1*} particularly preferably each, independently of one another, denote straight-chain alkoxy having 1-6 C atoms, in particular methoxy, ethoxy, propoxy, butoxy, pentoxy, hexoxy.

L¹ and L² in formula I preferably both denote F.

Examples of the group G in formula ST are methylene, ethylene or polymethylene having up to 20 carbon atoms; or the alkylene radical is interrupted by one or two hetero atoms, such as the bivalent radicals -CH₂OCH₂-, -CH₂CH₂OCH₂CH₂-, -CH₂CH₂OCH₂CH₂OCH₂CH₂-, -CH₂C(O)OCH₂CH₂O(O)CCH₂-, -CH₂CH₂C(O)OCH₂CH₂O(O)CCH₂CH₂-, -CH₂CH₂-C(O)O(CH₂)₄O(O)C-CH₂CH₂-, - CH₂CH₂O(O)C(CH₂)₄C(O)OCH₂CH₂- and -CH₂CH₂O(O)C(CH₂)₈C(O)OCH₂CH₂-.
G can also be arylene-bis-alkylene, e.g. p-xylylene, benzene-1,3-bis(ethylene), biphenyl-4,4' -bis(methylene) or naphthalene-1,4-bis(methylene).
It can, finally, be alkenylene or alkynylene having 4 to 8 carbon atoms, such as 2-butenylene-1,4, 2-butynylene-1,4 or 2,4-hexadiynylene-1,6.

Preferably, the compounds of formula ST are selected from the compounds of the formula ST-1 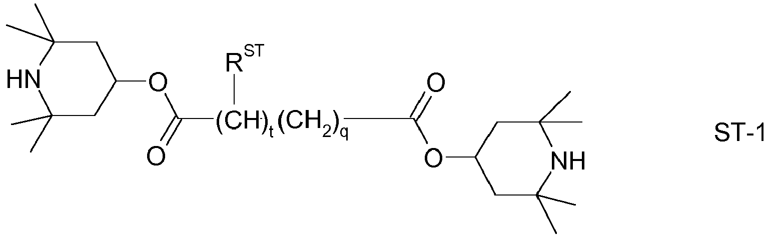 wherein
- R^{ST}: denotes H or alkyl having 1 to 6 C atoms, preferably H or ethyl;
- t: is 0 or 1, and
- q: is 0, 1, 2, 3, 4, 5, 6, 7, 8, or 9.

Particularly preferably, the compounds of formula ST-1 are selected from the compounds of the formula ST-1 a and ST-1b 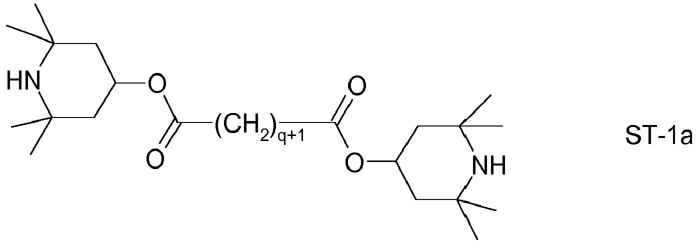 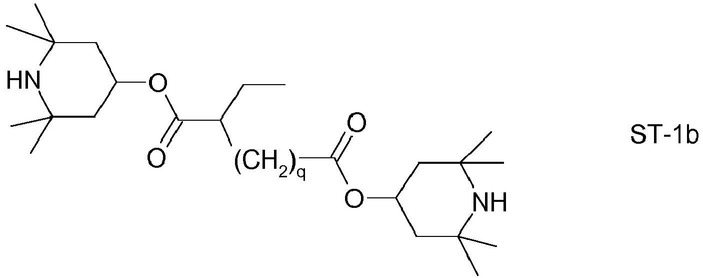 wherein q is 0, 1, 2, 3, 4, 5, 6, 7, 8, or 9, preferably 6, 7 or 8, particularly preferably 7.

Preferred compounds of the formula I are the compounds of the formulae I-1 to I-10, 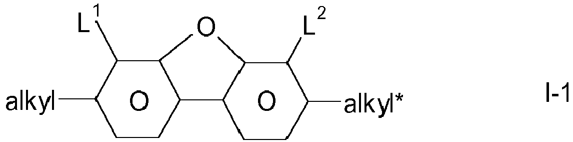 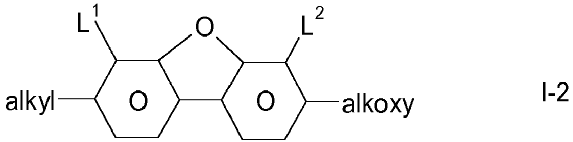 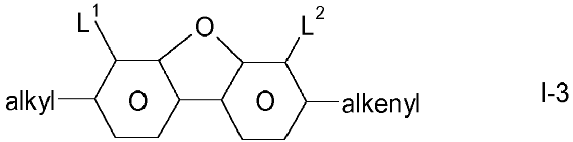 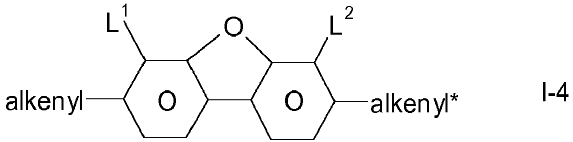 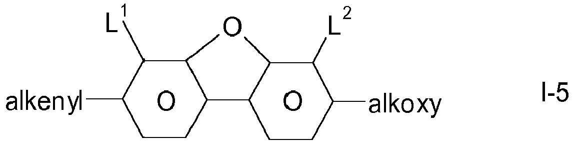 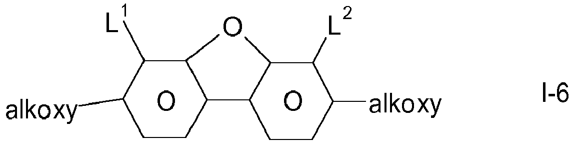 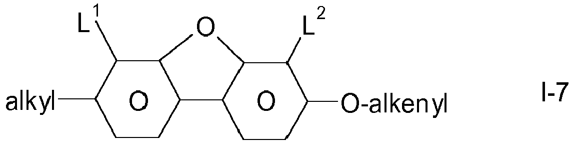 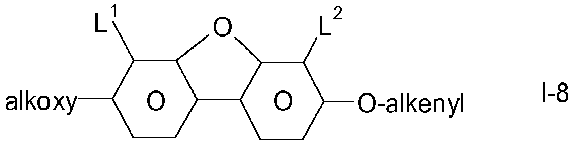 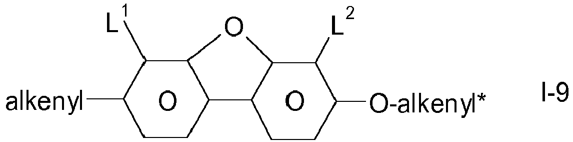 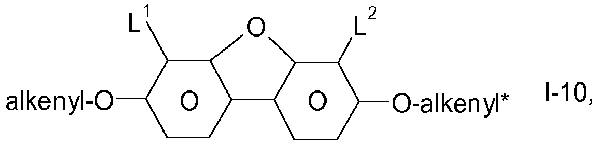 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹ and L² each, independently of one another, denote F or Cl.

In the compounds of the formulae I-1 to I-10, L¹ and L² preferably each, independently of one another, denote F or Cl, in particular L¹ = L² = F. Particular preference is given to the compounds of the formulae I-2 and I-6. In the compounds of the formulae I-2 and I-6, preferably L¹ = L² = F.

The mixture according to the invention very particularly preferably comprises at least one compound selected from the group of the compounds of the formulae I-1A, I-2A, I-4A, I-6A, and I-6B shown below:

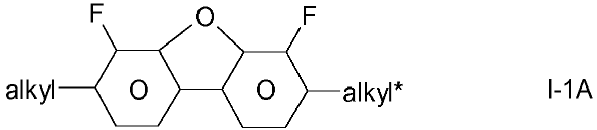

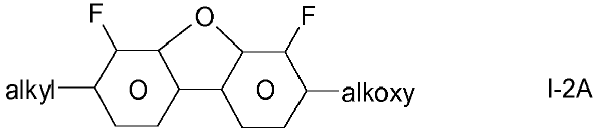

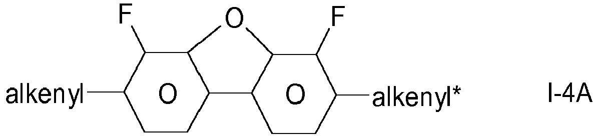

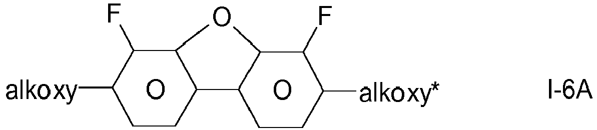

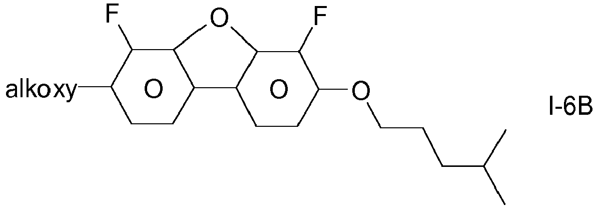

Very particularly preferred mixtures comprise at least one compound selected from the group of the compounds of the formulae I-2.1 to I-2.49, and I-6.1 to I-6.28:

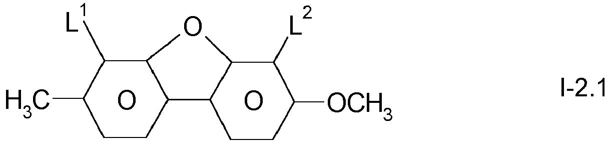

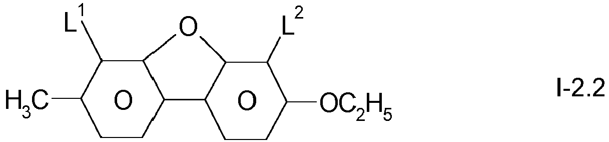

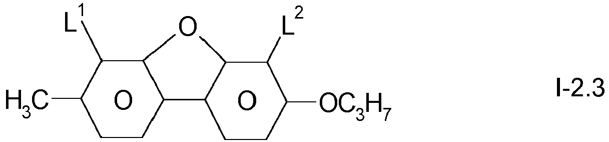

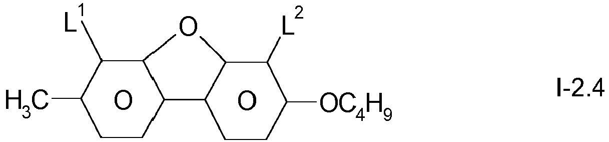

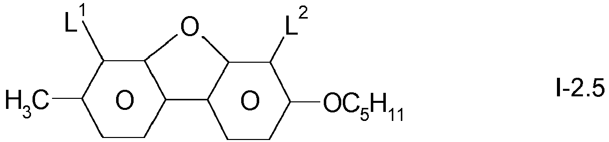

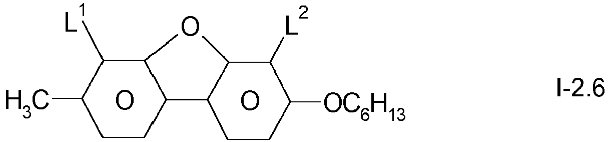

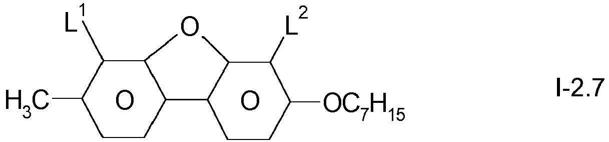

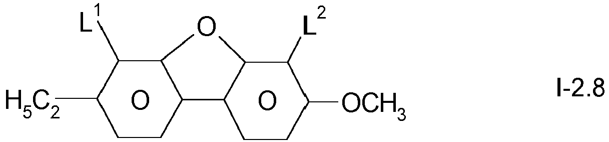

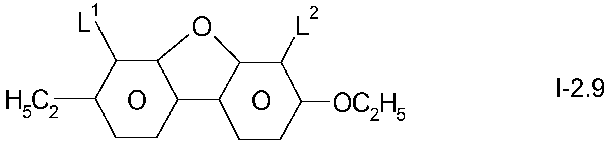

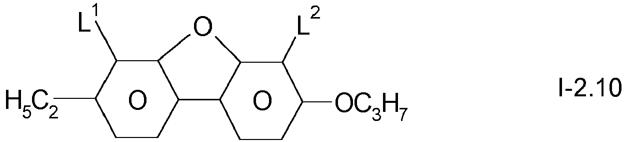

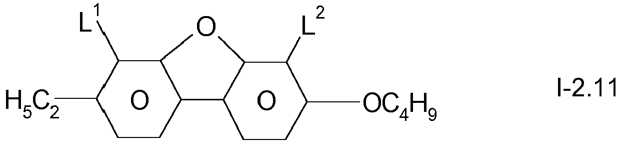

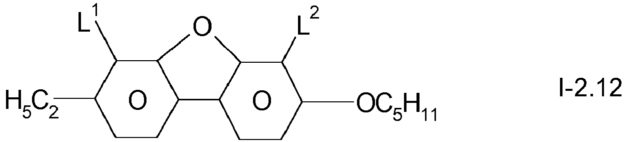

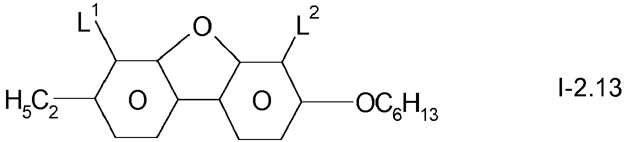

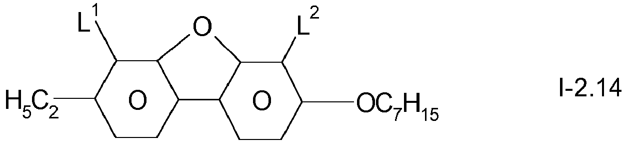

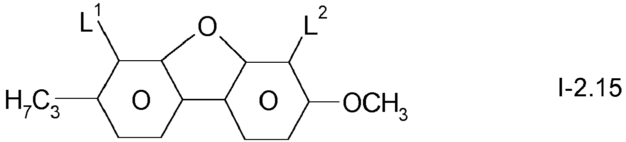

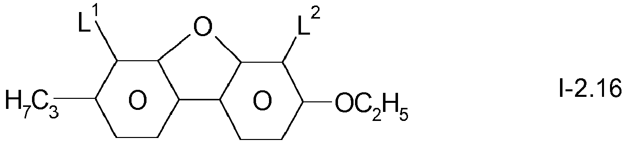

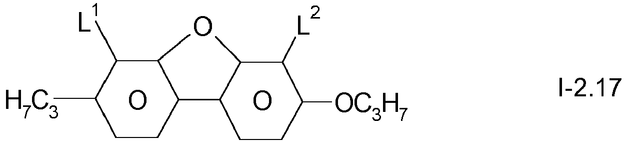

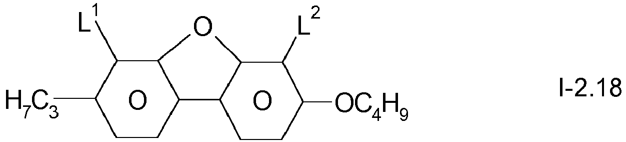

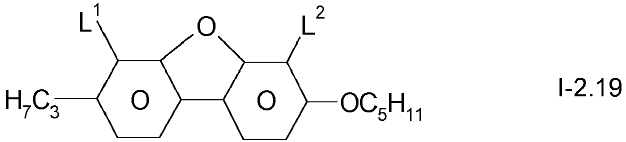

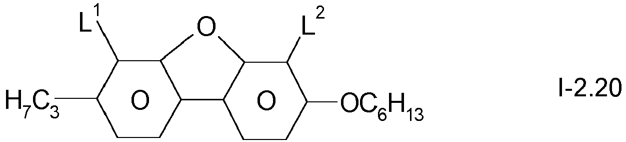

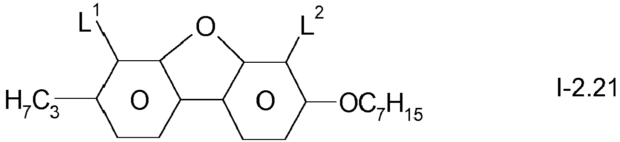

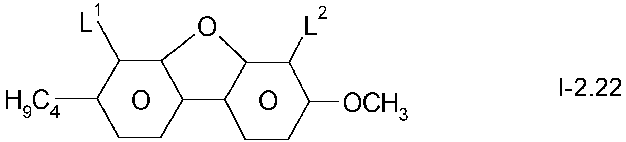

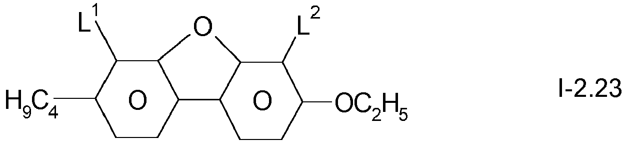

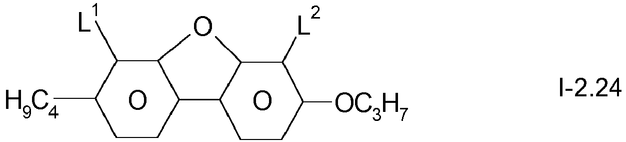

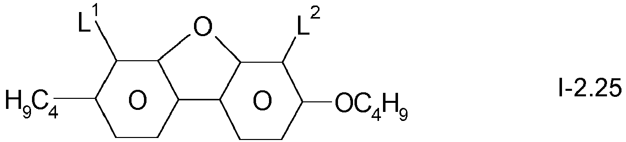

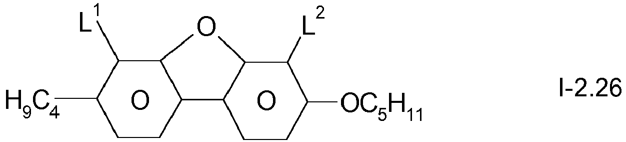

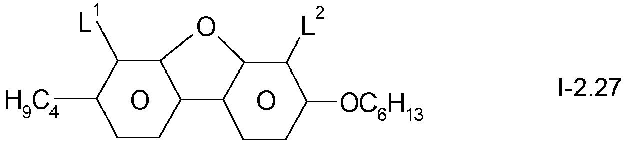

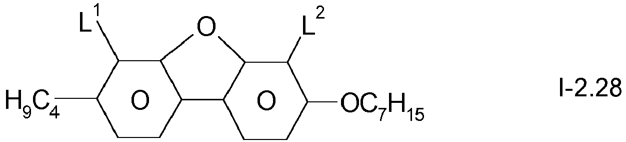

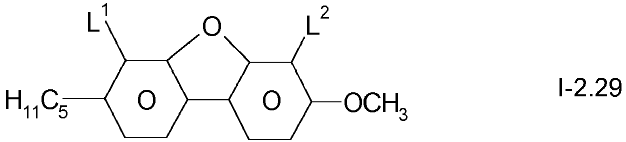

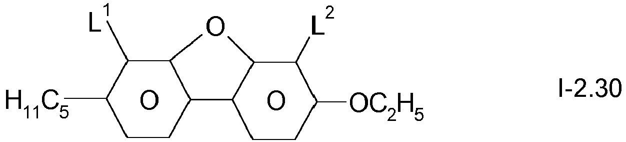

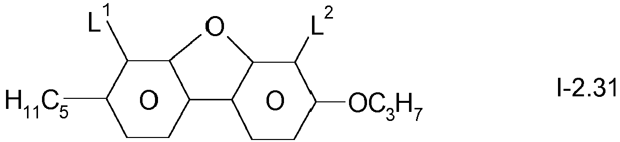

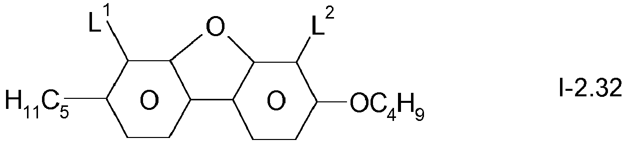

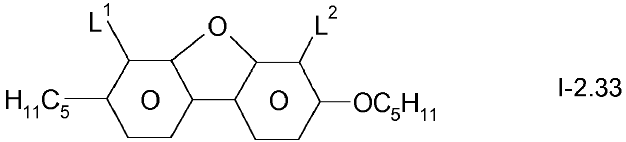

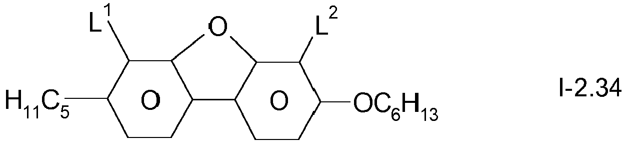

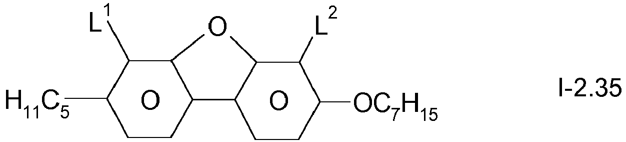

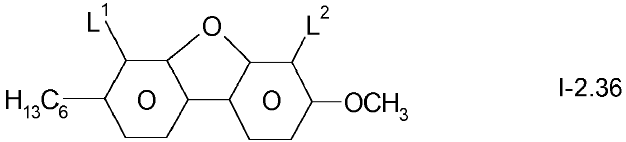

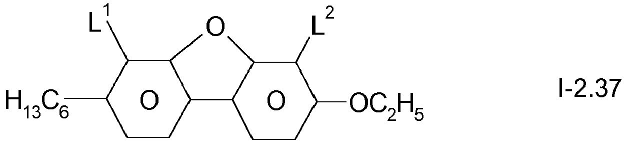

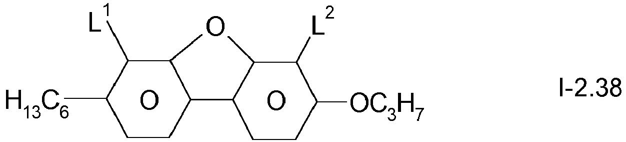

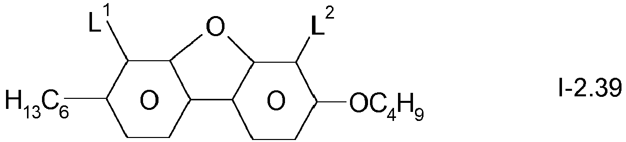

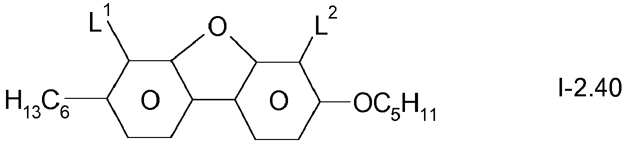

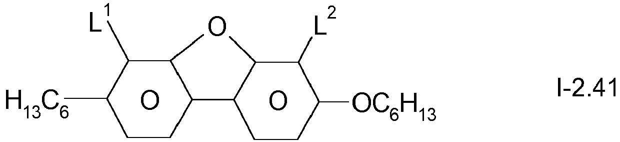

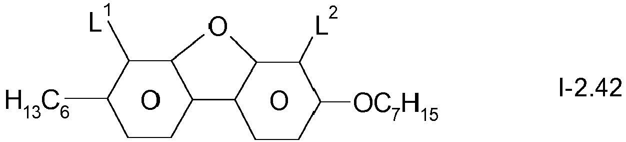

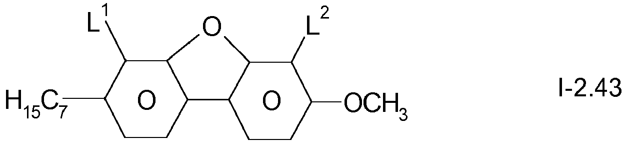

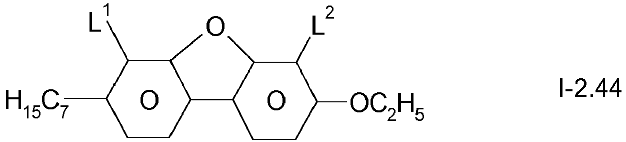

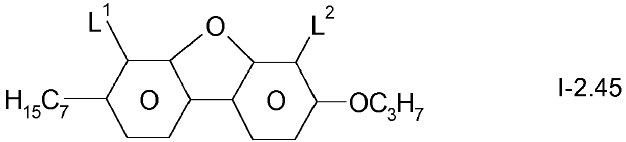

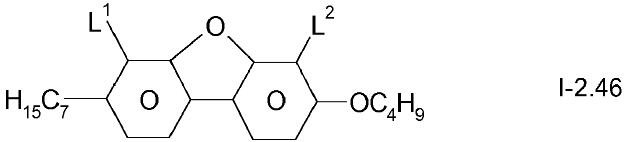

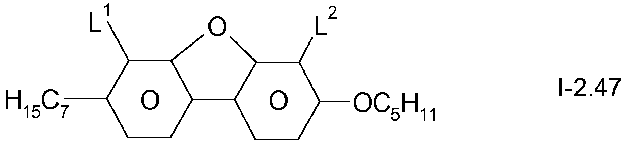

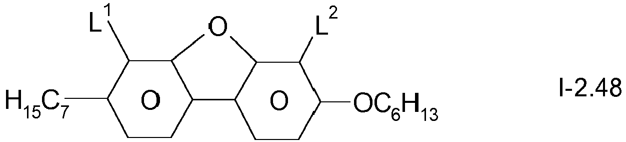

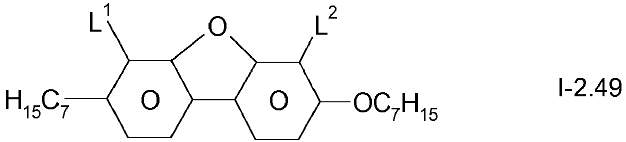

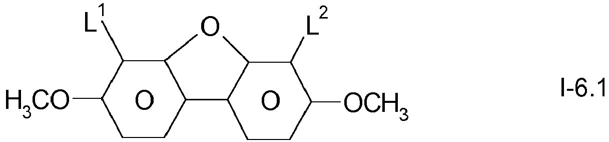

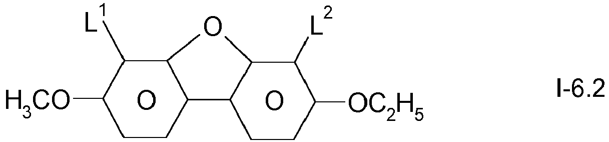

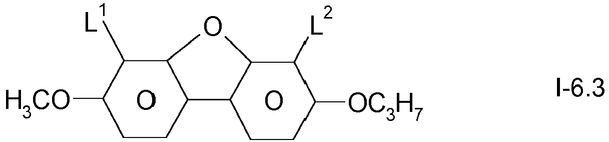

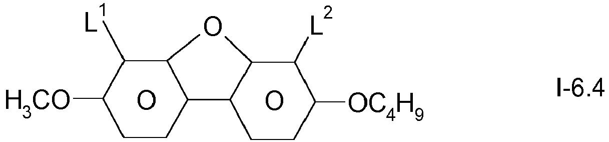

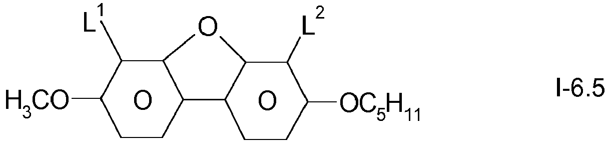

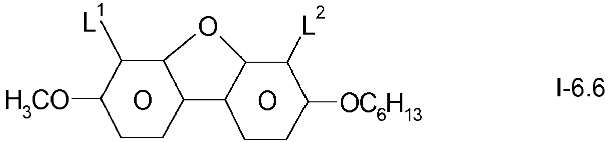

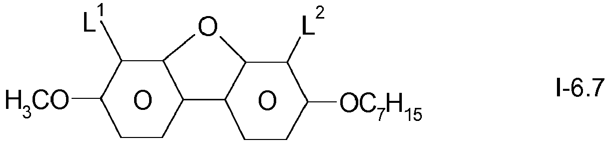

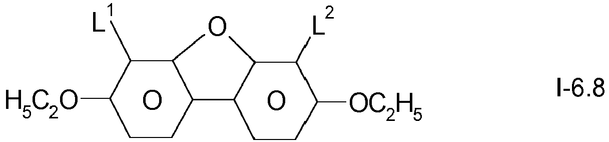

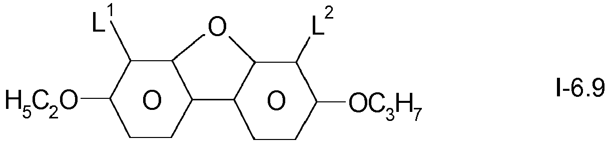

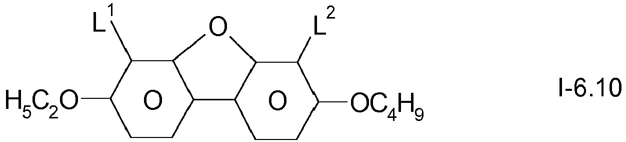

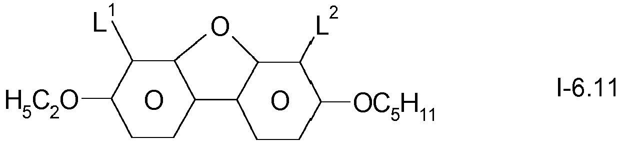

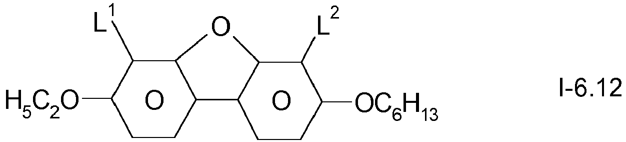

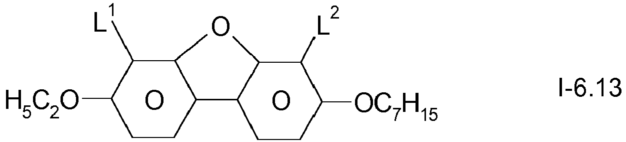

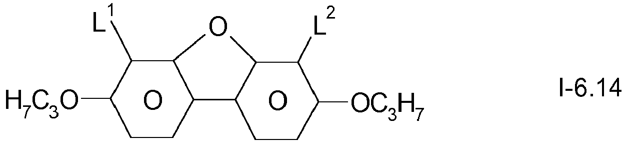

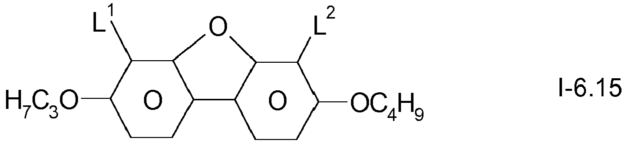

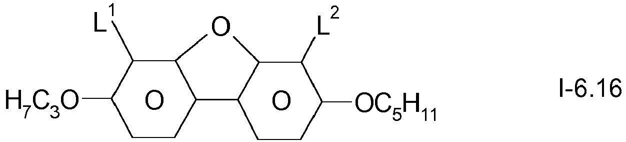

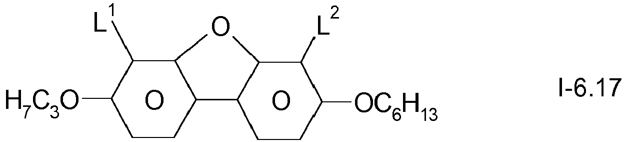

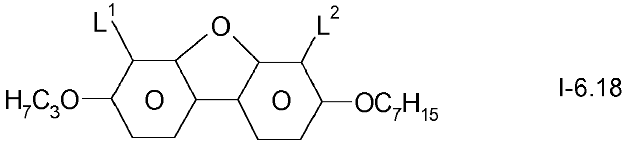

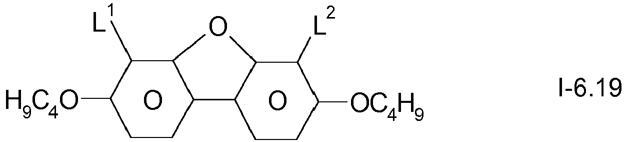

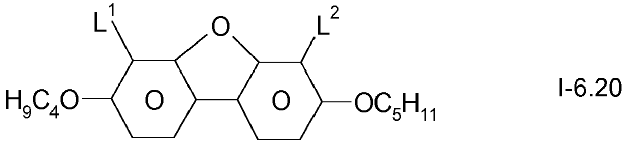

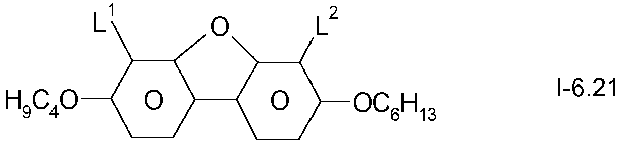

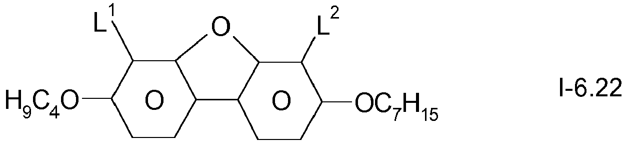

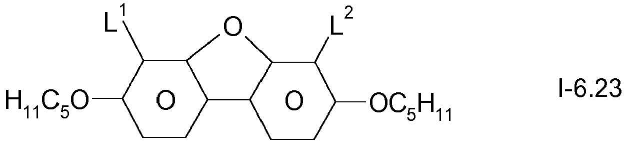

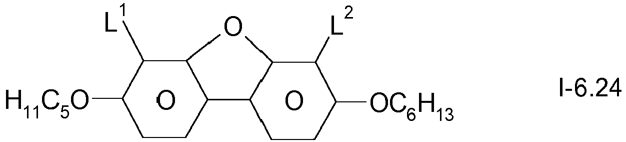

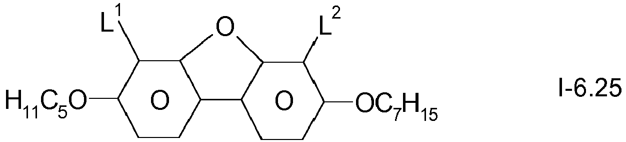

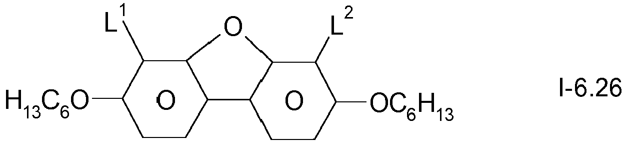

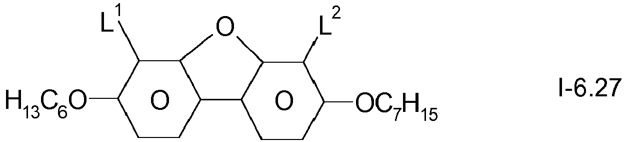

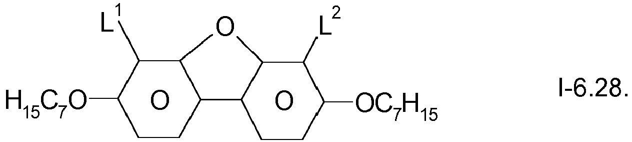

In the compounds of the formulae I-2.1 to I-2.49, and I-6-1 to I-6-28, L¹ and L² preferably both denote fluorine.

Very particularly preferred mixtures comprise at least one of the compounds shown below:

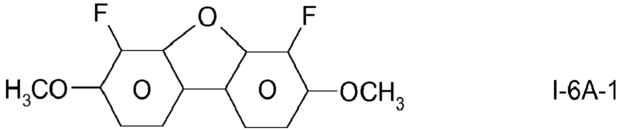

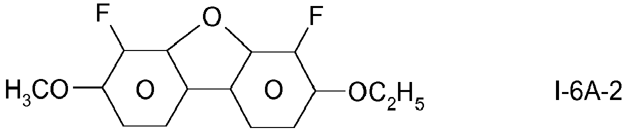

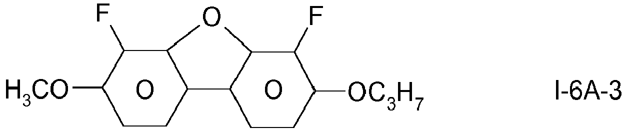

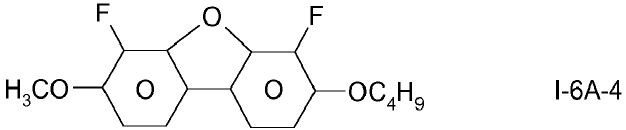

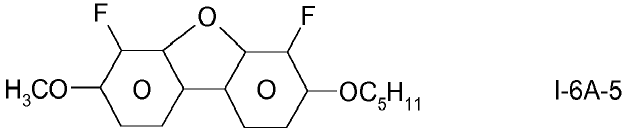

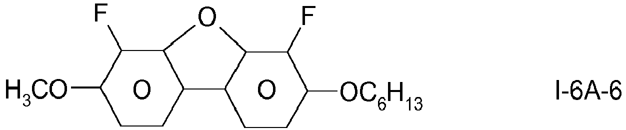

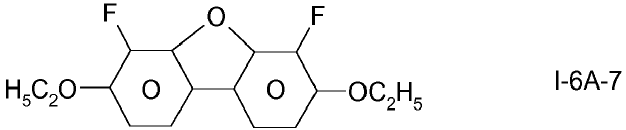

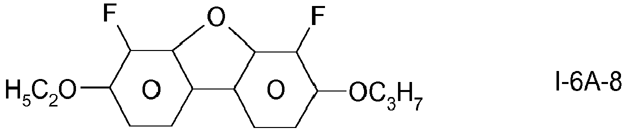

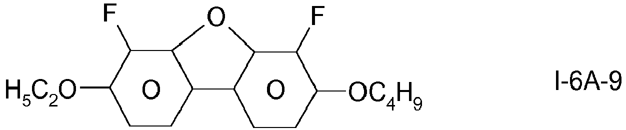

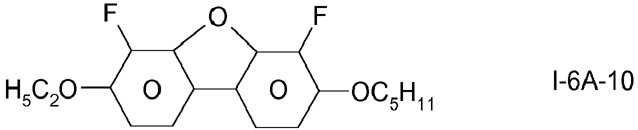

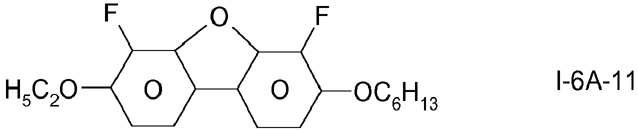

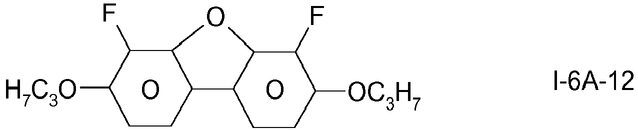

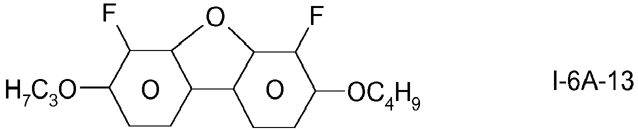

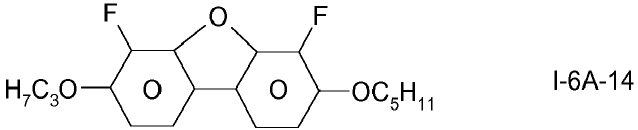

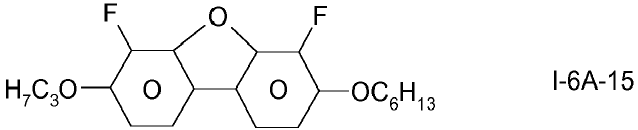

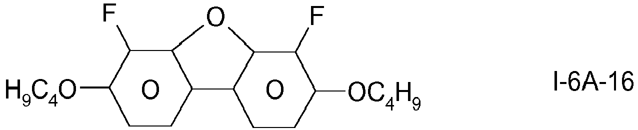

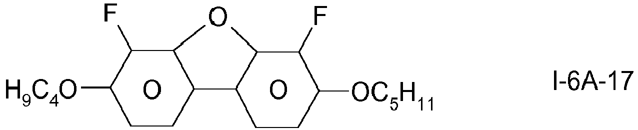

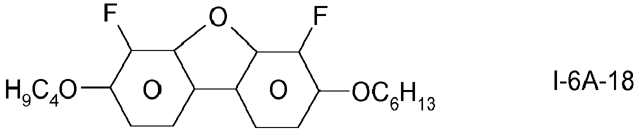

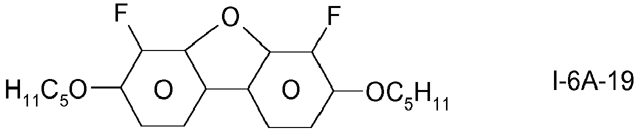

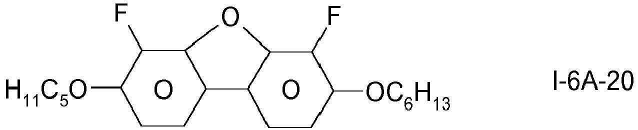

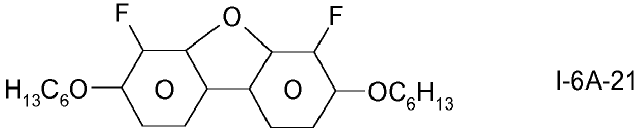

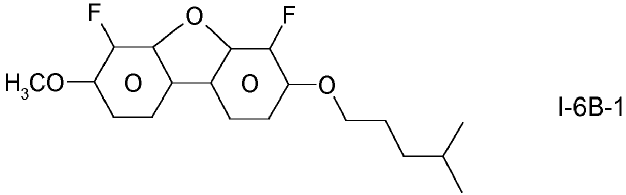

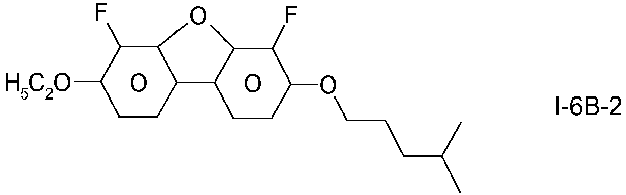

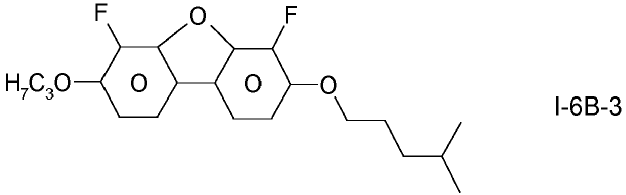

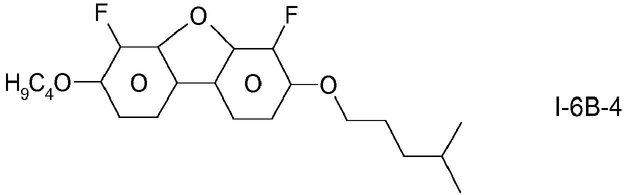

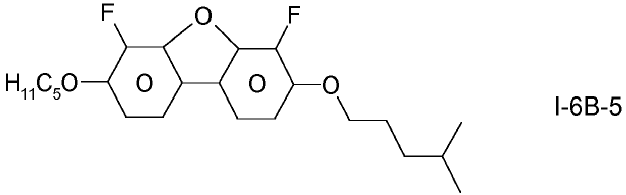

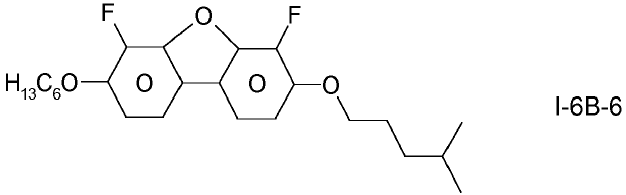

The compounds of the formula I can be prepared, for example, as described in US 2005/0258399 or WO 02/055463 A1.

The media according to the invention preferably comprise one, two, three, four or more, preferably one, two or three, compounds of the formula I.

The compounds of the formula I are preferably employed in the liquid-crystalline medium in amounts of ≥ 1 %, preferably ≥ 3% by weight, based on the mixture as a whole. Particular preference is given to liquid-crystalline media which comprise 1 - 40% by weight, very particularly preferably 2 - 30% by weight, of one or more compounds of the formula I.

Of the compounds of the formula ST, special preference is given to the compounds of the formulae

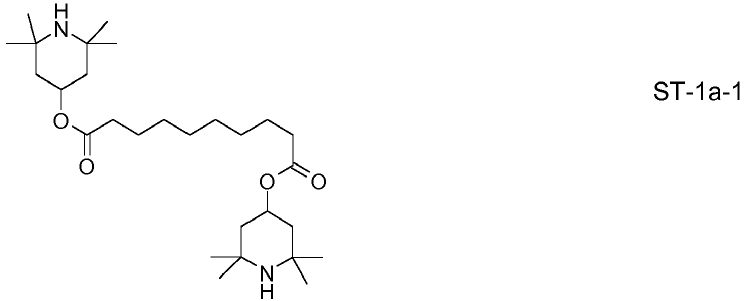

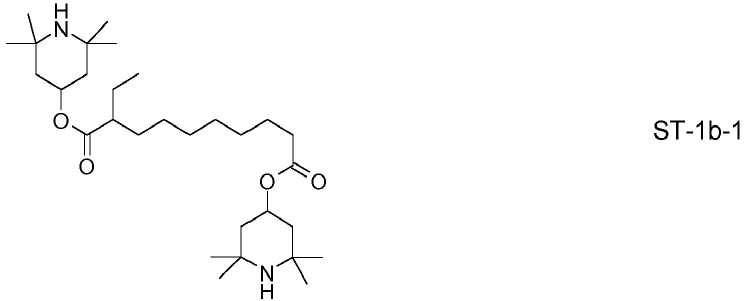

The compounds of the formula ST are preferably each present in the liquid-crystal mixtures according to the invention in amounts of 0.005 to 0.5%, based on the mixture.

If the mixtures according to the invention comprise two or more compounds of the formulae ST, the concentration correspondingly increases to 0.01 to 1% in the case of two compounds, based on the mixtures.

However, the total proportion of the compounds of the formulae ST, based on the mixture according to the invention, preferably is 2% or less.

Preferred embodiments of the liquid-crystalline medium according to the invention are indicated below:
a) Liquid-crystalline medium which additionally comprises one or more compounds selected from the group of the compounds of the formulae IIA, IIB and IIC, 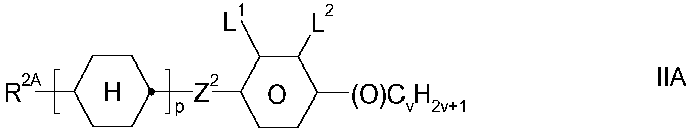 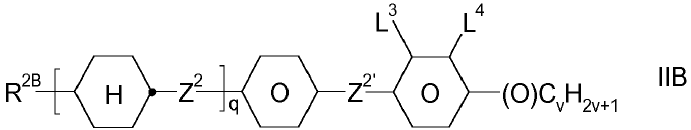 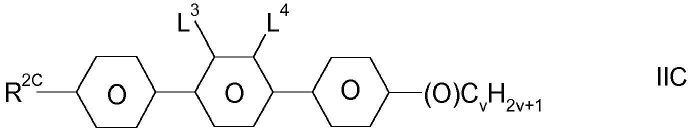 in which
   - R^{2A}, R^{2B} and R^{2C}: 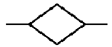 each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, -C≡C-, -CF₂O-, -OCF₂-, -OC-O- or -O-CO- in such a way that O atoms are not linked directly to one another,
   - L¹⁻⁴: each, independently of one another, denote F, Cl, CF₃ or CHF₂,
   - Z² and Z^{2'}: each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: denotes 0, 1 or 2,
   - q: denotes 0 or 1, and
   - v: denotes 1 to 6.

In the compounds of the formulae IIA and IIB, Z² may have identical or different meanings. In the compounds of the formula IIB, Z² and Z^{2'} may have identical or different meanings.

In the compounds of the formulae IIA, IIB and IIC, R^{2A}, R^{2B} and R^{2C} each preferably denote alkyl having 1-6 C atoms, in particular CH₃, C₂H₅, n-C₃H₇, n-C₄H₉, n-C₅H₁₁.

In the compounds of the formulae IIA and IIB, L¹, L², L³ and L⁴ preferably denote L¹ = L² = F and L³ = L⁴ = F, furthermore L¹ = F and L² = Cl, L¹ = Cl and L² = F, L³ = F and L⁴ = Cl, L³ = Cl and L⁴ = F. Z² and Z²' in the formulae IIA and IIB preferably each, independently of one another, denote a single bond, furthermore a -C₂H₄- bridge.

If, in the formula IIB, Z² = -C₂H₄- or -CH₂O-, Z^{2'} is preferably a single bond or, if Z^{2'} = -C₂H₄- or -CH₂O-, Z² is preferably a single bond. In the compounds of the formulae IIA and IIB, (O)CᵥH₂ᵥ₊₁ preferably denotes OCᵥH₂ᵥ₊₁, furthermore CᵥH₂ᵥ₊₁. In the compounds of the formula IIC, (O)CᵥH₂ᵥ₊₁ preferably denotes CᵥH₂ᵥ₊₁. In the compounds of the formula IIC, L³ and L⁴ preferably each denote F.

Preferred compounds of the formulae IIA, IIB and IIC are indicated below: 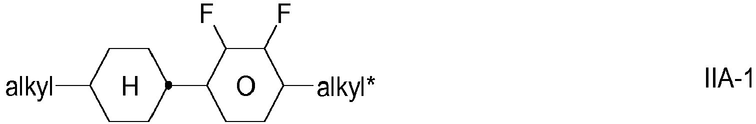 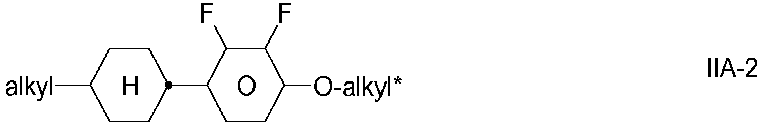 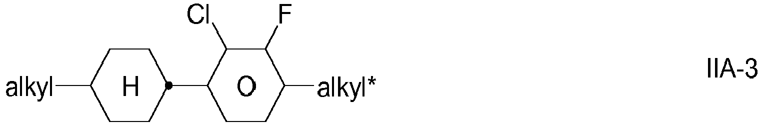 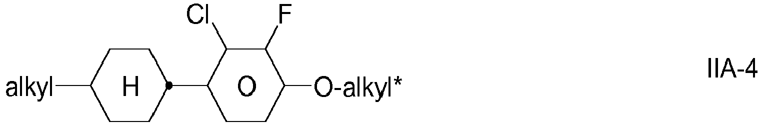 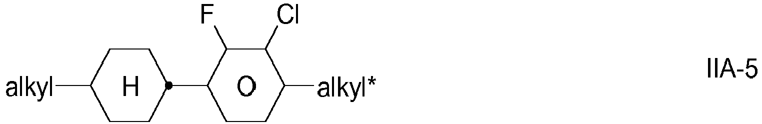 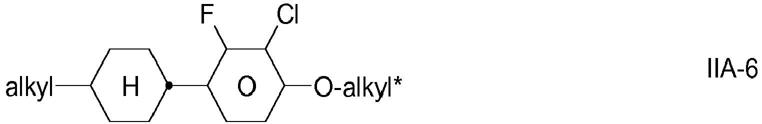 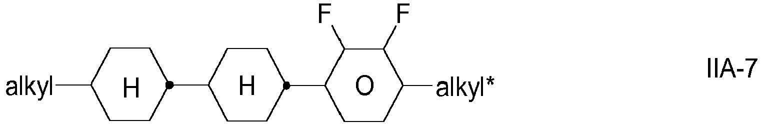 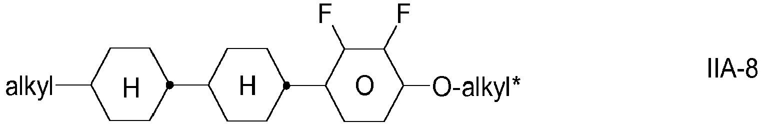 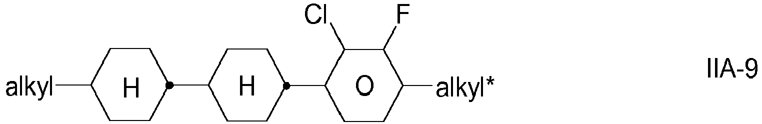 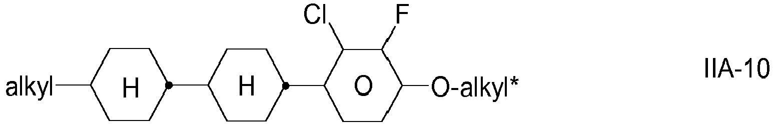 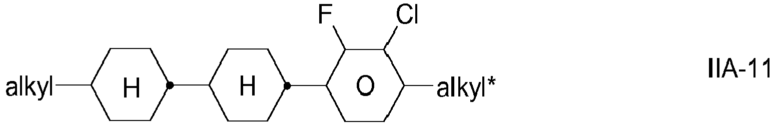 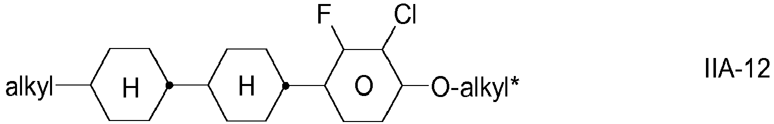 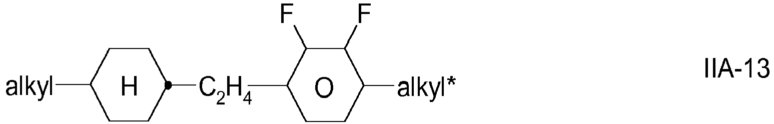 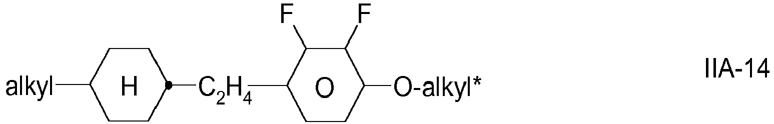 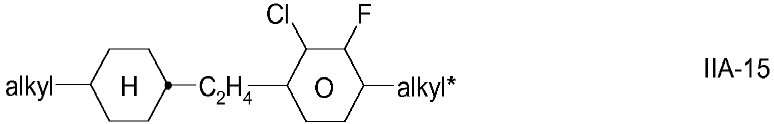 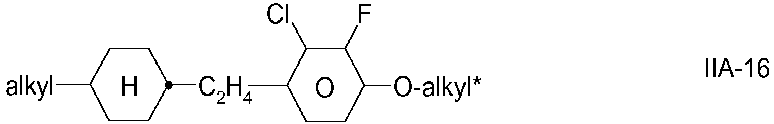 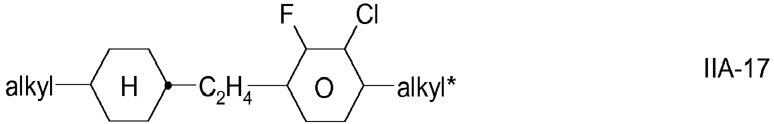 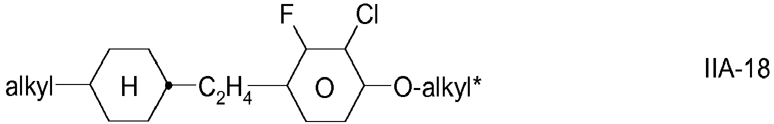 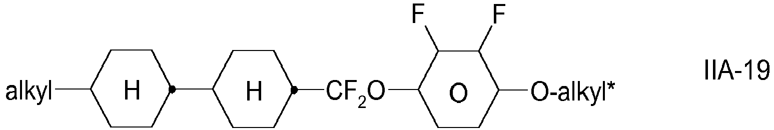 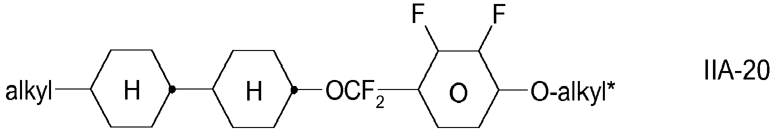 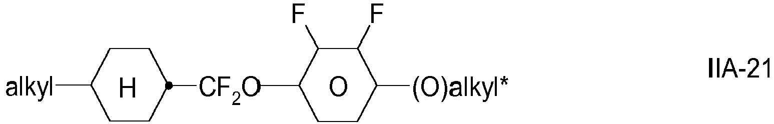 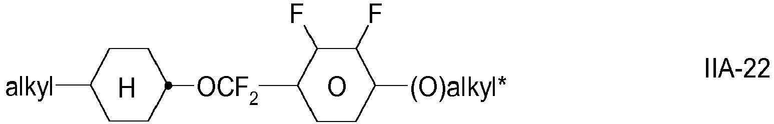 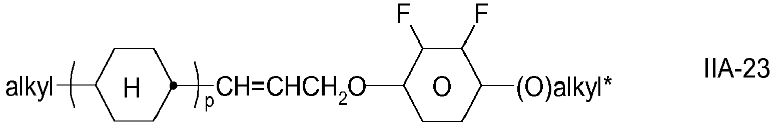 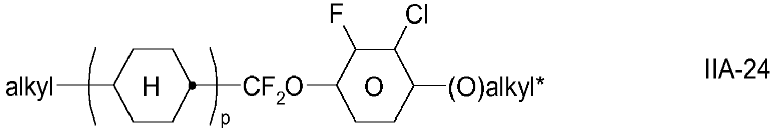 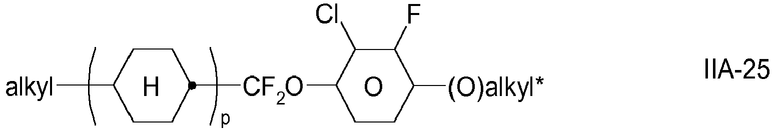 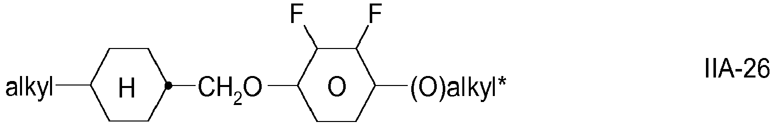 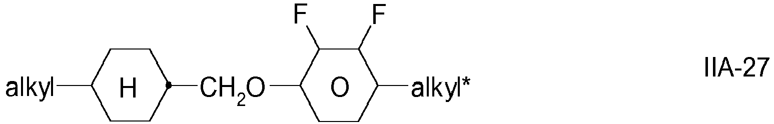 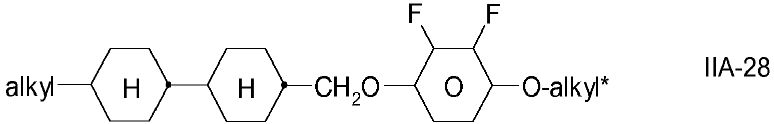 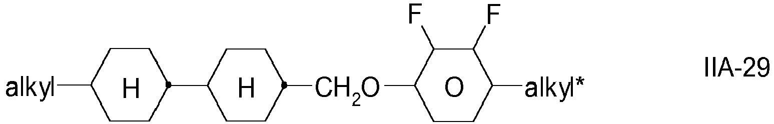 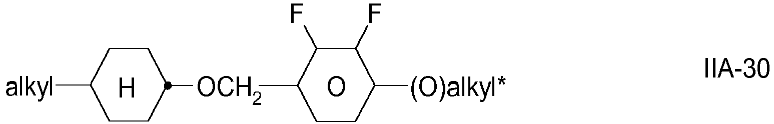 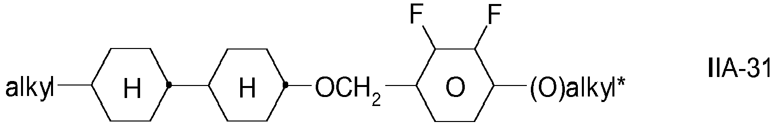 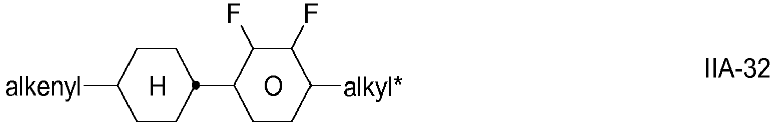 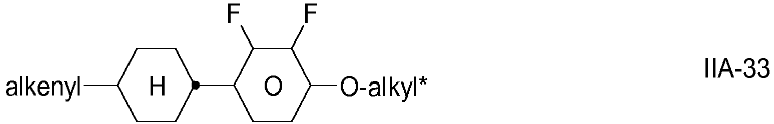 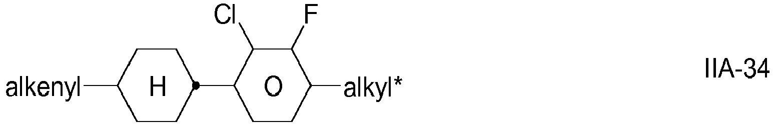 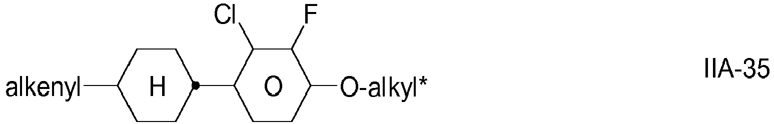 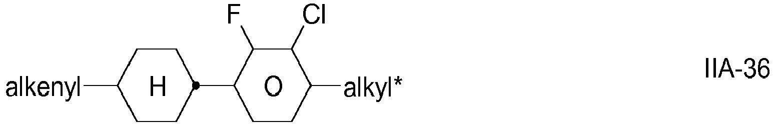 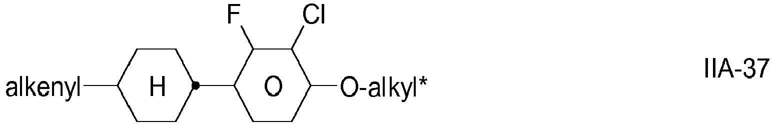 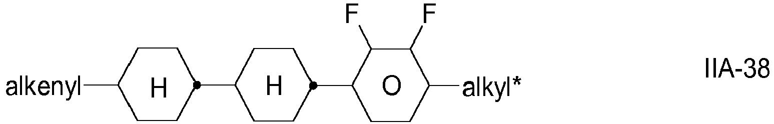 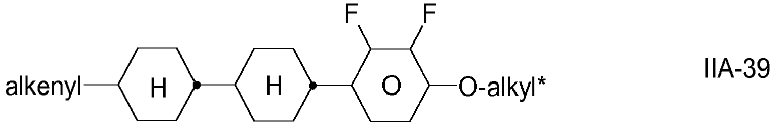 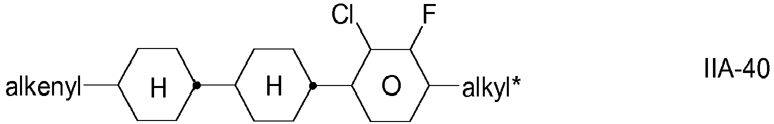 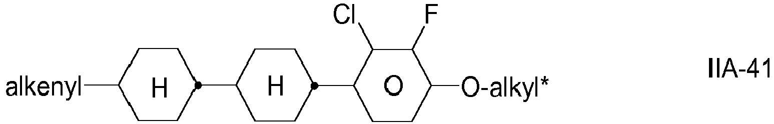 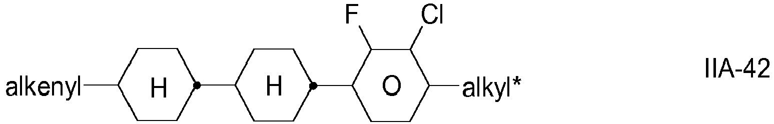 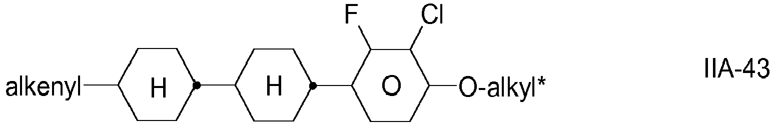 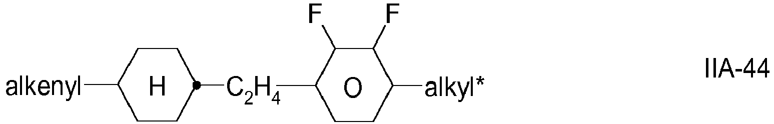 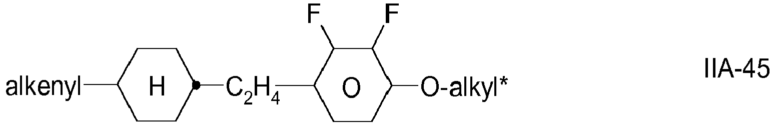 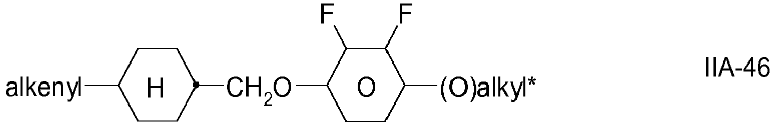 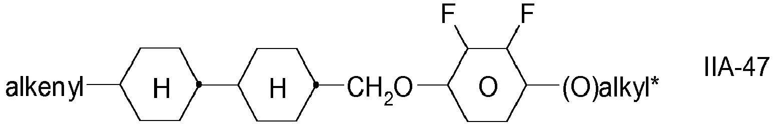 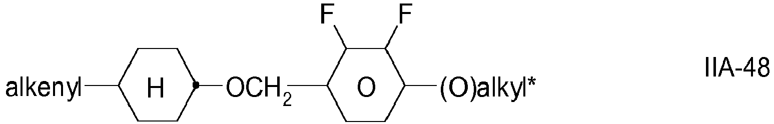 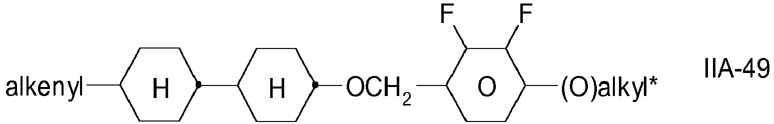 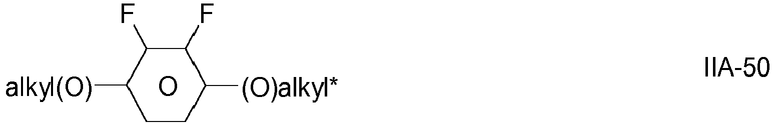 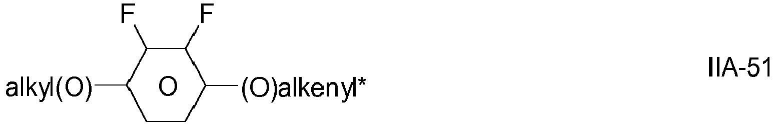 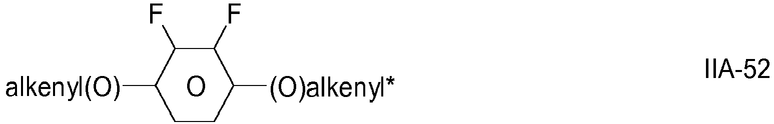 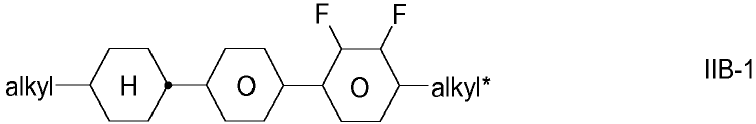 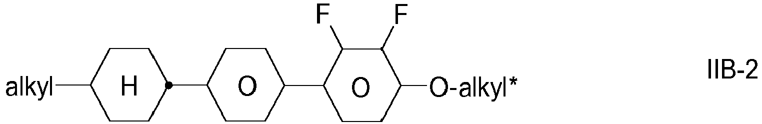 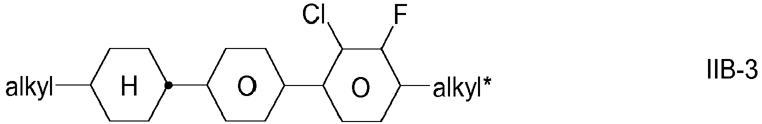 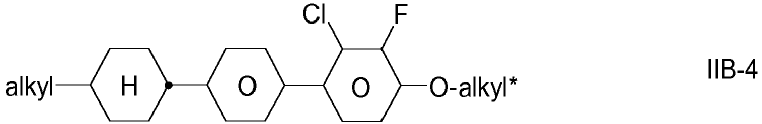 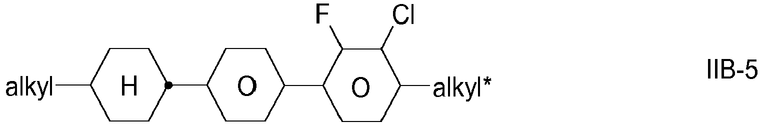 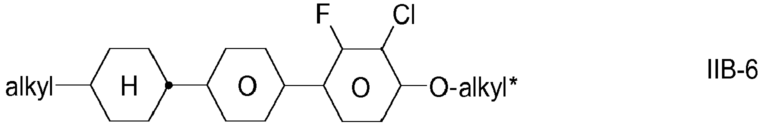 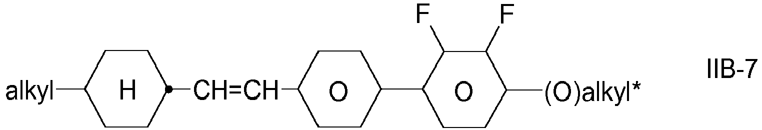 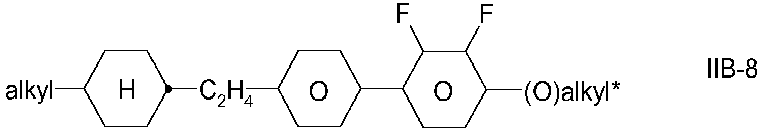 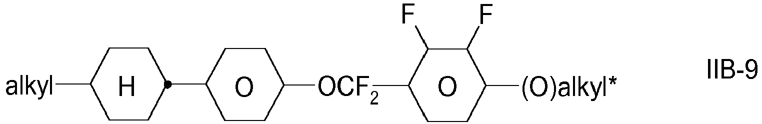 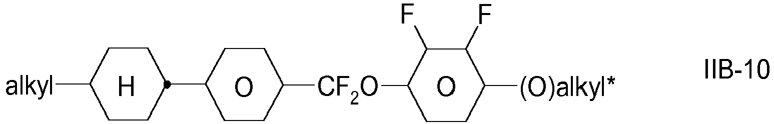 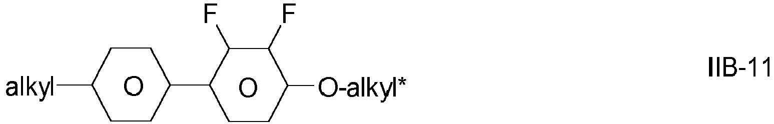 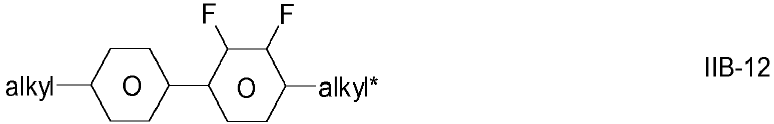 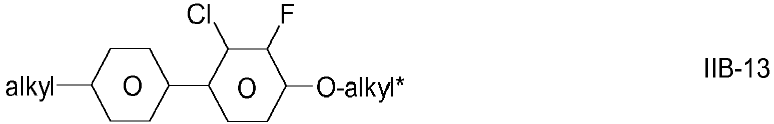 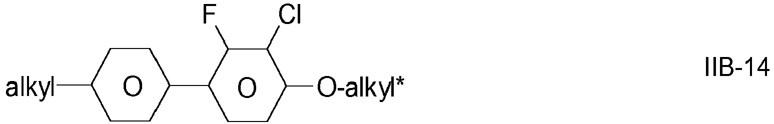 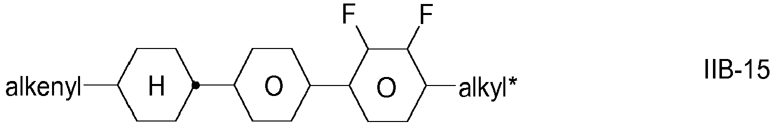 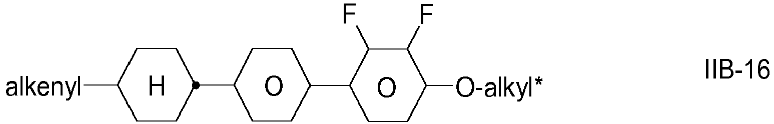 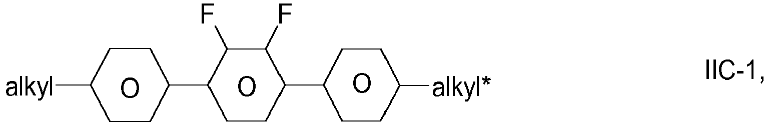 in which
- alkyl and alkyl*: each, independently of one another, denote a straight-chain alkyl radical having 1-6 C atoms, and
- alkenyl and alkenyl*: each, independently of one another, denote a straight-chain alkenyl radical having 2-6 C atoms.

Particularly preferred mixtures according to the invention comprise one or more compounds of the formulae IIA-2, IIA-8, IIA-14, IIA-26, II-28, IIA-33, IIA-39, IIA-45, IIA-46, IIA-47, IIA-50, IIB-2, IIB-11, IIB-16 and IIC-1.

The proportion of compounds of the formulae IIA and/or IIB in the mixture as a whole is preferably at least 20% by weight.

Particularly preferred media according to the invention comprise at least one compound of the formula IIC-1, 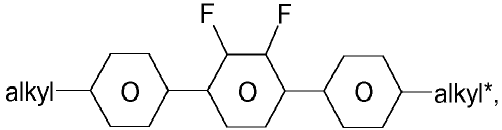 in which alkyl and alkyl* have the meanings indicated above, preferably in amounts of > 3% by weight, in particular > 5% by weight and particularly preferably 5-25% by weight.
b) Liquid-crystalline medium which additionally comprises one or more compounds of the formula III, 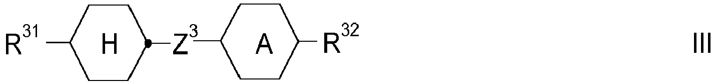 in which
   - R³¹ and R³²: each, independently of one another, denote a straight-chain alkyl, alkoxy, alkenyl, alkoxyalkyl or alkoxy radical having up to 12 C atoms, and 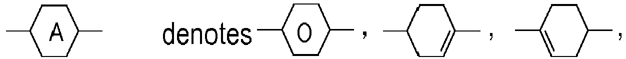 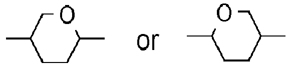
   - Z³: denotes a single bond, -CH₂CH₂-, -CH=CH-, -CF₂O-, -OCF₂-, -CH₂O-, -OCH₂-, -COO-, -OCO-, -C₂F₄-, -C₄H₈-, -CF=CF-.

Preferred compounds of the formula III are indicated below: 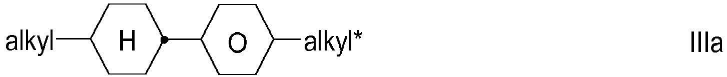 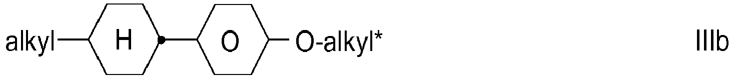 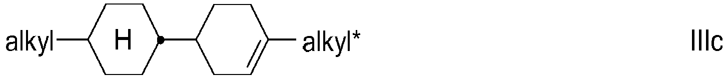 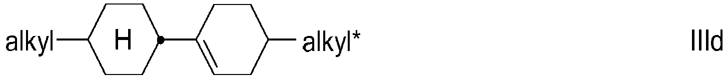 in which
- alkyl and alkyl*: each, independently of one another, denote a straight-chain alkyl radical having 1-6 C atoms.

The medium according to the invention preferably comprises at least one compound of the formula IIIa and/or formula IIIb.
The proportion of compounds of the formula III in the mixture as a whole is preferably at least 5% by weight
c) Liquid-crystalline medium additionally comprising a compound of the formula 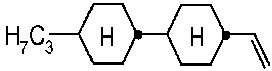 and / or 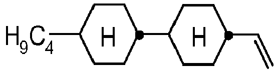 and / or 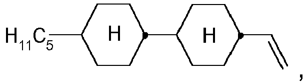 preferably in total amounts of ≥ 5% by weight, in particular ≥ 10% by weight.

Preference is furthermore given to mixtures according to the invention comprising the compound (acronym: CC-3-V1) 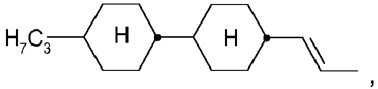 preferably in amounts of 2-15% by weight.

Preferred mixtures comprise 5-60% by weight, preferably 10-55% by weight, in particular 20-50% by weight, of the compound of the formula (acronym: CC-3-V)

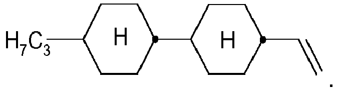

Preference is furthermore given to mixtures which comprise a compound of the formula (acronym: CC-3-V) 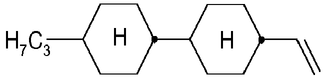 and a compound of the formula (acronym: CC-3-V1) 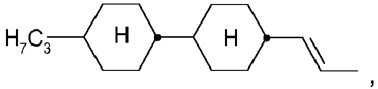 preferably in amounts of 10 - 60% by weight.
d) Liquid-crystalline medium which additionally comprises one or more tetracyclic compounds of the formulae 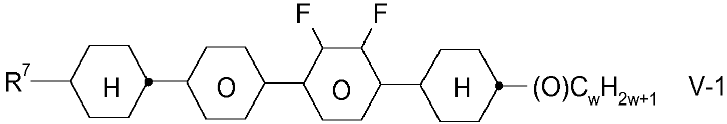 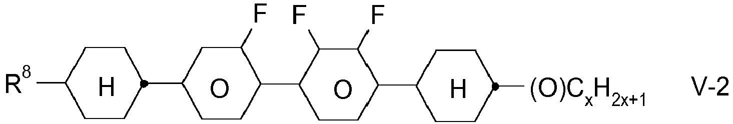 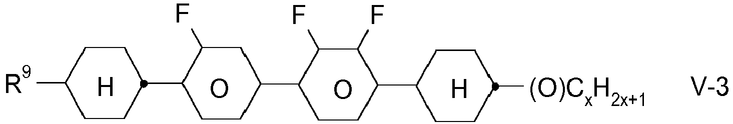 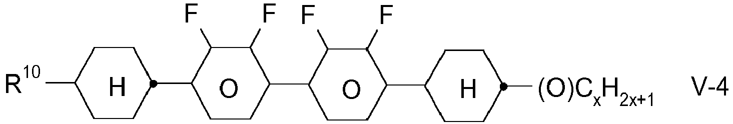 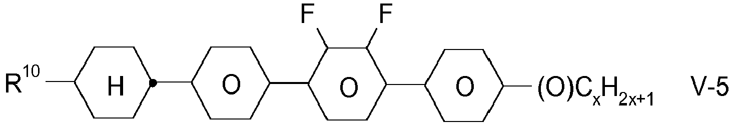 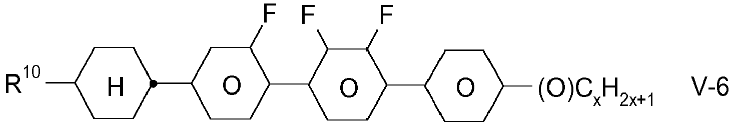 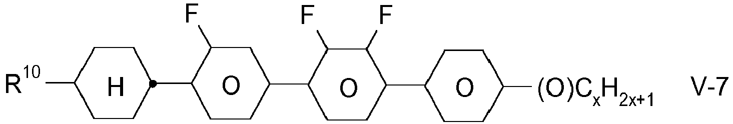 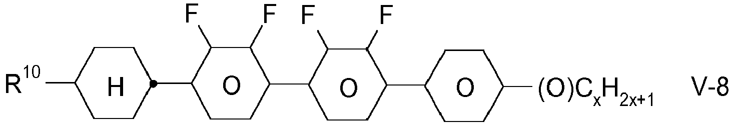 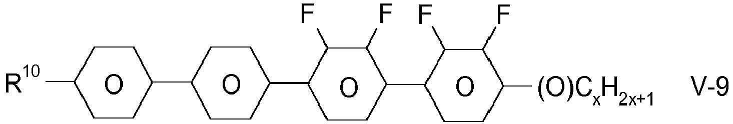 in which
   - R⁷⁻¹⁰: each, independently of one another, have one of the meanings indicated for R^{2A} in Claim 5, and
   - w and x: each, independently of one another, denote 1 to 6.

Particular preference is given to mixtures comprising at least one compound of the formula V-9.
e) Liquid-crystalline medium which additionally comprises one or more compounds of the formulae Y-1 to Y-6, 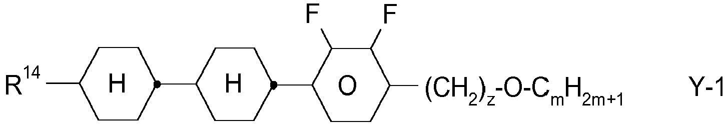 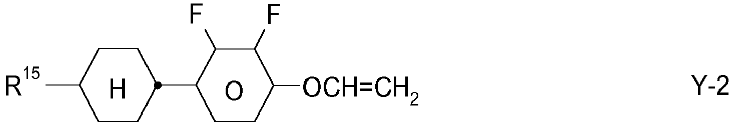 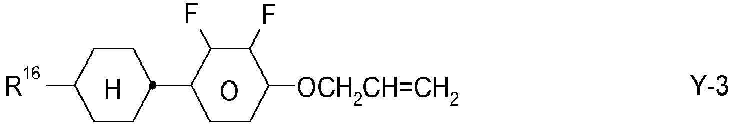 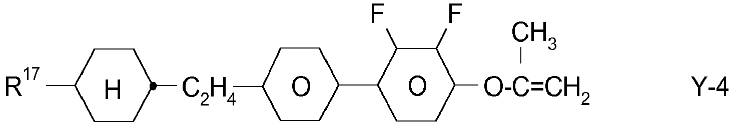 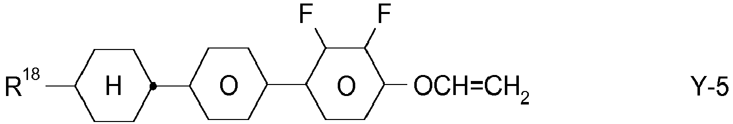 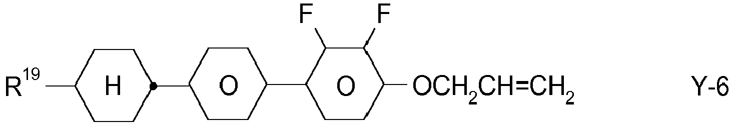 in which R¹⁴-R¹⁹ each, independently of one another, denote an alkyl or alkoxy radical having 1-6 C atoms; z and m each, independently of one another, denote 1-6; x denotes 0, 1, 2 or 3.
   The medium according to the invention particularly preferably comprises one or more compounds of the formulae Y-1 to Y-6, preferably in amounts of ≥ 5% by weight.
f) Liquid-crystalline medium additionally comprising one or more fluorinated terphenyls of the formulae T-1 to T-21, 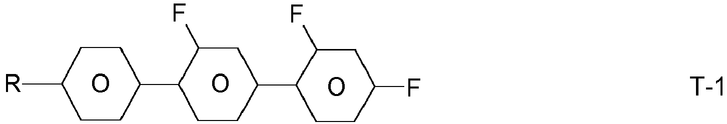 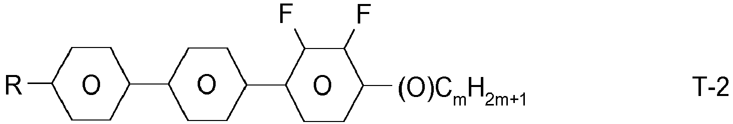 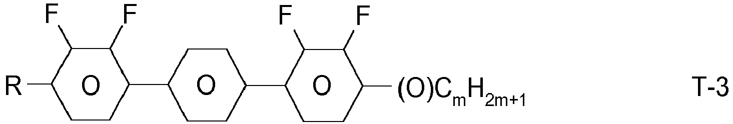 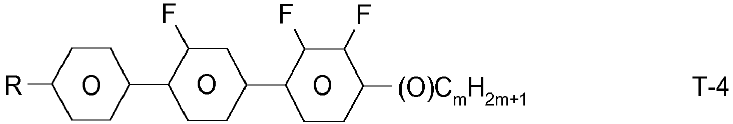 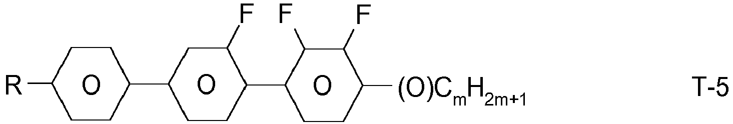 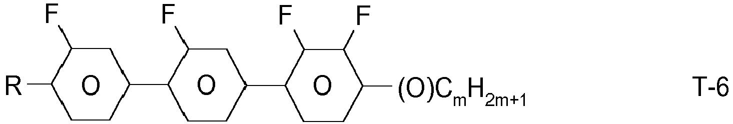 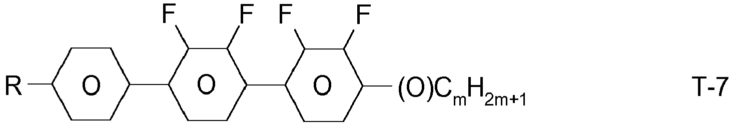 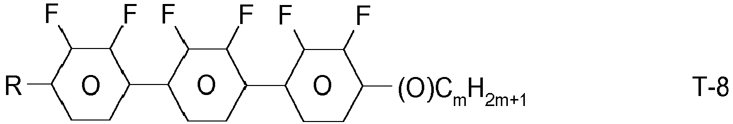 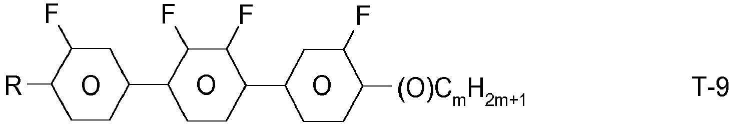 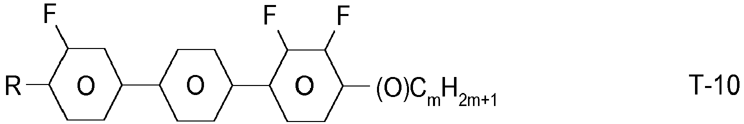 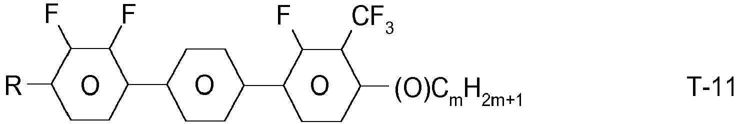 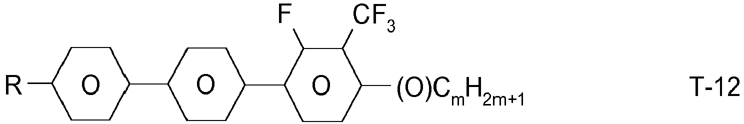 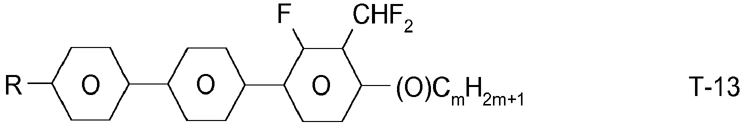 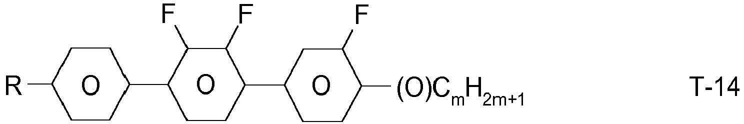 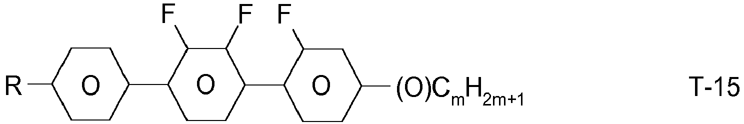 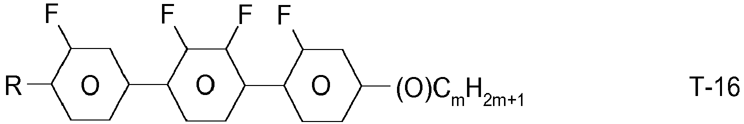 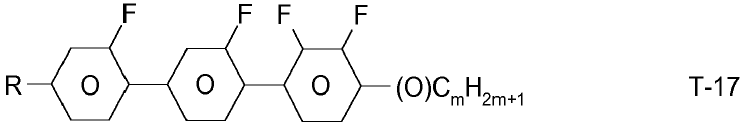 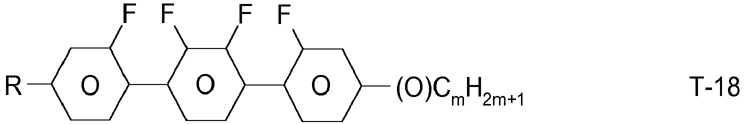 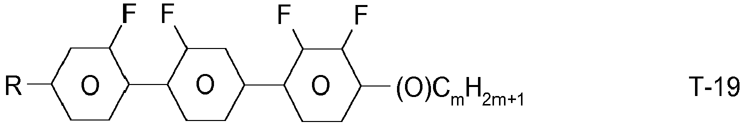 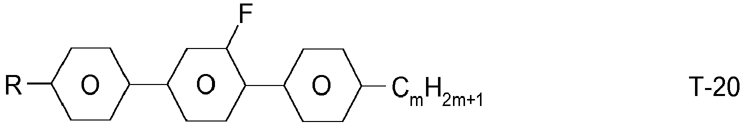 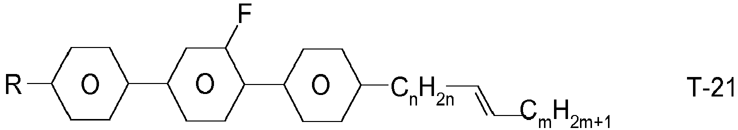 in which
   R denotes a straight-chain alkyl or alkoxy radical having 1-6 C atoms, and m = 0, 1, 2, 3, 4, 5 or 6 and n denotes 0, 1, 2, 3 or 4.
   R preferably denotes methyl, ethyl, propyl, butyl, pentyl, hexyl, methoxy, ethoxy, propoxy, butoxy, pentoxy.

The medium according to the invention preferably comprises the terphenyls of the formulae T-1 to T-21 in amounts of 2-30% by weight, in particular 5-20% by weight.

Particular preference is given to compounds of the formulae T-1, T-2, T-4, T-20 and T-21. In these compounds, R preferably denotes alkyl, furthermore alkoxy, each having 1-5 C atoms. In the compounds of the formula T-20, R preferably denotes alkyl or alkenyl, in particular alkyl. In the compound of the formula T-21, R preferably denotes alkyl.

The terphenyls are preferably employed in the mixtures according to the invention if the Δn value of the mixture is to be ≥ 0.1. Preferred mixtures comprise 2-20% by weight of one or more terphenyl compounds selected from the group of the compounds T-1 to T-21.
g) Liquid-crystalline medium additionally comprising one or more biphenyls of the formulae B-1 to B-3, 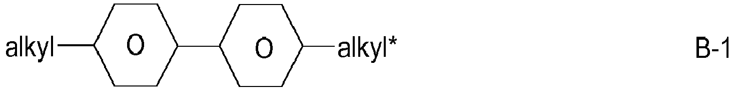 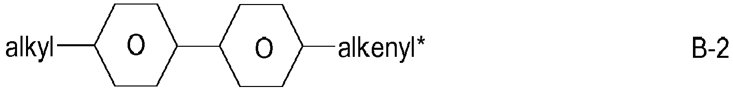 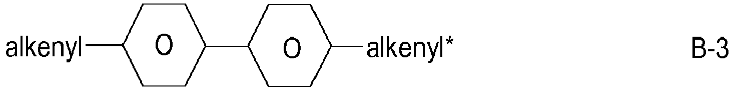 in which
   - alkyl and alkyl*: each, independently of one another, denote a straight-chain alkyl radical having 1-6 C atoms, and
   - alkenyl and alkenyl*: each, independently of one another, denote a straight-chain alkenyl radical having 2-6 C atoms.

The proportion of the biphenyls of the formulae B-1 to B-3 in the mixture as a whole is preferably at least 3% by weight, in particular ≥ 5% by weight.

Of the compounds of the formulae B-1 to B-3, the compounds of the formula B-2 are particularly preferred.

Particularly preferred biphenyls are 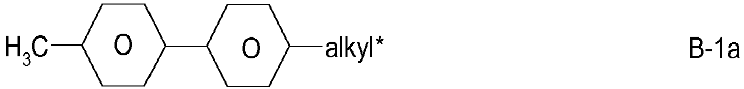 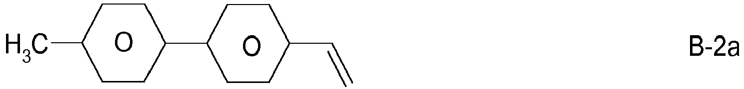 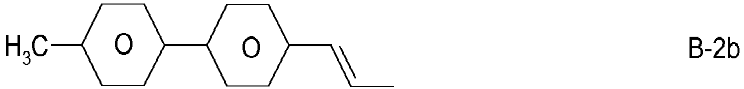 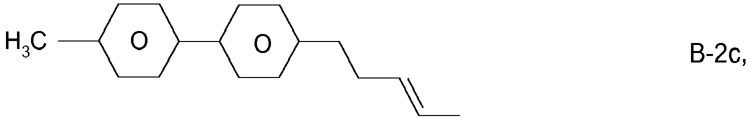 in which alkyl* denotes an alkyl radical having 1-6 C atoms. The medium according to the invention particularly preferably comprises one or more compounds of the formulae B-1a and/or B-2c.
h) Liquid-crystalline medium comprising at least one compound of the formulae Z-1 to Z-7, 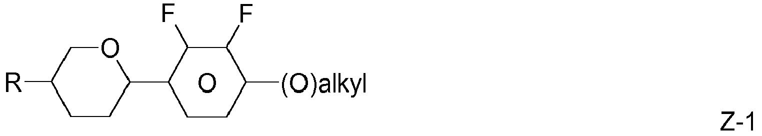 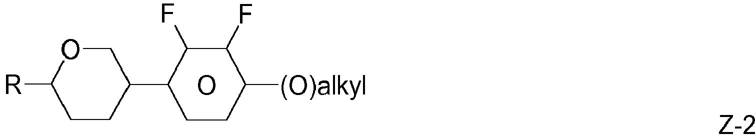 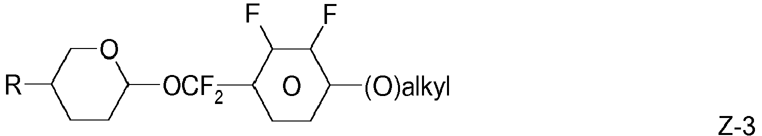 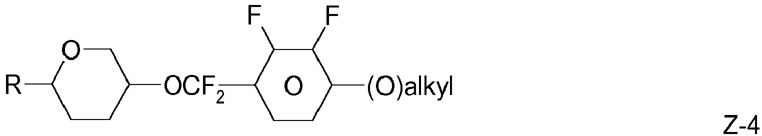 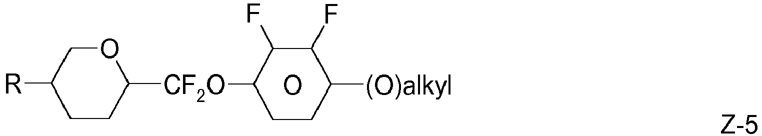 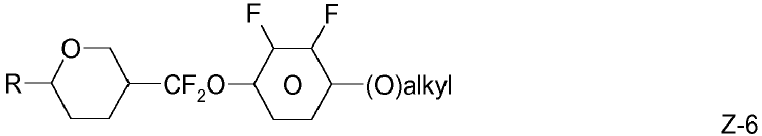 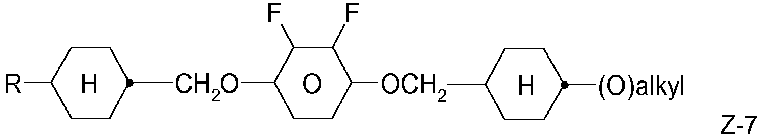 in which R and alkyl have the meanings indicated above.
i) Liquid-crystalline medium additionally comprising at least one compound of the formulae O-1 to O-18, 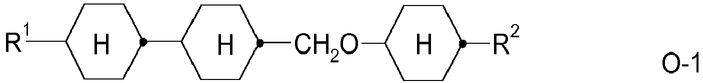 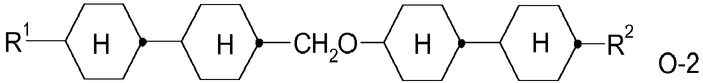 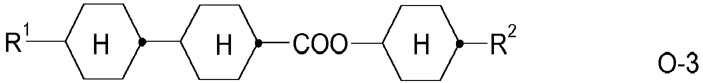 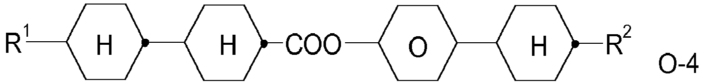 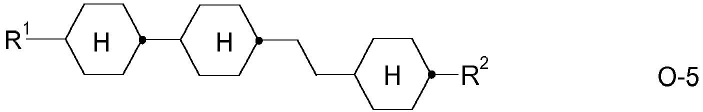 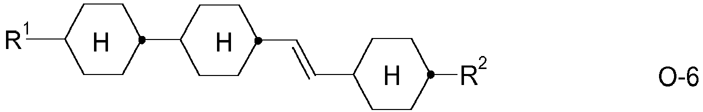 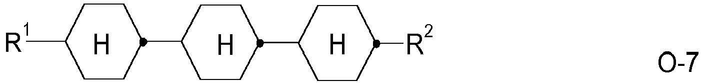 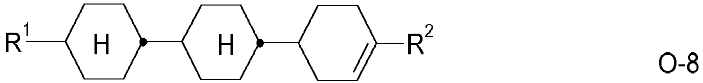 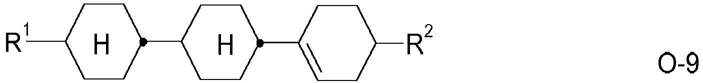 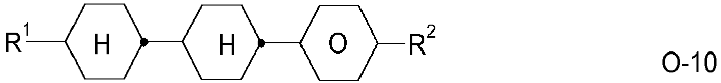 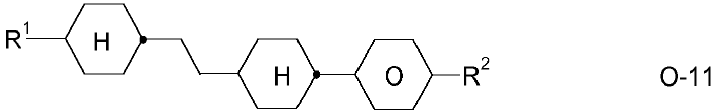 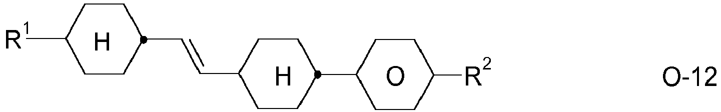 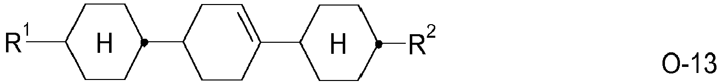 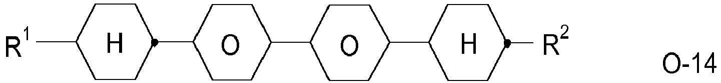 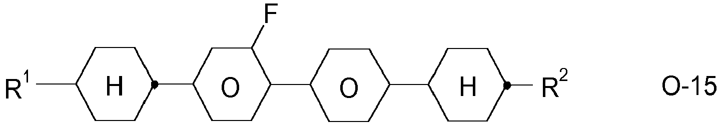 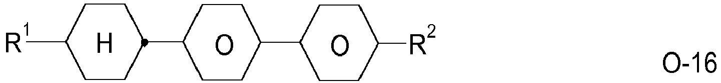 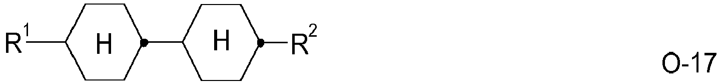 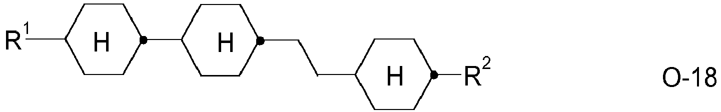 in which R¹ and R² have the meanings indicated for R^{2A}. R¹ and R² preferably each, independently of one another, denote straight-chain alkyl or alkenyl.

Preferred media comprise one or more compounds of the formulae O-1, O-3, O-4, O-6, O-7, O-10, O-11, O-12, O-14, O-15, O-16 and/or 0-17.

Mixtures according to the invention very particularly preferably comprise the compounds of the formula O-10, O-12, O-16 and/or O-17, in particular in amounts of 5-30%.

Preferred compounds of the formulae O-10 and O-17 are indicated below:

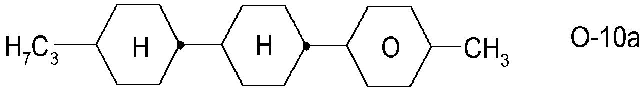

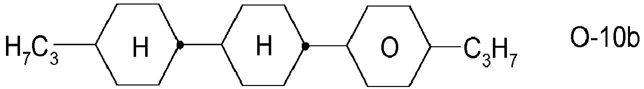

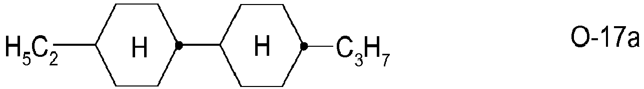

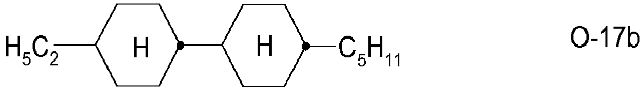

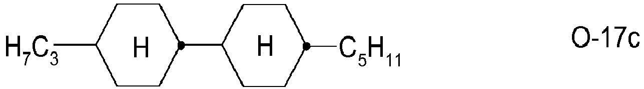

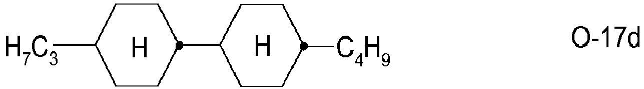

The medium according to the invention particularly preferably comprises the tricyclic compounds of the formula O-10a and/or of the formula O-10b in combination with one or more bicyclic compounds of the formulae O-17a to O-17d. The total proportion of the compounds of the formulae O-10a and/or O-10b in combination with one or more compounds selected from the bicyclic compounds of the formulae O-17a to O-17d is 5-40%, very particularly preferably 15-35%.

Very particularly preferred mixtures comprise compounds O-10a and O-17a:

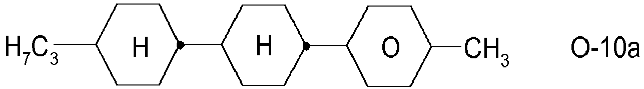

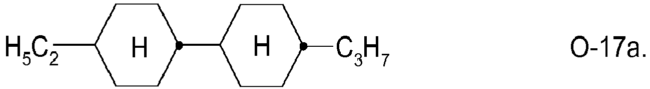

The compounds O-10a and O-17a are preferably present in the mixture in a concentration of 15-35%, particularly preferably 15-25% and especially preferably 18-22%, based on the mixture as a whole.

Very particularly preferred mixtures comprise the compounds O-10b and O-17a:

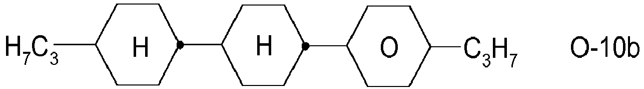

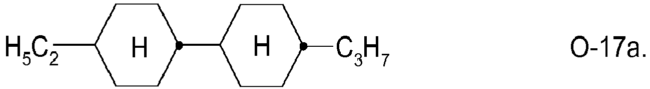

The compounds O-10b and O-17a are preferably present in the mixture in a concentration of 15-35%, particularly preferably 15-25% and especially preferably 18-22%, based on the mixture as a whole.

Very particularly preferred mixtures comprise the following three compounds:

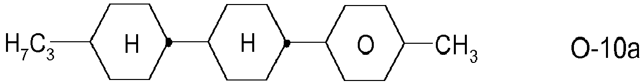

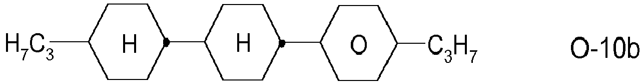

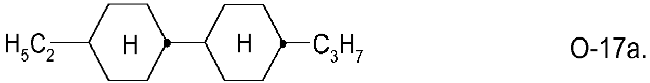

The compounds O-10a, O-10b and O-17a are preferably present in the mixture in a concentration of 15-35%, particularly preferably 15-25% and especially preferably 18-22%, based on the mixture as a whole.

Preferred mixtures comprise at least one compound selected from the group of the compounds 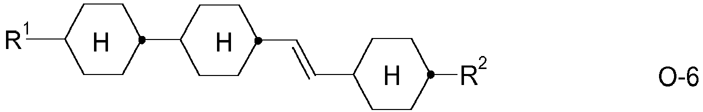 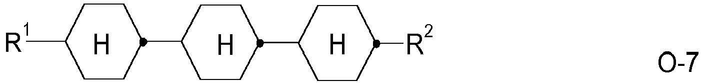 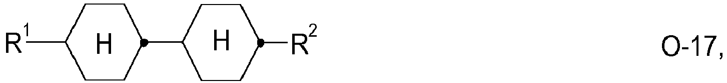 in which R¹ and R² have the meanings indicated above. Preferably in the compounds O-6, O-7 and O-17, R¹ denotes alkyl or alkenyl having 1-6 or 2-6 C atoms respectively and R² denotes alkenyl having 2-6 C atoms.

Preferred mixtures comprise at least one compound of the formulae O-6a, O-6b, O-7a, O-7b, O-17e, O-17f, O-17g and O-17h: 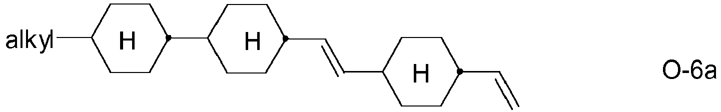 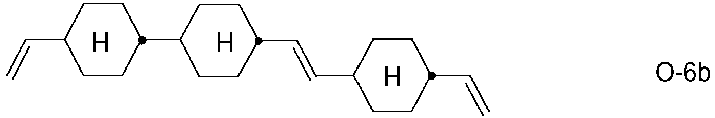 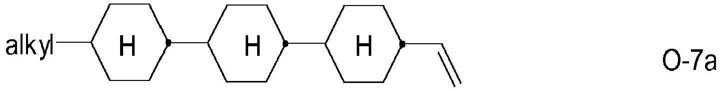 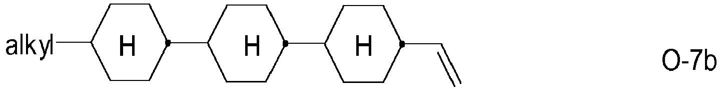 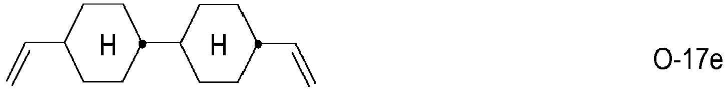 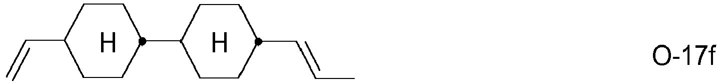 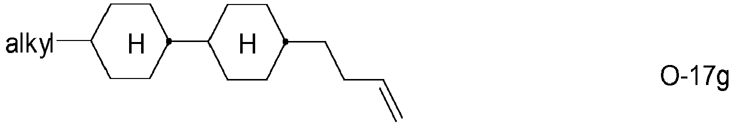 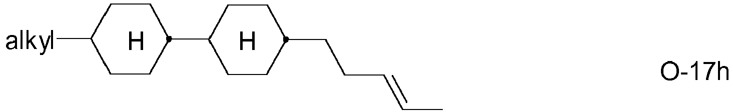 in which alkyl denotes an alkyl radical having 1-6 C atoms.

The compounds of the formulae O-6, O-7 and O-17e-h are preferably present in the mixtures according to the invention in amounts of 1 - 40% by weight, preferably 2 - 35% by weight and very particularly preferably 2 - 30% by weight.
j) Preferred liquid-crystalline media according to the invention comprise one or more substances which contain a tetrahydronaphthyl or naphthyl unit, such as, for example, the compounds of the formulae N-1 to N-5, 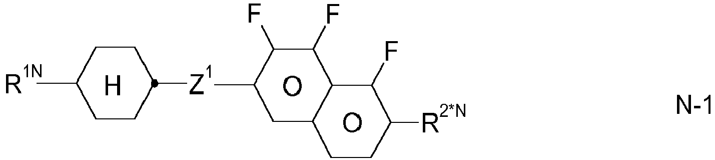 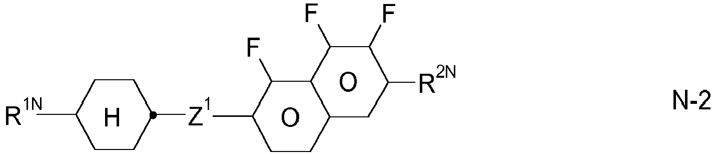 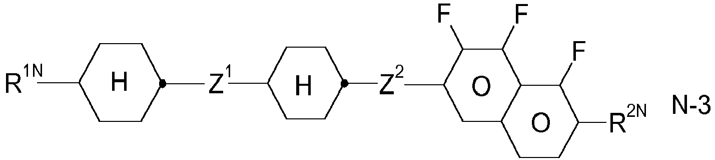 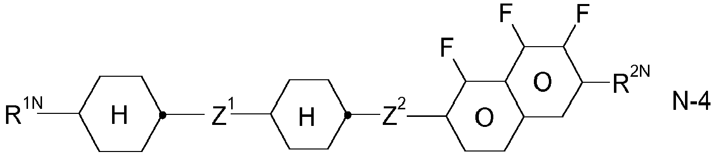 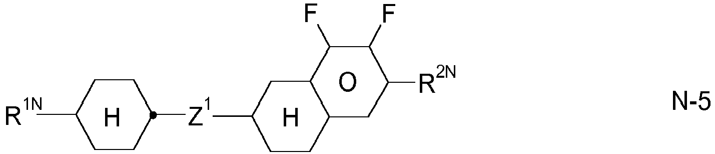 in which R^{1N} and R^{2N} each, independently of one another, have the meanings indicated for R^{2A}, preferably denote straight-chain alkyl, straight-chain alkoxy or straight-chain alkenyl, and
   - Z¹ and Z²: each, independently of one another, denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- or a single bond.
k) Preferred mixtures comprise one or more compounds selected from the group of the difluorodibenzochroman compounds of the formula BC, chromans of the formula CR, fluorinated phenanthrenes of the formulae PH-1 and PH-2, fluorinated dibenzofurans of the formula BF-1 and BF-2, 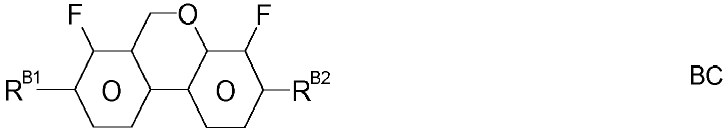 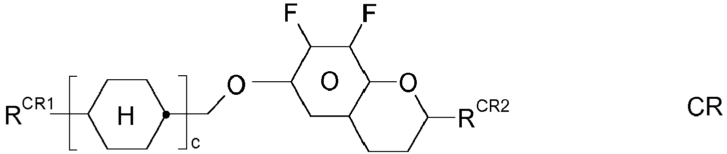 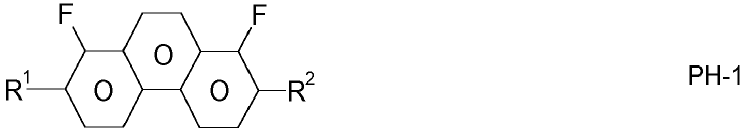 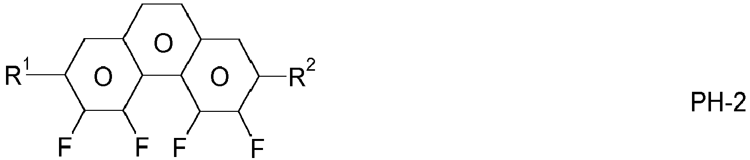 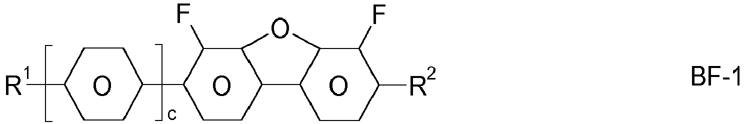 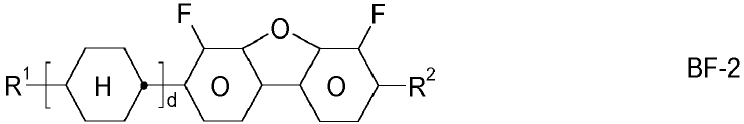 in which
   R^{B1}, R^{B2}, R^{CR1}, R^{CR2}, R¹, R² each, independently of one another, have the meaning of R^{2A}. c is 0, 1 or 2 and d denotes 1 or 2. R¹ and R² preferably, independently of one another, denote alkyl or alkoxy having 1 to 6 C atoms. The compounds of the formulae BF-1 and BF-2 should not be identical to one or more compounds of the formula I.

The mixtures according to the invention preferably comprise the compounds of the formulae BC, CR, PH-1, PH-2 and/or BF in amounts of 3 to 20% by weight, in particular in amounts of 3 to 15% by weight.

Particularly preferred compounds of the formulae BC and CR are the compounds BC-1 to BC-7 and CR-1 to CR-5, 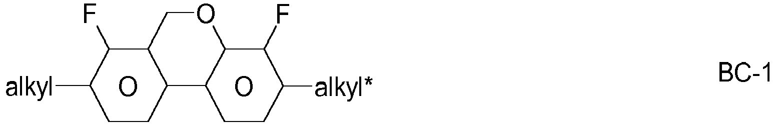 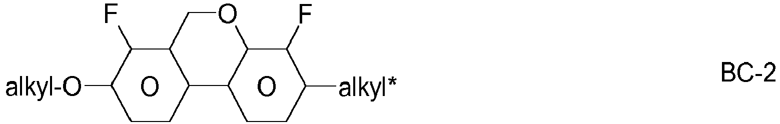 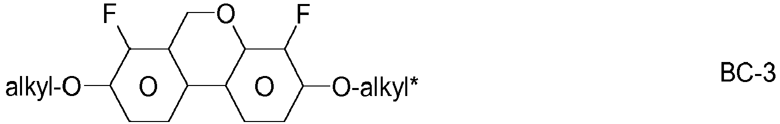 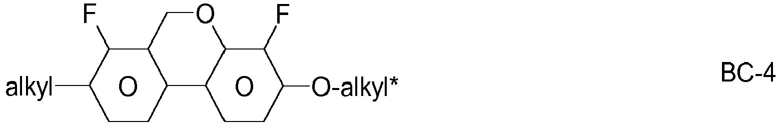 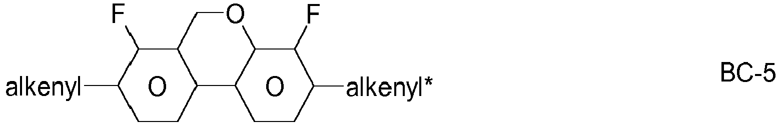 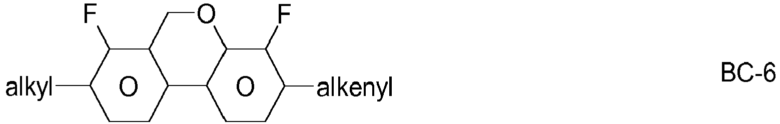 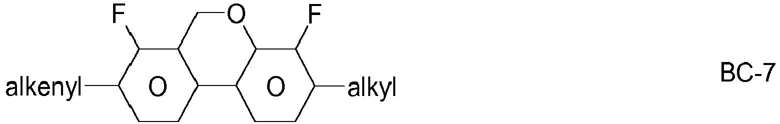 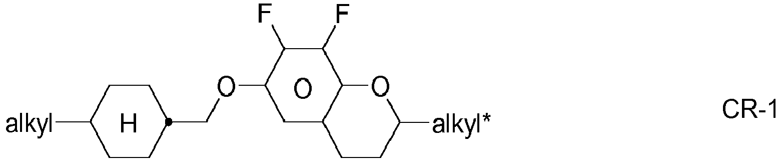 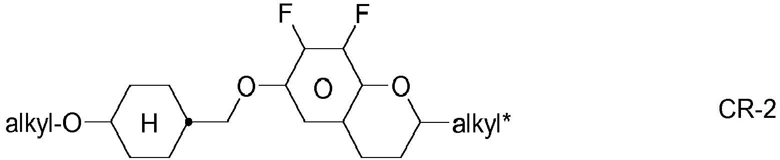 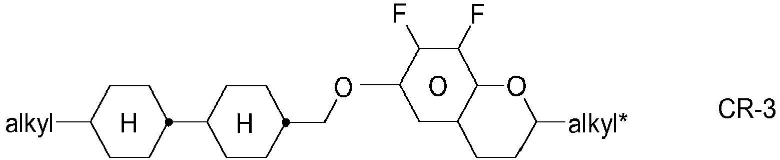 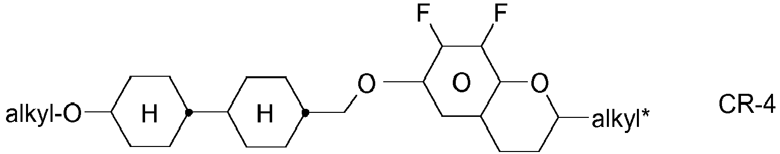 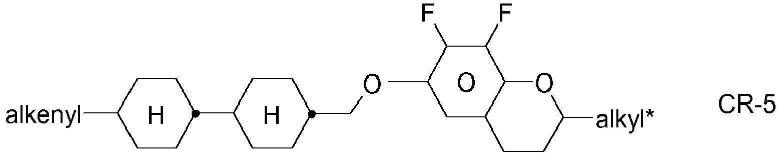 in which
- alkyl and alkyl*: each, independently of one another, denote a straight-chain alkyl radical having 1-6 C atoms, and
- alkenyl and alkenyl*: each, independently of one another, denote a straight-chain alkenyl radical having 2-6 C atoms.

Very particular preference is given to mixtures comprising one, two or three compounds of the formula BC-2, BF-1 and/or BF-2.
l) Preferred mixtures comprise one or more indane compounds of the formula In, 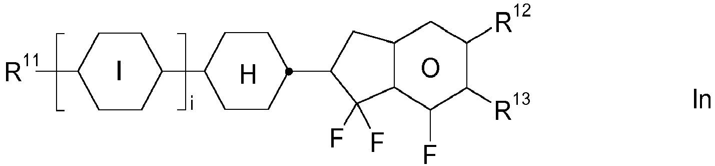 in which
   - R¹¹, R¹², R¹³: each, independently of one another, denote a straight-chain alkyl, alkoxy, alkoxyalkyl or alkenyl radical having 1-6 C atoms,
   - R¹² and R¹³: additionally denote halogen, preferably F, 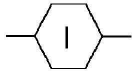 denotes 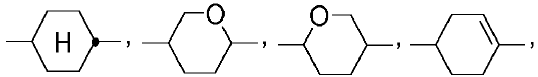 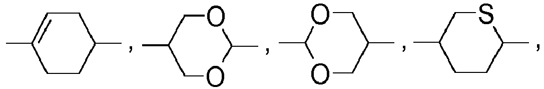 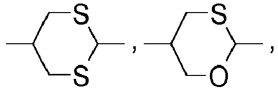
   - i: denotes 0, 1 or 2.

Preferred compounds of the formula In are the compounds of the formulae In-1 to In-16 indicated below:

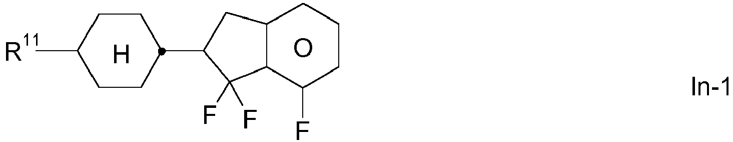

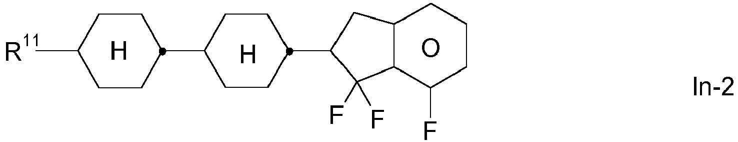

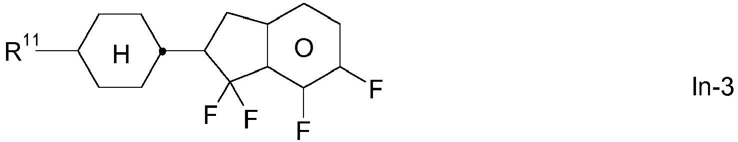

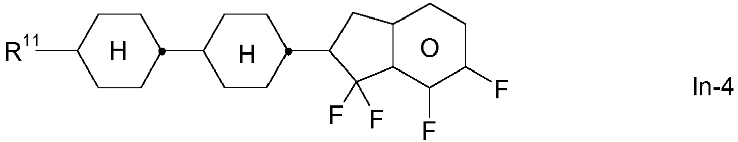

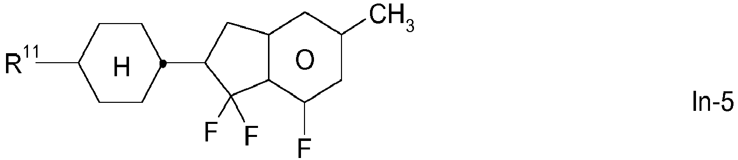

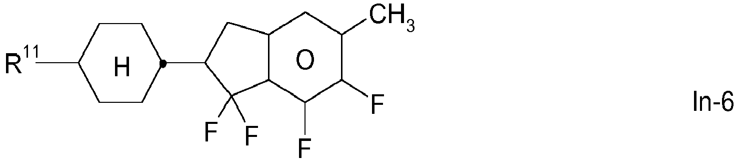

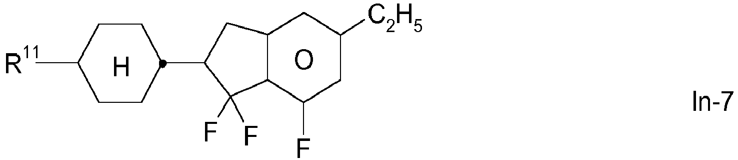

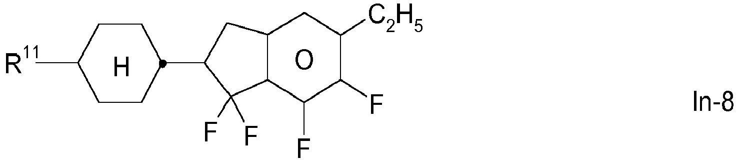

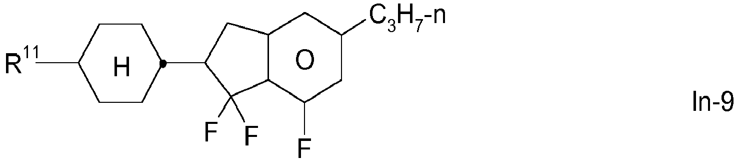

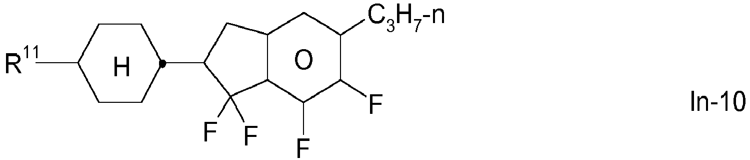

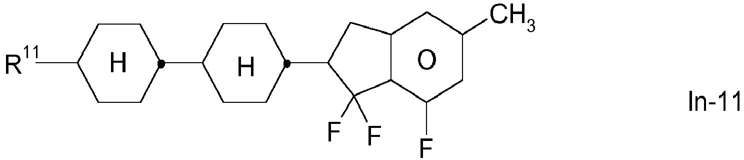

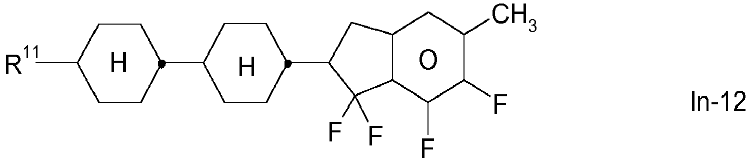

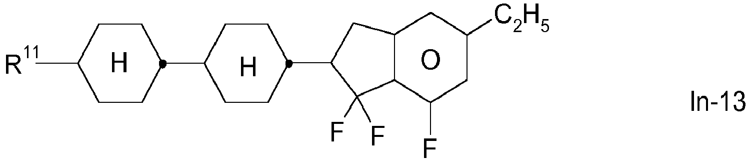

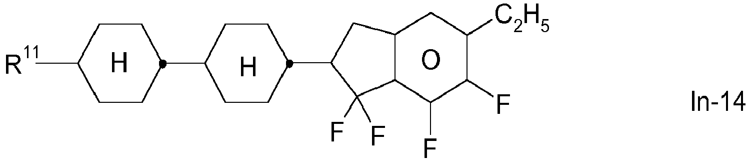

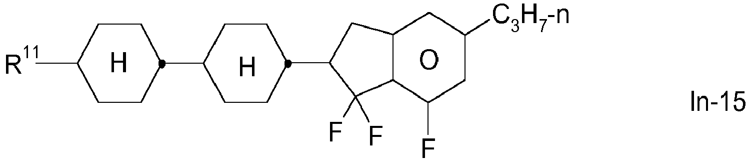

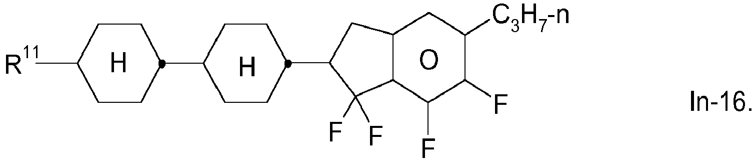

Particular preference is given to the compounds of the formulae In-1, In-2, In-3 and In-4.

The compounds of the formula In and the sub-formulae In-1 to In-16 are preferably employed in the mixtures according to the invention in concentrations ≥ 5% by weight, in particular 5 - 30% by weight and very particularly preferably 5 - 25% by weight.
m) Preferred mixtures additionally comprise one or more compounds of the formulae L-1 to L-11, 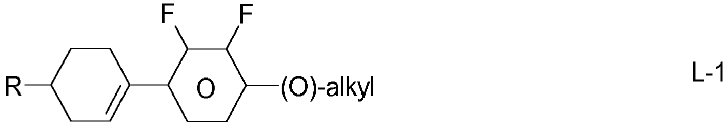 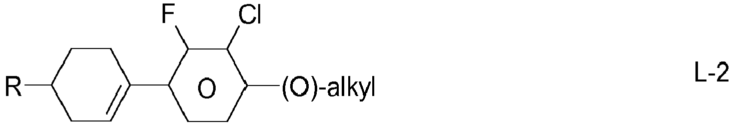 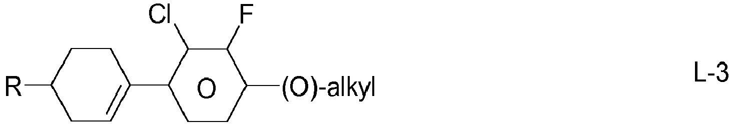 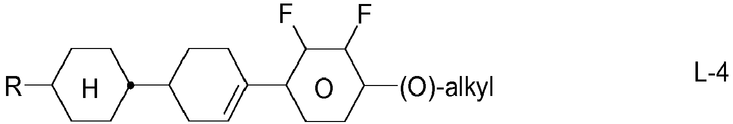 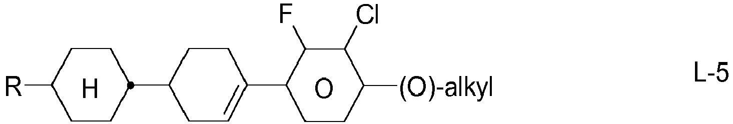 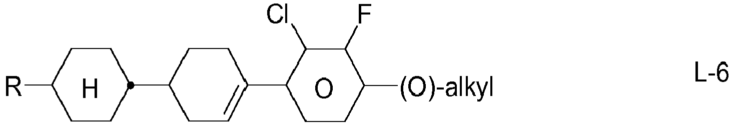 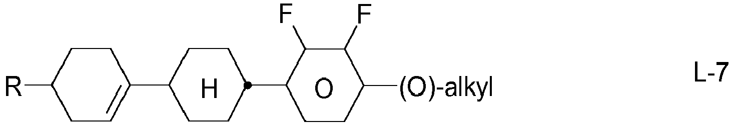 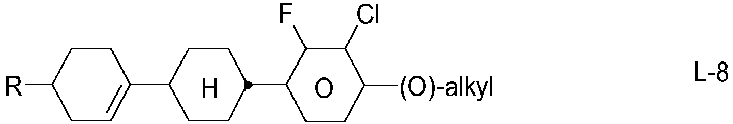 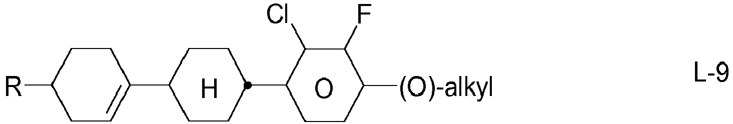 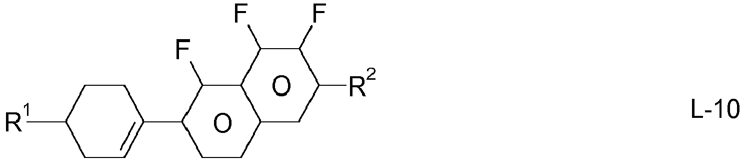 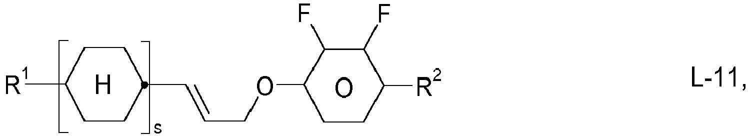 in which
   R, R¹ and R² each, independently of one another, have the meanings indicated for R^{2A} in Claim 5 and alkyl denotes an alkyl radical having 1-6 C atoms. s denotes 1 or 2.

Particular preference is given to the compounds of the formulae L-1 and L-4, in particular L-4.

The compounds of the formulae L-1 to L-11 are preferably employed in concentrations of 5 - 50% by weight, in particular 5 - 40% by weight and very particularly preferably 10 - 40% by weight.

Particularly preferred mixture concepts are indicated below: (the acronyms used are explained in Table A. n and m here each, independently of one another, denote 1-15, preferably 1-6).

The mixtures according to the invention preferably comprise
- one or more compounds of the formula I in which L¹ = L² = F and R¹ = R^{1*} = alkoxy;
- one or more compounds of formula ST-1
- CPY-n-Om, in particular CPY-2-O2, CPY-3-O2 and/or CPY-5-O2, preferably in concentrations > 5%, in particular 10-30%, based on the mixture as a whole,
   and/or
- CY-n-Om, preferably CY-3-O2, CY-3-O4, CY-5-O2 and/or CY-5-O4, preferably in concentrations > 5%, in particular 15-50%, based on the mixture as a whole,
   and/or
- CCY-n-Om, preferably CCY-4-O2, CCY-3-O2, CCY-3-O3, CCY-3-O1 and/or CCY-5-O2, preferably in concentrations > 5%, in particular 10-30%, based on the mixture as a whole,
   and/or
- CLY-n-Om, preferably CLY-2-O4, CLY-3-O2 and/or CLY-3-O3, preferably in concentrations > 5%, in particular 10-30%, based on the mixture as a whole.

Preference is furthermore given to mixtures according to the invention which comprise:
(n and m each, independently of one another, denote 1-6.)
   - the compound B-2O-O5, in a concentration in the range of from 1 - 15 %, more preferably from 2 - 12%, particularly preferably from 3 - 10 % by weight and very particularly preferably from 4 - 8% by weight
   - a compound of formula ST, preferably of the formula ST-1a-1 and/or ST-1b-1 in a total concentration in the range of from 0.005 % - 1 %, more preferably 0.01 % to 0.05 %, particularly preferably from 0.025 % to 0.150 % and very particularly preferably from 0.030 % to 0.100 %.
   - CPY-n-Om and CY-n-Om, preferably in concentrations of 10-80%, based on the mixture as a whole,
      and/or
   - CPY-n-Om and CK-n-F, preferably in concentrations of 10-70%, based on the mixture as a whole,
      and/or
   - CPY-n-Om and PY-n-Om, preferably CPY-2-O2 and/or CPY-3-O2 and PY-3-O2, preferably in concentrations of 10 - 45%, based on the mixture as a whole,
      and/or
   - CPY-n-Om and CLY-n-Om, preferably in concentrations of 10-80%, based on the mixture as a whole,
      and/or
   - CCVC-n-V, preferably CCVC-3-V, preferably in concentrations of 2 - 10%, based on the mixture as a whole,
      and/or
   - CCC-n-V, preferably CCC-2-V and/or CCC-3-V, preferably in concentrations of 2 - 10%, based on the mixture as a whole,
      and/or
   - CC-V-V, preferably in concentrations of 5 - 50%, based on the mixture as a whole.

In a particularly preferred embodiment of the present invention the medium comprises the compound B-2O-O5 in a concentration in the range of from 2 to 8% and the compound CC-3-V in a concentration in the range of from 25 to 35 % and the compound CC-3-V1 in a concentration in the range of from 8% to 12 %.

The invention furthermore relates to an electro-optical display having active-matrix addressing based on the ECB, VA, PS-VA, PA-VA, IPS, PS-IPS, FFS or PS-FFS effect, characterised in that it contains, as dielectric, a liquid-crystalline medium according to one or more of Claims 1 to 11.

The liquid-crystalline medium according to the invention preferably has a nematic phase from ≤ -20°C to ≥ 70°C, particularly preferably from ≤ -30°C to ≥ 80°C, very particularly preferably from ≤ -40°C to ≥ 90°C.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity ν₂₀ of at most 30 mm² · s⁻¹ at 20°C.

The values of the birefringence Δn in the liquid-crystal mixture are generally between 0.07 and 0.16, preferably between 0.08 and 0.13.

The liquid-crystal mixture according to the invention has a Δε of -0.5 to -8.0, in particular -2.5 to -6.0, where Δε denotes the dielectric anisotropy. The rotational viscosity γ₁ at 20°C is preferably ≤ 150 mPa·s, in particular ≤ 120 mPa·s.

The liquid-crystal media according to the invention have relatively low values for the threshold voltage (V₀). They are preferably in the range from 1.7 V to 3.0 V, particularly preferably ≤ 2.5 V and very particularly preferably ≤ 2.3 V.

For the present invention, the term "threshold voltage" relates to the capacitive threshold (V₀), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10% of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA). They are furthermore suitable for IPS (in-plane switching) and FFS (fringe field switching) applications having negative Δε.

The nematic liquid-crystal mixtures in the displays according to the invention generally comprise two components A and B, which themselves consist of one or more individual compounds.

Component A has significantly negative dielectric anisotropy and gives the nematic phase a dielectric anisotropy of ≤ -0.5. Besides one or more compounds of the formula I, it preferably comprises the compounds of the formulae IIA, IIB and/or IIC, furthermore one or more compounds of the formula 0-17.

The proportion of component A is preferably between 45 and 100%, in particular between 60 and 100%.

For component A, one (or more) individual compound(s) which has (have) a value of Δε ≤ -0.8 is (are) preferably selected. This value must be more negative, the smaller the proportion A in the mixture as a whole.

Component B has pronounced nematogeneity and a flow viscosity of not greater than 30 mm² · s⁻¹, preferably not greater than 25 mm² · s⁻¹, at 20°C.

A multiplicity of suitable materials is known to the person skilled in the art from the literature. Particular preference is given to compounds of the formula 0-17.

Particularly preferred individual compounds in component B are extremely low-viscosity nematic liquid crystals having a flow viscosity of not greater than 18 mm² · s⁻¹, preferably not greater than 12 mm² · s⁻¹, at 20°C.

Component B is monotropically or enantiotropically nematic, has no smectic phases and is able to prevent the occurrence of smectic phases down to very low temperatures in liquid-crystal mixtures. For example, if various materials of high nematogeneity are added to a smectic liquid-crystal mixture, the nematogeneity of these materials can be compared through the degree of suppression of smectic phases that is achieved.

The mixture may optionally also comprise a component C, comprising compounds having a dielectric anisotropy of Δε ≥1.5. These so-called positive compounds are generally present in a mixture of negative dielectric anisotropy in amounts of ≤ 20% by weight, based on the mixture as a whole.

Besides one or more compounds of the formula I, the phases preferably comprise 4 to 15, in particular 5 to 12, and particularly preferably < 10, compounds of the formulae IIA, IIB and/or IIC and optionally one or more compounds of the formula 0-17.

Besides compounds of the formula I and the compounds of the formulae IIA, IIB and/or IIC and optionally 0-17, other constituents may also be present, for example in an amount of up to 45% of the mixture as a whole, but preferably up to 35%, in particular up to 10%.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclohexylnaphthalenes, 1,4-biscyclohexylbiphenyls or cyclohexylpyrimidines, phenyl- or cyclohexyldioxanes, optionally halogenated stilbenes, benzyl phenyl ethers, tolanes and substituted cinnamic acid esters.

The most important compounds which are suitable as constituents of liquid-crystal phases of this type can be characterised by the formula IV

R²⁰⁻L-G-E-R²¹ IV

in which L and E each denote a carbo- or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,

G denotes
-CH=CH- -N(O)=N-
-CH=CQ- -CH=N(O)-
-C≡C- -CH₂-CH₂-
-CO-O- -CH₂-O-
-CO-S- -CH₂-S-
-CH=N- -COO-Phe-COO-
-CF₂O- -CF=CF-
-OCF₂- -OCH₂-
-(CH₂)₄- -(CH₂)₃O-
or a C-C single bond, Q denotes halogen, preferably chlorine, or -CN, and R²⁰ and R²¹ each denote alkyl, alkenyl, alkoxy, alkoxyalkyl or alkoxycarbonyloxy having up to 18, preferably up to 8, carbon atoms, or one of these radicals alternatively denotes CN, NC, NO₂, NCS, CF₃, SF₅, OCF₃, F, Cl or Br.

In most of these compounds, R²⁰ and R²¹ are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA, IPS or FFS mixture according to the invention may also comprise compounds in which, for example, H, N, O, Cl and F have been replaced by the corresponding isotopes.

Polymerisable compounds, so-called reactive mesogens (RMs), for example as disclosed in U.S. 6,861,107, may furthermore be added to the mixtures according to the invention in concentrations of preferably 0.01 - 5% by weight, particularly preferably 0.2 - 2% by weight, based on the mixture. These mixtures may optionally also comprise an initiator, as described, for example, in U.S. 6,781,665. The initiator, for example Irganox-1076 from BASF, is preferably added to the mixture comprising polymerisable compounds in amounts of 0-1%. Mixtures of this type can be used for so-called polymer-stabilised VA modes (PS-VA) or PSA (polymer sustained VA), in which polymerisation of the reactive mesogens is intended to take place in the liquid-crystalline mixture. The prerequisite for this is that the liquid-crystalline compounds of the LC host do not react under the polymerisation conditions of the reactive mesogens, i.e. generally on exposure to UV in the wavelength range from 320-360 nm. Liquid-crystalline compounds containing an alkenyl side chain, such as, for example, CC-3-V, exhibit no reaction under the polymerisation conditions (UV polymerisation) for the RMs.

The mixtures according to the invention may furthermore comprise conventional additives other than those of formula ST, such as, for example, stabilisers, antioxidants, UV absorbers, nanoparticles, microparticles, etc.

The structure of the liquid-crystal displays according to the invention corresponds to the usual geometry, as described, for example, in EP-A 0 240 379.

The following examples are intended to explain the invention without limiting it. Above and below, per cent data denote per cent by weight; all temperatures are indicated in degrees Celsius.

Throughout the patent application, 1,4-cyclohexylene rings and 1,4-phenylene rings are depicted as follows:

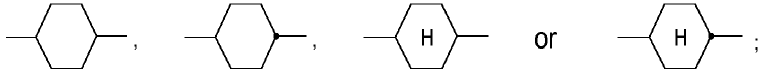

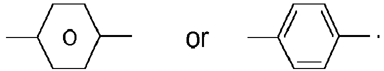

The cyclohexylene rings are trans-1,4-cyclohexylene rings.

Throughout the patent application and in the working examples, the structures of the liquid-crystal compounds are indicated by means of acronyms. Unless indicated otherwise, the transformation into chemical formulae is carried out in accordance with Tables 1-3. All radicals CₙH₂ₙ₊₁, CₘH₂ₘ₊₁ and C_{m'}H_{2m'+1} or CₙH₂ₙ and CₘH₂ₘ are straight-chain alkyl radicals or alkylene radicals respectively in each case having n, m, m' or z C atoms respectively. n, m, m', z each denote, independently of one another, 1, 2, 3, 4, 5, 6, 7, 8, 9, 10, 11 or 12, preferably 1, 2, 3, 4, 5 or 6. In Table 1 the ring elements of the respective compound are coded, in Table 2 the bridging members are listed and in Table 3 the meanings of the symbols for the left-hand or right-hand side chains of the compounds are indicated.

**Table 1: Ring elements**

| | |
|---|---|
| 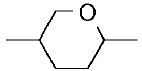 | 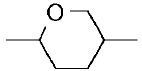 |
| **A** | **AI** |
| 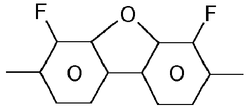 | 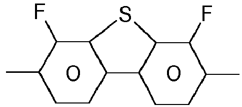 |
| **B** | **B(S)** |
| 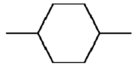 | |
| **C** | |
| 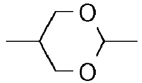 | 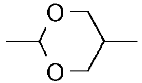 |
| **D** | **DI** |
| 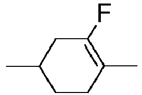 | 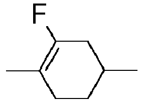 |
| **F** | **FI** |
| 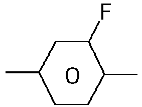 | 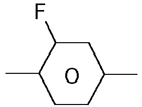 |
| **G** | **GI** |
| 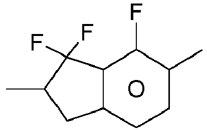 | |
| **K** | |
| 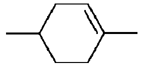 | 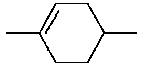 |
| **L** | **LI** |
| 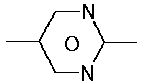 | 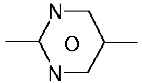 |
| **M** | **MI** |
| 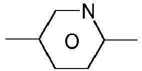 | 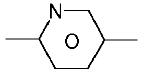 |
| **N** | **NI** |
| 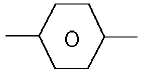 | |
| **P** | |
| 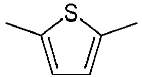 | |
| **S** | |
| 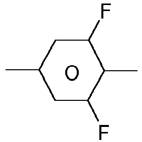 | 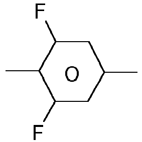 |
| **U** | **UI** |
| 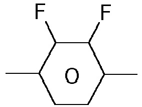 | |
| **Y** | |
| 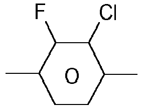 | 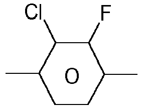 |
| **Y(F,Cl)** | **Y(Cl,F)** |

**Table 2: Bridging members**

| | | | |
|---|---|---|---|
| **E** | -CH₂CH₂- | | |
| **V** | -CH=CH- | | |
| **T** | -C≡C- | | |
| **W** | -CF₂CF₂- | | |
| **Z** | -COO- | **ZI** | -OCO- |
| **O** | -CH₂O- | **OI** | -OCH₂- |
| **Q** | -CF₂O- | **QI** | -OCF₂- |

**Table 3: Side chains**

| Left-hand side chain | | Right-hand side chain | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH-CₙH₂ₙ- | **-Vn** | -CH=CH-CₙH₂ₙ₊₁ |
| **nVm-** | CₙH₂ₙ₊₁-CH=CH-CₘH₂ₘ- | **-nVm** | - CₙH₂ₙ-CH=CH-CₘH₂ₘ₊₁ |
| **N-** | N≡C- | **-N** | -C≡N |
| **F-** | F- | **-F** | -F |
| **Cl-** | Cl- | **-Cl** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF₃ |
| **A-** | H-C≡C- | **-A** | -C≡C-H |

Besides one or more compounds of the formula I, the mixtures according to the invention preferably comprise one or more compounds of the compounds mentioned below from Table A.

**Table A**

| The following abbreviations are used: (n, m, m', z: each, independently of one another, 1, 2, 3, 4, 5 or 6; (O)CₘH₂ₘ₊₁ means OCₘH₂ₘ₊₁ or CₘH₂ₘ₊₁) |
|---|
| 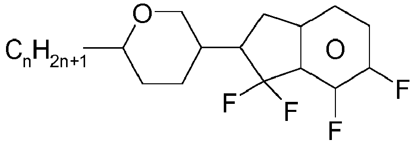 |
| **AIK-n-F** |
| 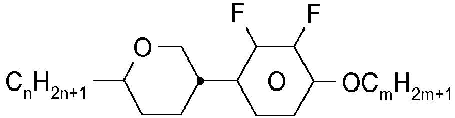 |
| **AIY-n-Om** |
| 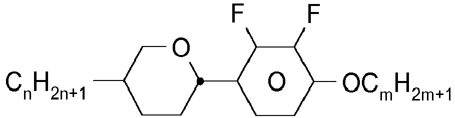 |
| **AY-n-Om** |
| 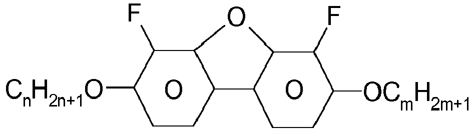 |
| **B-nO-Om** |
| 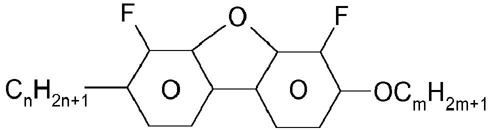 |
| **B-n-Om** |
| 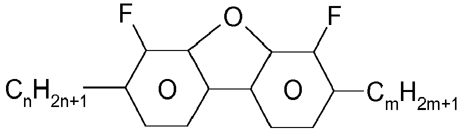 |
| **B-n-m** |
| 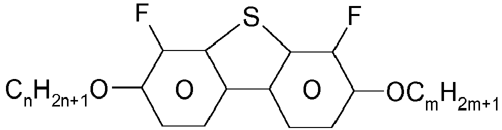 |
| **B(S)-nO-Om** |
| 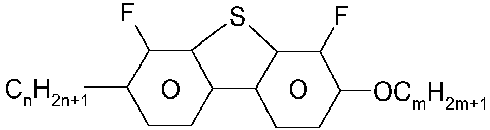 |
| **B(S)-n-Om** |
| 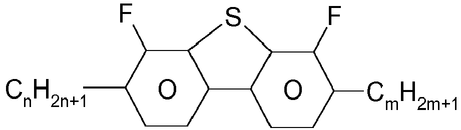 |
| **B(S)-n-m** |
| 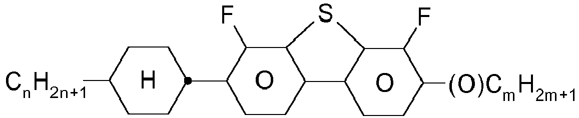 |
| **CB(S)-n-(O)m** |
| 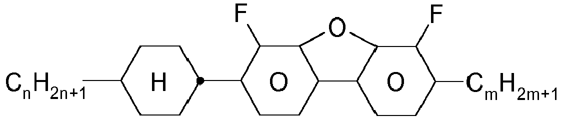 |
| **CB-n-m** |
| 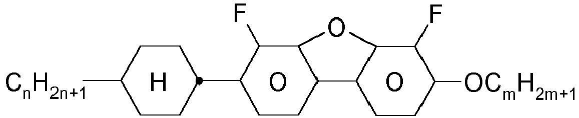 |
| **CB-n-Om** |
| 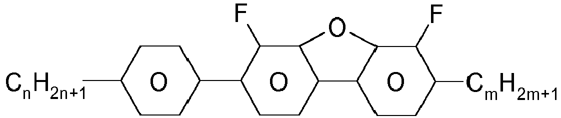 |
| **PB-n-m** |
| 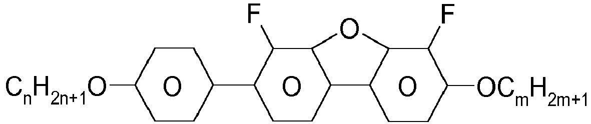 |
| **PB-nO-Om** |
| 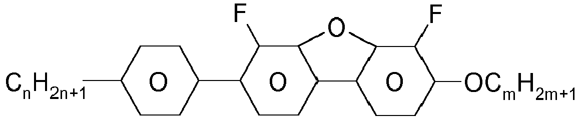 |
| **PB-n-Om** |
| 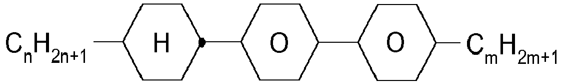 |
| **CPP-n-m** |
| 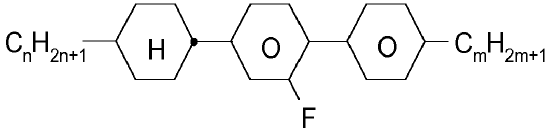 |
| **CGP-n-m** |
| 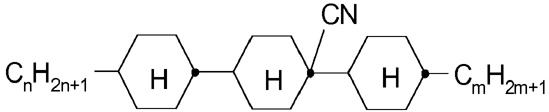 |
| **BCN-nm** |
| 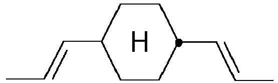 |
| **C-1V-V1** |
| 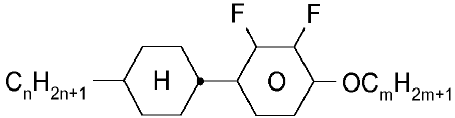 |
| **CY-n-Om** |
| 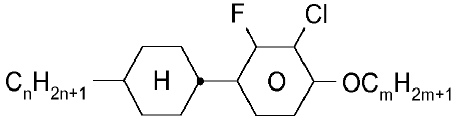 |
| **CY(F,Cl)-n-Om** |
| 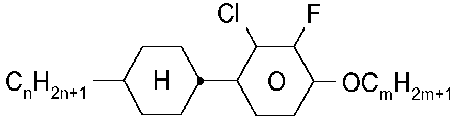 |
| **CY(Cl,F)-n-Om** |
| 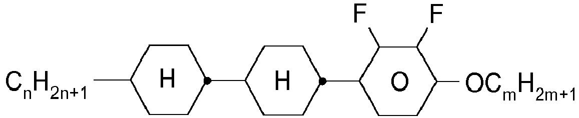 |
| **CCY-n-Om** |
| 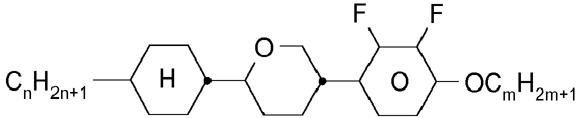 |
| **CAIY-n-Om** |
| 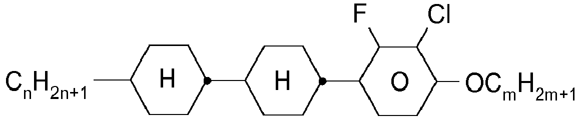 |
| **CCY(F,Cl)-n-Om** |
| 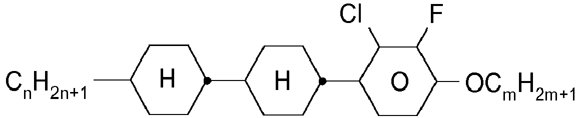 |
| **CCY(Cl,F)-n-Om** |
| 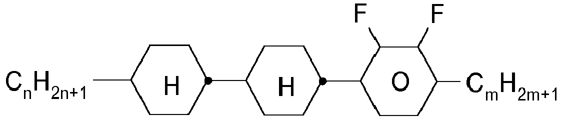 |
| **CCY-n-m** |
| 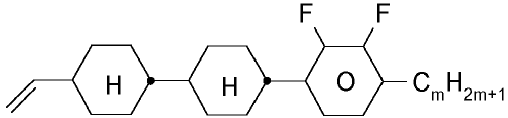 |
| **CCY-V-m** |
| 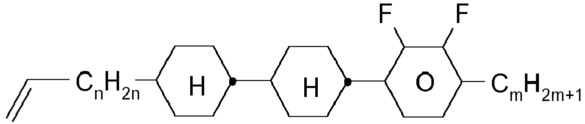 |
| **CCY-Vn-m** |
| 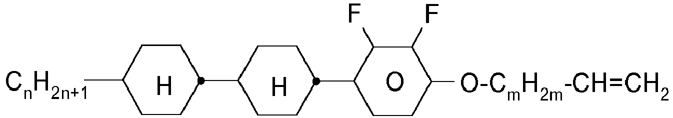 |
| **CCY-n-OmV** |
| 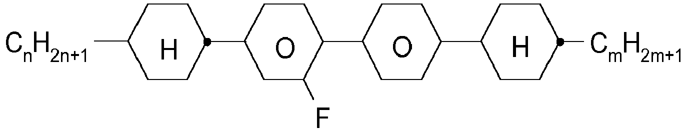 |
| **CGPC-n-m** |
| 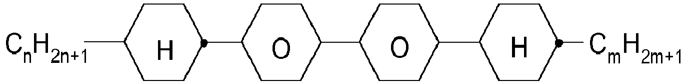 |
| **CPPC-n-m** |
| 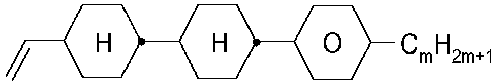 |
| **CCP-V-m** |
| 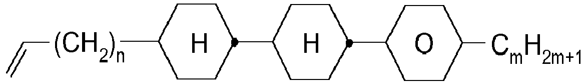 |
| **CCP-Vn-m** |
| 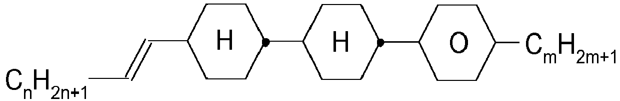 |
| **CCP-nV-m** |
| 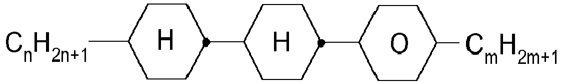 |
| **CCP-n-m** |
| 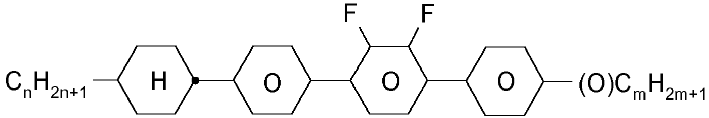 |
| **CPYP-n-(O)m** |
| 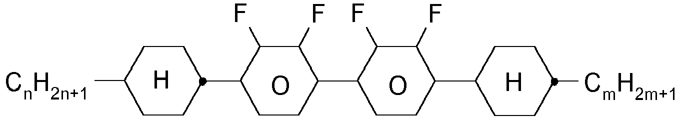 |
| **CYYC-n-m** |
| 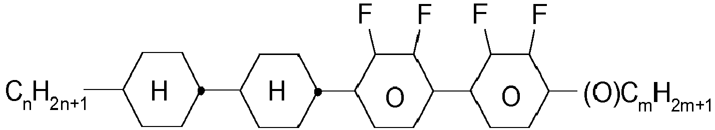 |
| **CCYY-n-(O)m** |
| 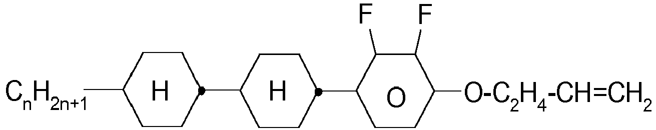 |
| **CCY-n-O2V** |
| 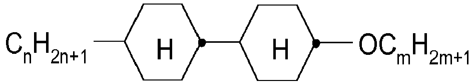 |
| **CCH-nOm** |
| 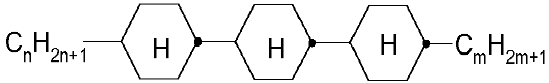 |
| **CCC-n-m** |
| 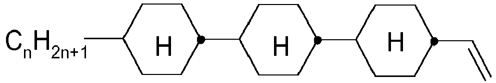 |
| **CCC-n-V** |
| 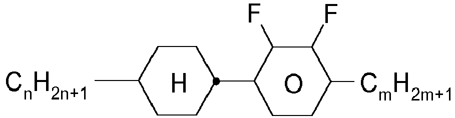 |
| **CY-n-m** |
| 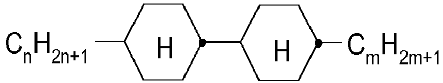 |
| **CC-n-m** |
| 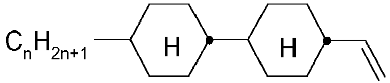 |
| **CC-n-V** |
| 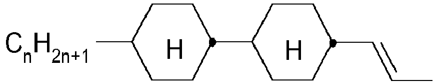 |
| **CC-n-V1** |
| 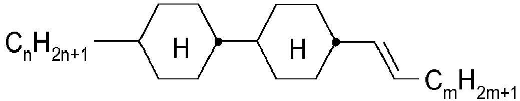 |
| **CC-n-Vm** |
| 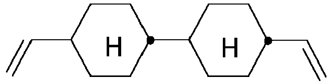 |
| **CC-V-V** |
| 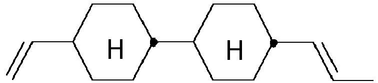 |
| **CC-V-V1** |
| 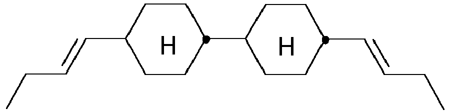 |
| **CC-2V-V2** |
| 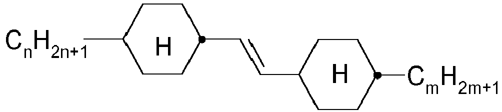 |
| **CVC-n-m** |
| 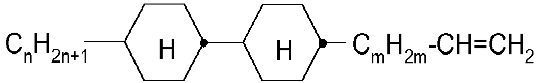 |
| **CC-n-mV** |
| 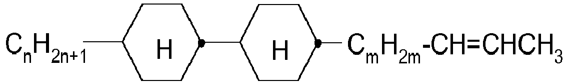 |
| **CC-n-mV1** |
| 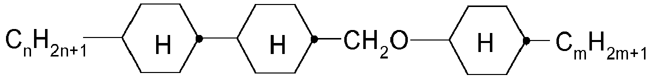 |
| **CCOC-n-m** |
| 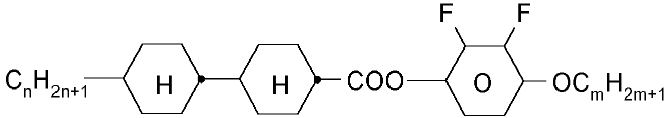 |
| **CP-nOmFF** |
| 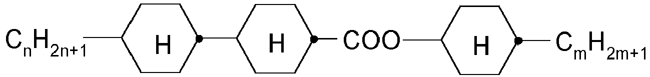 |
| **CCZC-n-m** |
| 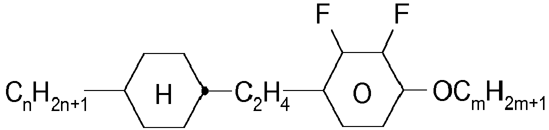 |
| **CEY-n-Om** |
| 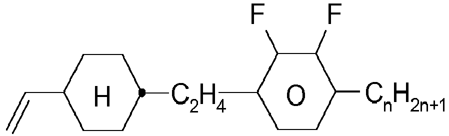 |
| **CEY-V-n** |
| 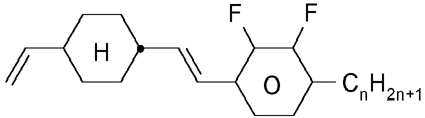 |
| **CVY-V-n** |
| 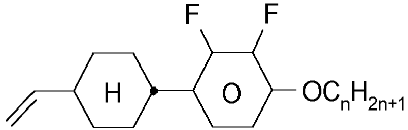 |
| **CY-V-On** |
| 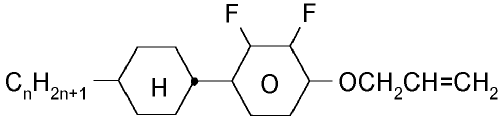 |
| **CY-n-01V** |
| 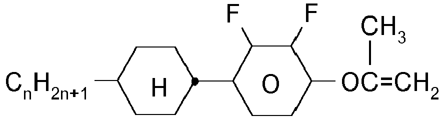 |
| **CY-n-OC(CH₃)=CH₂** |
| 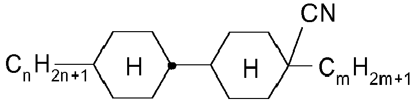 |
| **CCN-nm** |
| 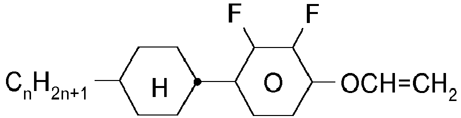 |
| **CY-n-OV** |
| 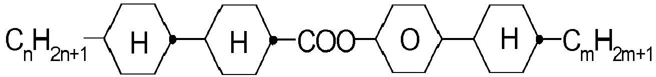 |
| **CCZPC-n-m** |
| 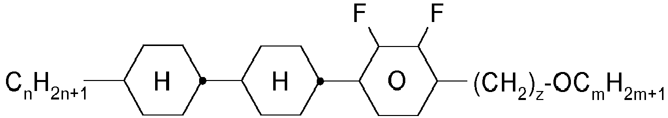 |
| **CCY-n-zOm** |
| 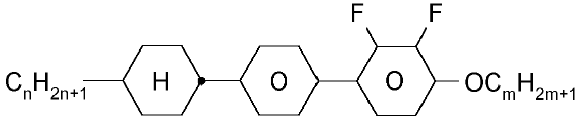 |
| **CPY-n-Om** |
| 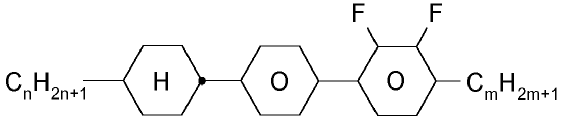 |
| **CPY-n-m** |
| 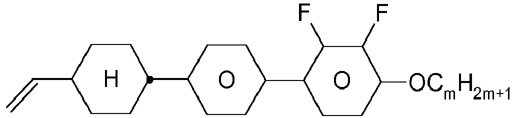 |
| **CPY-V-Om** |
| 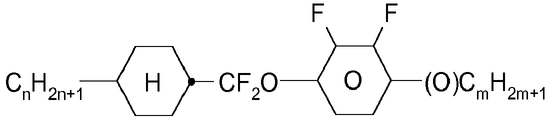 |
| **CQY-n-(O)m** |
| 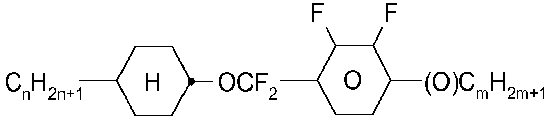 |
| **CQIY-n-(O)m** |
| 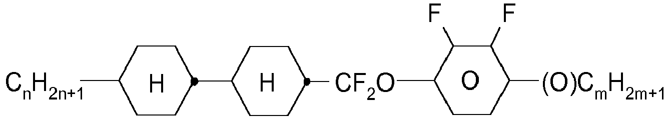 |
| **CCQY-n-(O)m** |
| 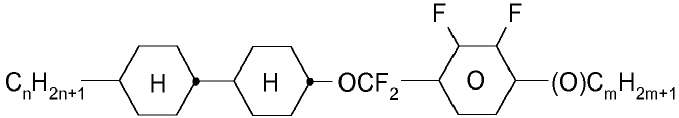 |
| **CCQIY-n-(O)m** |
| 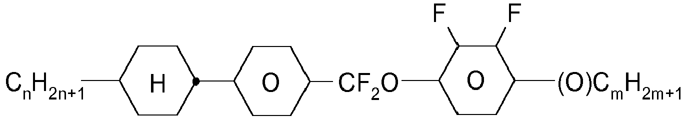 |
| **CPQY-n-(O)m** |
| 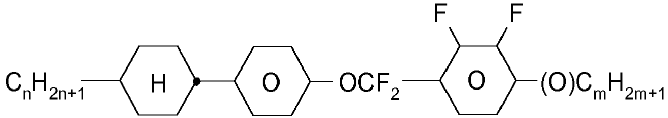 |
| **CPQIY-n-(O)m** |
| 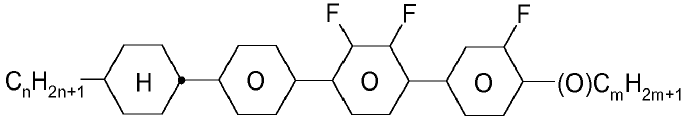 |
| **CPYG-n-(O)m** |
| 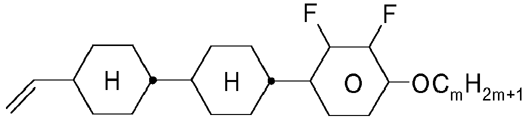 |
| **CCY-V-Om** |
| 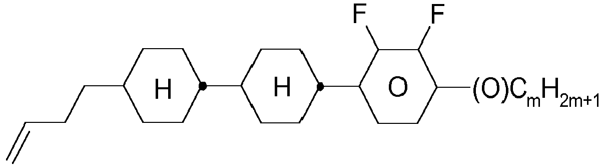 |
| **CCY-V2-(O)m** |
| 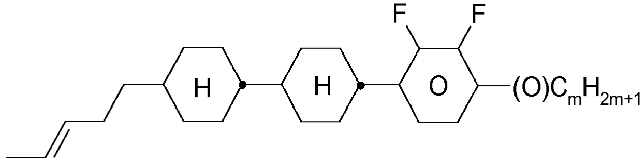 |
| **CCY-1V2-(O)m** |
| 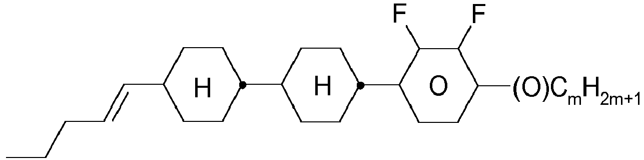 |
| **CCY-3V-(O)m** |
| 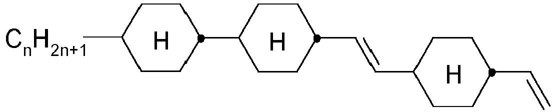 |
| **CCVC-n-V** |
| 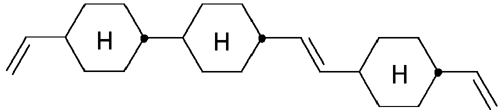 |
| **CCVC-V-V** |
| 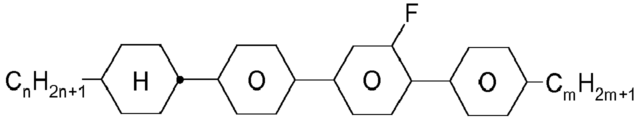 |
| **CPGP-n-m** |
| 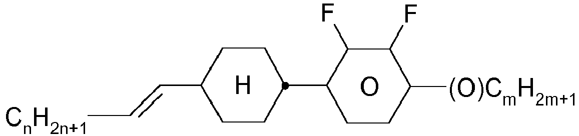 |
| **CY-nV-(O)m** |
| 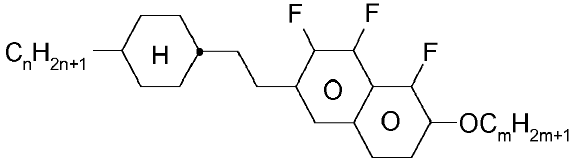 |
| **CENaph-n-Om** |
| 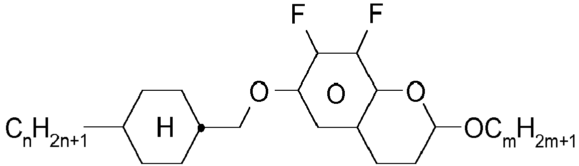 |
| **COChrom-n-Om** |
| 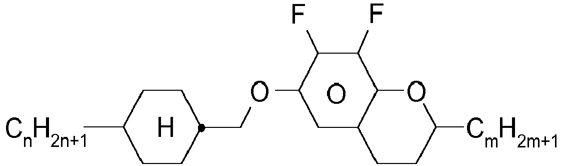 |
| **COChrom-n-m** |
| 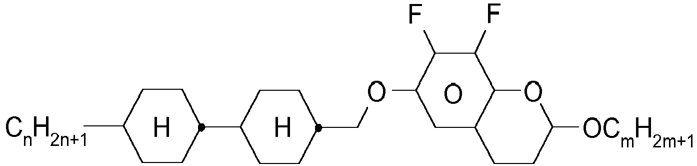 |
| **CCOChrom-n-Om** |
| 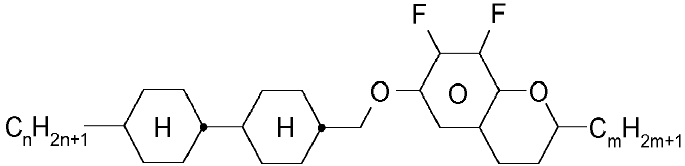 |
| **CCOChrom-n-m** |
| 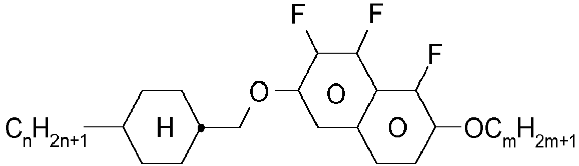 |
| **CONaph-n-Om** |
| 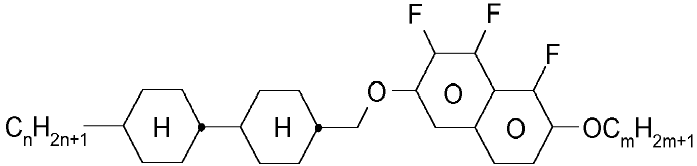 |
| **CCONaph-n-Om** |
| 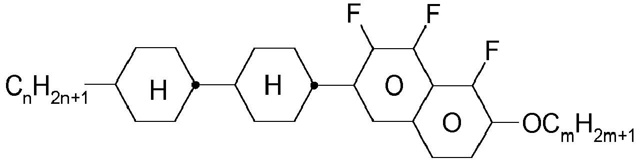 |
| **CCNaph-n-Om** |
| 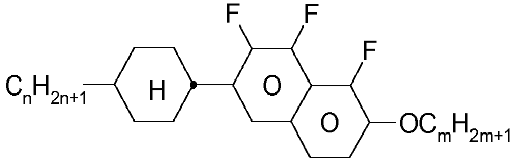 |
| **CNaph-n-Om** |
| 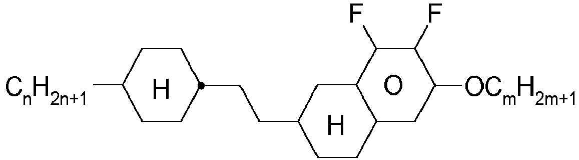 |
| **CETNaph-n-Om** |
| 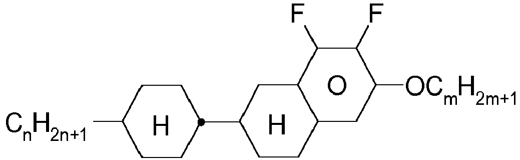 |
| **CTNaph-n-Om** |
| 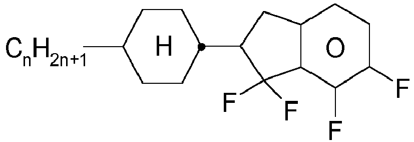 |
| **CK-n-F** |
| 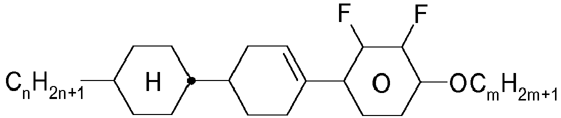 |
| **CLY-n-Om** |
| 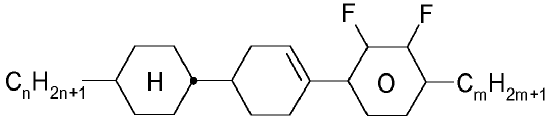 |
| **CLY-n-m** |
| 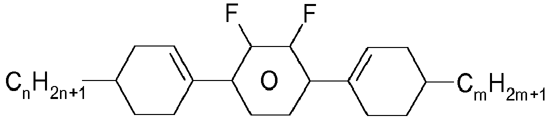 |
| **LYLI-n-m** |
| 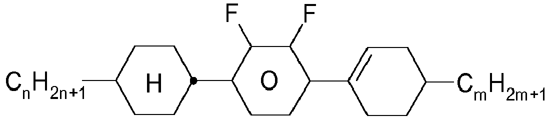 |
| **CYLI-n-m** |
| 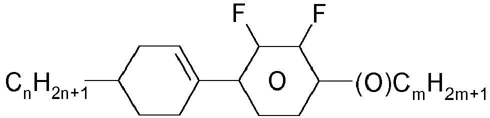 |
| **LY-n-(O)m** |
| 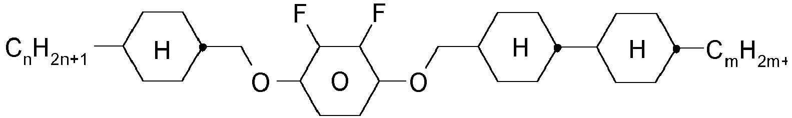 |
| **COYOICC-n-m** |
| 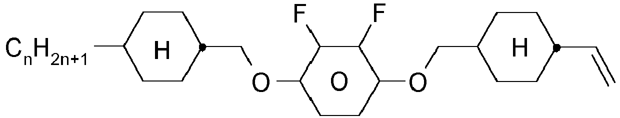 |
| **COYOIC-n-V** |
| 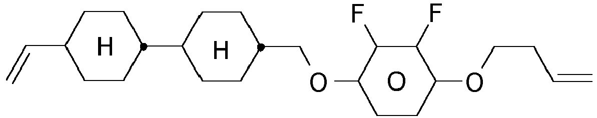 |
| **CCOY-V-O2V** |
| 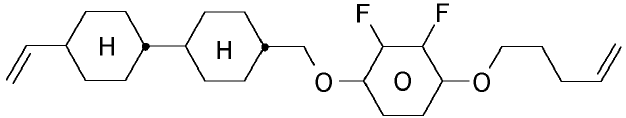 |
| **CCOY-V-O3V** |
| 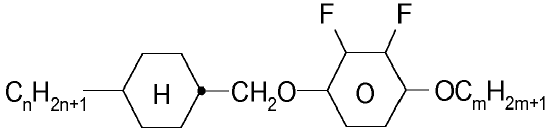 |
| **COY-n-Om** |
| 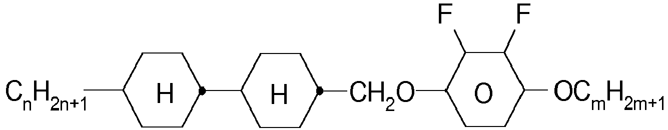 |
| **CCOY-n-Om** |
| 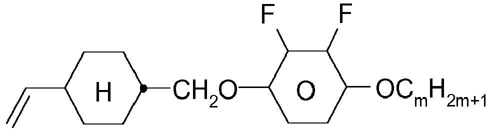 |
| **COY-V-Om** |
| 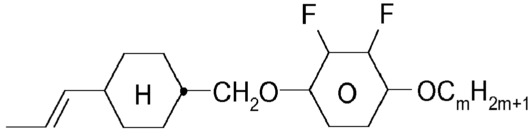 |
| **COY-1V-Om** |
| 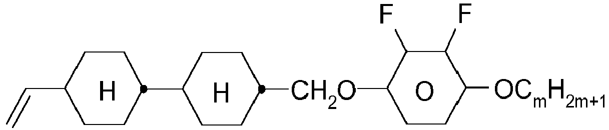 |
| **CCOY-V-Om** |
| 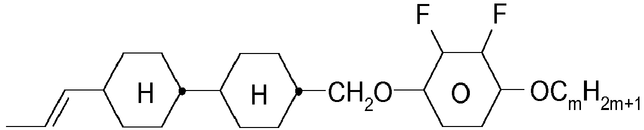 |
| **CCOY-1V-Om** |
| 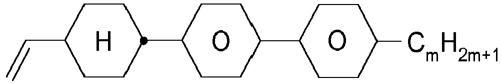 |
| **CPP-V-m** |
| 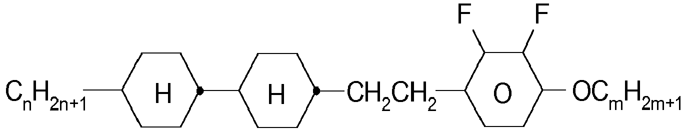 |
| **CCEY-n-Om** |
| 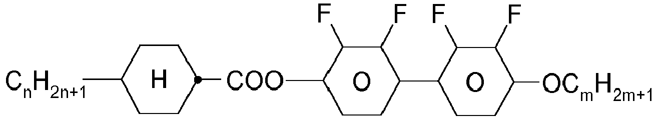 |
| **CZYY-n-Om** |
| 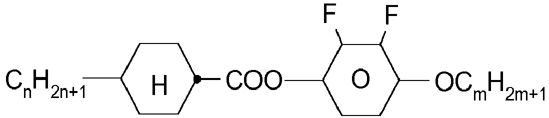 |
| **CZY-n-Om** |
| 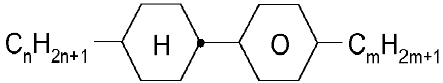 |
| **CP-n-m** |
| 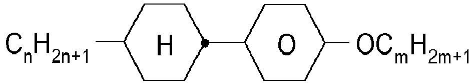 |
| **CP-n-Om** |
| 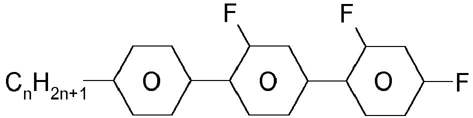 |
| **PGIGI-n-F** |
| 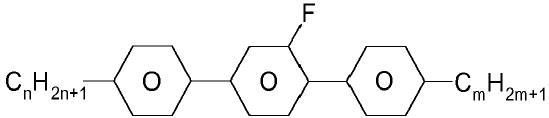 |
| **PGP-n-m** |
| 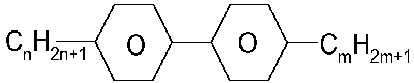 |
| **PP-n-m** |
| 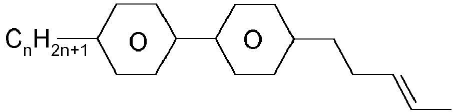 |
| **PP-n-2V1** |
| 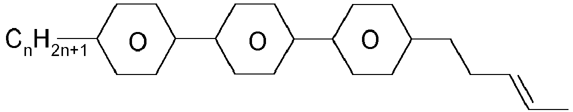 |
| **PPP-n-2V1** |
| 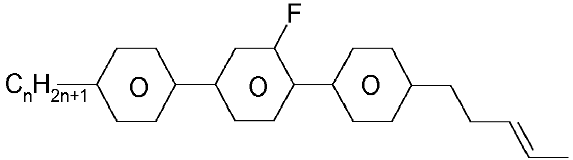 |
| **PGP-n-2V1** |
| 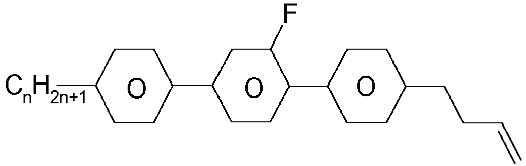 |
| **PGP-n-2V** |
| 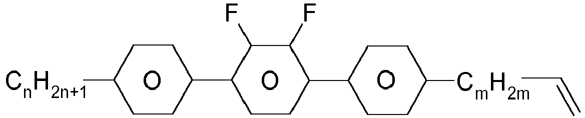 |
| **PYP-n-mV** |
| 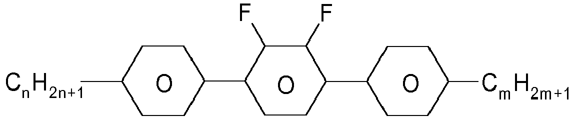 |
| **PYP-n-m** |
| 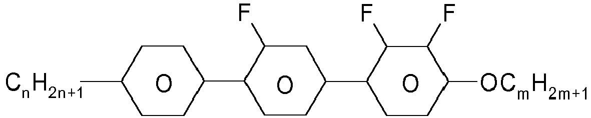 |
| **PGIY-n-Om** |
| 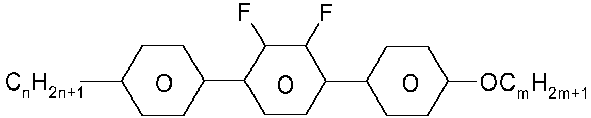 |
| **PYP-n-Om** |
| 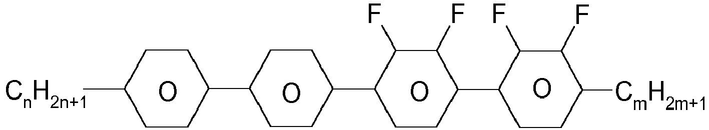 |
| **PPYY-n-m** |
| 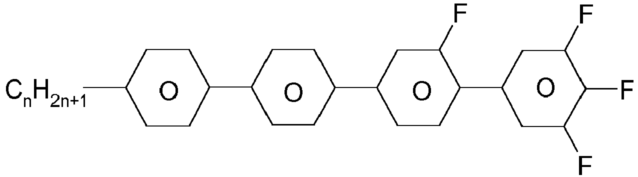 |
| **PPGU-n-F** |
| 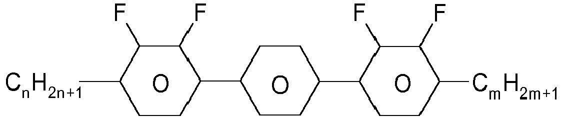 |
| **YPY-n-m** |
| 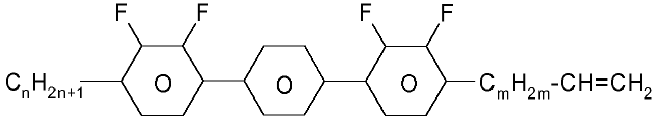 |
| **YPY-n-mV** |
| 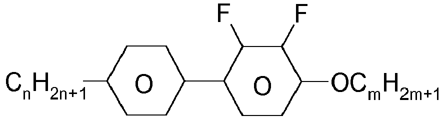 |
| **PY-n-Om** |
| 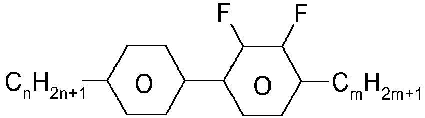 |
| **PY-n-m** |
| 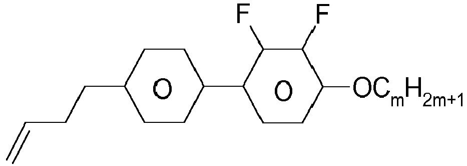 |
| **PY-V2-Om** |
| 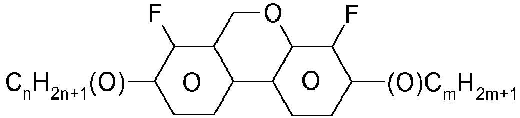 |
| **DFDBC-n(O)-(O)m** |
| 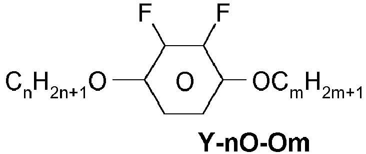 |
| 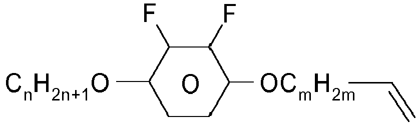 |
| **Y-nO-OmV** |
| 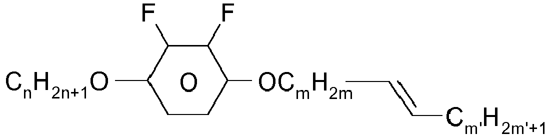 |
| **Y-nO-OmVm'** |
| 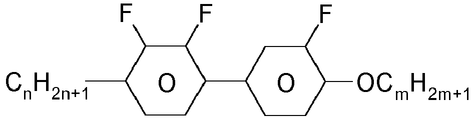 |
| **YG-n-Om** |
| 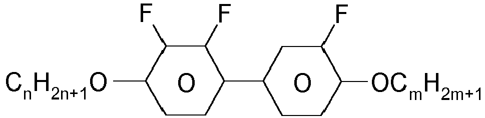 |
| **YG-nO-Om** |
| 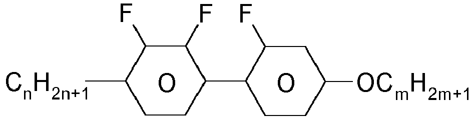 |
| **YGI-n-Om** |
| 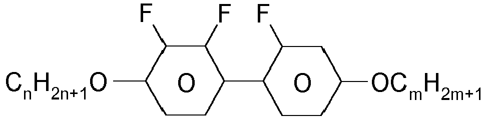 |
| **YGI-nO-Om** |
| 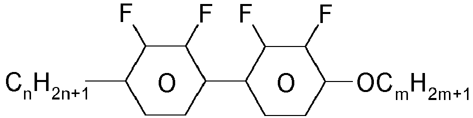 |
| **YY-n-Om** |
| 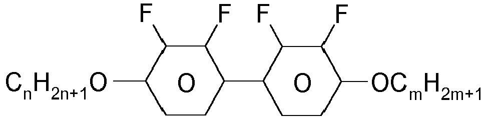 |
| **YY-nO-Om** |

The liquid-crystal mixtures which can be used in accordance with the invention are prepared in a manner which is conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

By means of suitable additives, the liquid-crystal phases according to the invention can be modified in such a way that they can be employed in any type of, for example, ECB, VAN, IPS, GH or ASM-VA LCD display that has been disclosed to date.

The dielectrics may also comprise further additives known to the person skilled in the art and described in the literature, such as, for example, UV absorbers, antioxidants, nanoparticles and free-radical scavengers. For example, 0-15% of pleochroic dyes, stabilisers, such as, for example, phenols, HALS (hindered amine light stabilisers), or chiral dopants may be added. Suitable stabilisers for the mixtures according to the invention are, in particular, those listed in Table C.

For example, 0-15% of pleochroic dyes may be added, furthermore conductive salts, preferably ethyldimethyldodecylammonium 4-hexoxybenzoate, tetrabutylammonium tetraphenylboranate or complex salts of crown ethers (cf., for example, Haller et al., Mol. Cryst. Liq. Cryst., Volume 24, pages 249-258 (1973)), may be added in order to improve the conductivity or substances may be added in order to modify the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

**Table B**

| Table B indicates possible dopants which can be added to the mixtures according to the invention. If the mixtures comprise a dopant, it is added in amounts of 0.01-4% by weight, preferably 0.01-3% by weight. | |
|---|---|
| 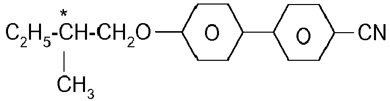 | 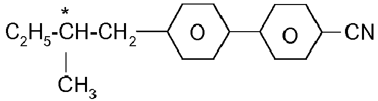 |
| **C 15** | **CB 15** |
| 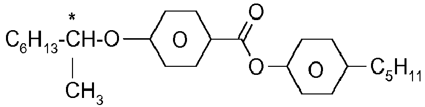 | 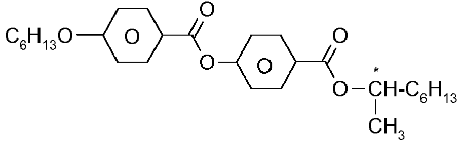 |
| **CM 21** | **R/S-811** |
| 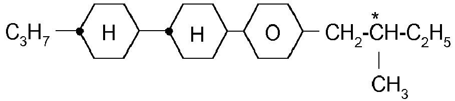 | 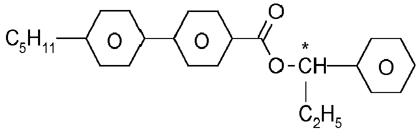 |
| **CM 44** | **CM 45** |
| 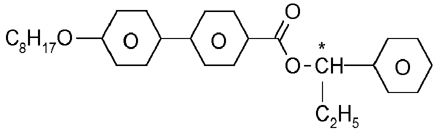 | 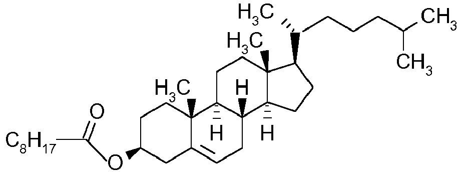 |
| **CM 47** | **CN** |
| 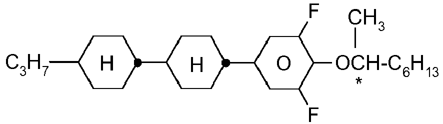 | 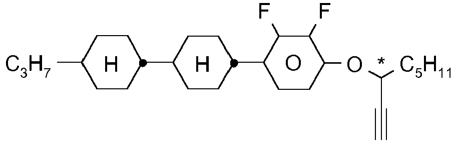 |
| **R/S-2011** | **R/S-3011** |
| 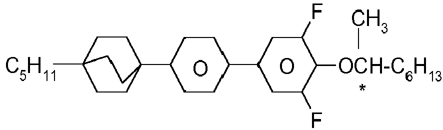 | 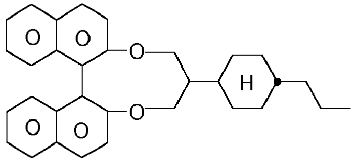 |
| **R/S-4011** | **R/S-5011** |
| 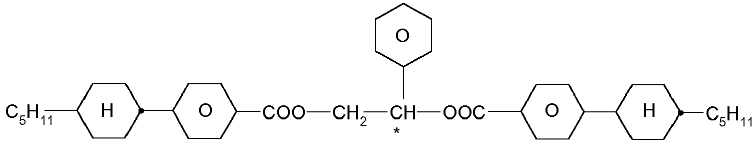 | |
| **R/S-1011** | |

The mixtures according to the invention comprise at least one stabiliser from Table C given below.

**Table C**

| Other stabilisers different from those of formula ST which can be added, for example, to the mixtures according to the invention in amounts of 0-10% by weight, preferably 0.001-5% by weight, in particular 0.001-1% by weight, are indicated below. | |
|---|---|
| 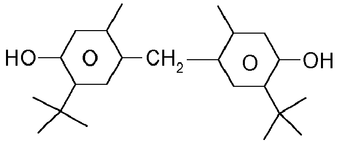 | 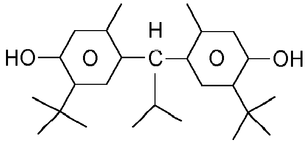 |
| 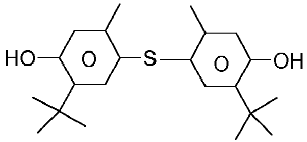 | 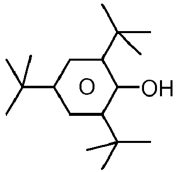 |
| 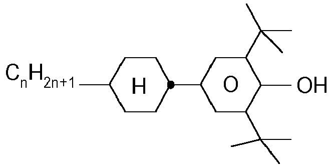 | 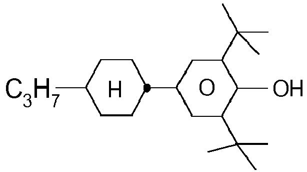 |
| n = 1, 2, 4, 5, 6 or 7 | |
| 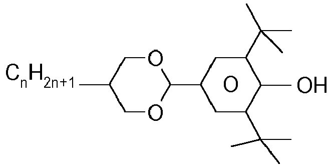 | 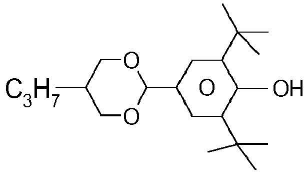 |
| n = 1, 2, 4, 5, 6 or 7 | |
| 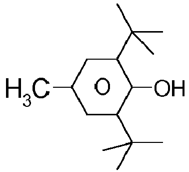 | 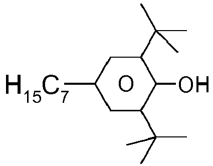 |
| 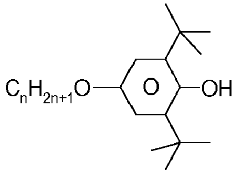 | 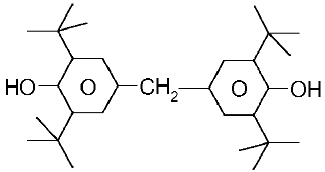 |
| 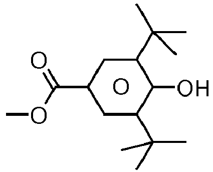 | 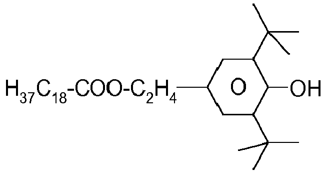 |
| 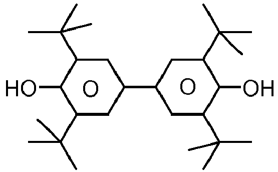 | 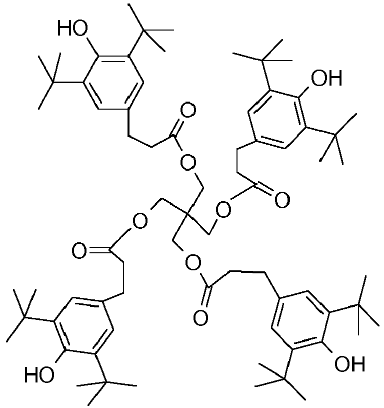 |
| 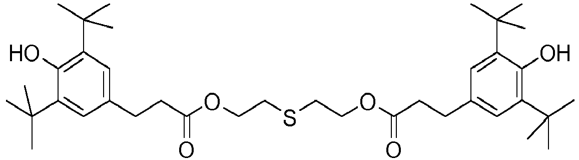 | |
| 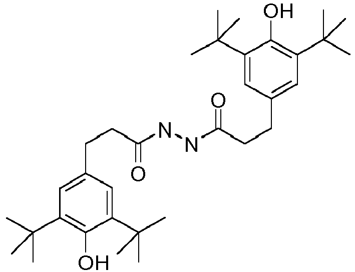 | 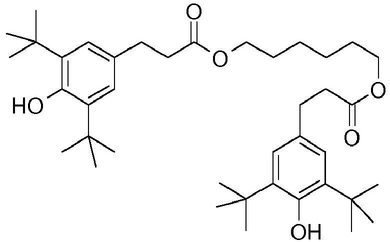 |
| 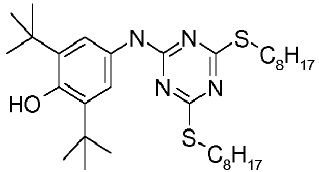 | 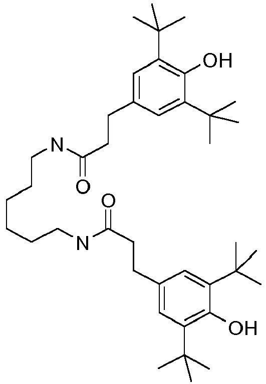 |
| 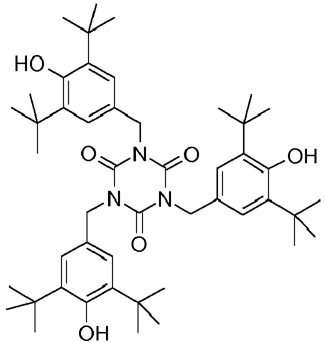 | 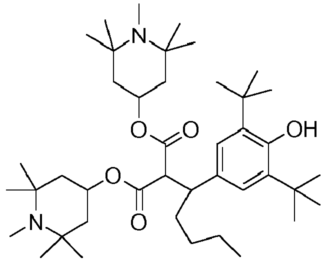 |
| 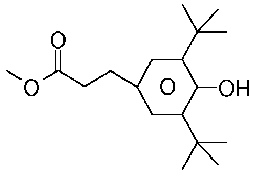 | 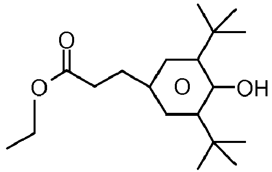 |
| 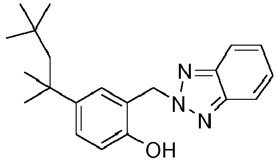 | 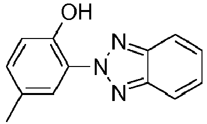 |
| | 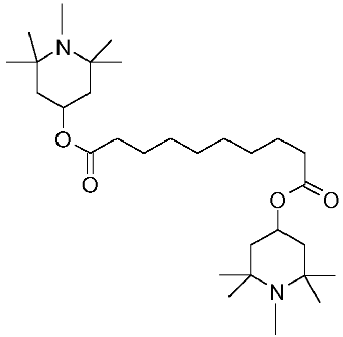 |
| 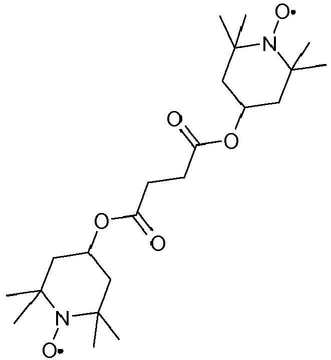 | 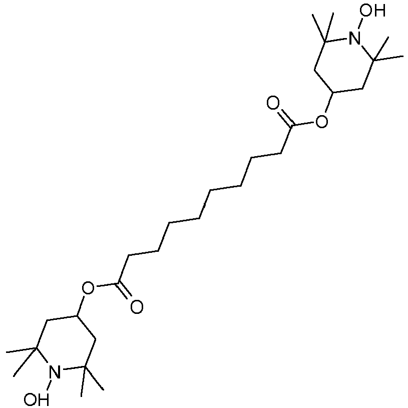 |
| 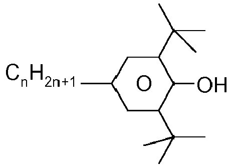 | 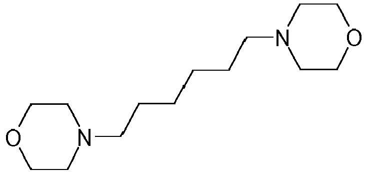 |
| n = 2, 3, 4, 5 or 6 | |
| 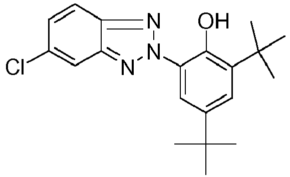 | 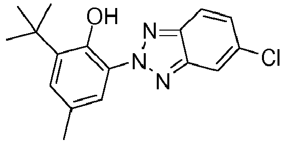 |
| 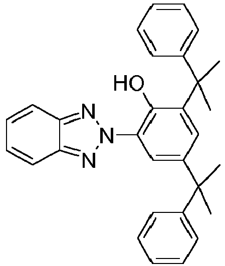 | 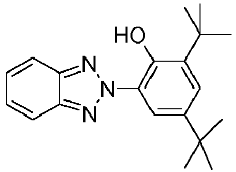 |
| 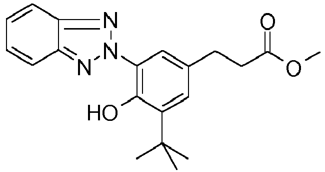 | 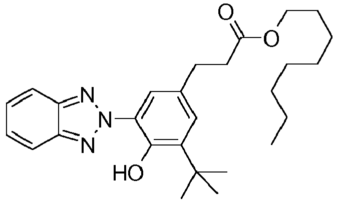 |
| 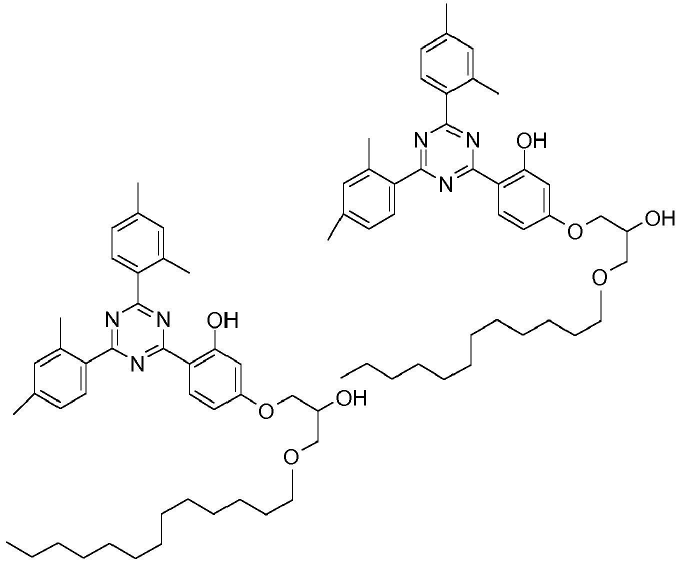 | |
| 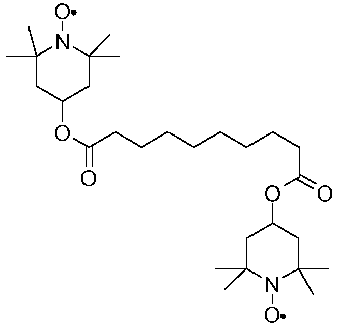 | |
| 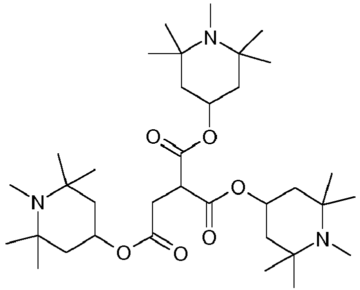 | 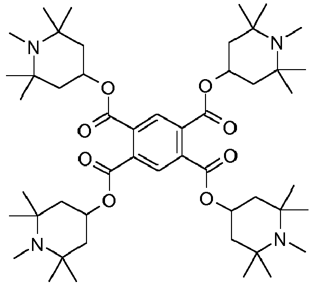 |
| 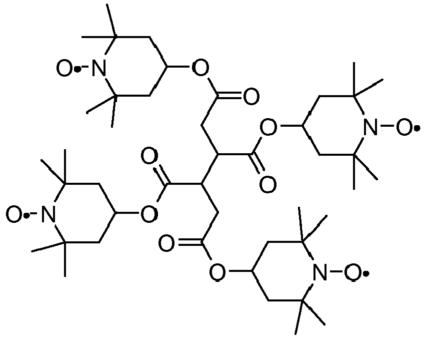 | |
| 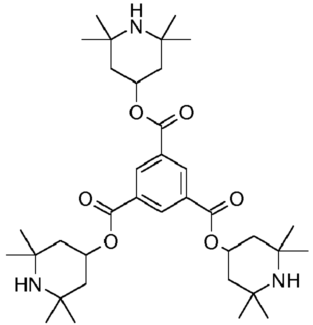 | 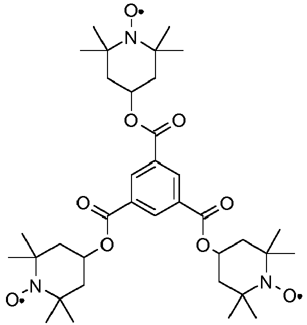 |

### Working examples:

The following examples are intended to explain the invention without limiting it. In the examples, m.p. denotes the melting point and C denotes the clearing point of a liquid-crystalline substance in degrees Celsius; boiling temperatures are denoted by m.p. Furthermore: C denotes crystalline solid state, S denotes smectic phase (the index denotes the phase type), N denotes nematic state, Ch denotes cholesteric phase, I denotes isotropic phase, T_{g} denotes glass-transition temperature. The number between two symbols indicates the conversion temperature in degrees Celsius an.

The host mixture used for determination of the optical anisotropy Δn of the compounds of the formula I is the commercial mixture ZLI-4792 (Merck KGaA). The dielectric anisotropy Δε is determined using commercial mixture ZLI-2857. The physical data of the compound to be investigated are obtained from the change in the dielectric constants of the host mixture after addition of the compound to be investigated and extrapolation to 100% of the compound employed. In general, 10% of the compound to be investigated are dissolved in the host mixture, depending on the solubility.

Unless indicated otherwise, parts or per cent data denote parts by weight or per cent by weight.

Above and below:
- Vₒ: denotes threshold voltage, capacitive [V] at 20°C,
- nₑ: denotes extraordinary refractive index at 20°C and 589 nm,
- nₒ: denotes ordinary refractive index at 20°C and 589 nm,
- Δn: denotes optical anisotropy at 20°C and 589 nm,
- ε_{⊥}: denotes dielectric permittivity perpendicular to the director at 20°C and 1 kHz,
- ε∥: denotes dielectric permittivity parallel to the director at 20°C and 1 kHz,
- Δε: denotes dielectric anisotropy at 20°C and 1 kHz,
- cl.p., T(N,I): denotes clearing point [°C],
- γ₁: denotes rotational viscosity measured at 20°C [mPa·s], determined by the rotation method in a magnetic field,
- K₁: denotes elastic constant, "splay" deformation at 20°C [pN],
- K₂: denotes elastic constant, "twist" deformation at 20°C [pN],
- K₃: denotes elastic constant, "bend" deformation at 20°C [pN],
- LTS: denotes low-temperature stability (nematic phase), determined in test cells,

Unless explicitly noted otherwise, all values indicated in the present application for temperatures, such as, for example, the melting point T(C,N), the transition from the smectic (S) to the nematic (N) phase T(S,N) and the clearing point T(N,I), are indicated in degrees Celsius (°C). M.p. denotes melting point, cl.p. = clearing point. Furthermore, Tg = glass state, C = crystalline state, N = nematic phase, S = smectic phase and I = isotropic phase. The numbers between these symbols represent the transition temperatures.

The term "threshold voltage" for the present invention relates to the capacitive threshold (V₀), also called the Freedericksz threshold, unless explicitly indicated otherwise. In the examples, as is generally usual, the optical threshold can also be indicated for 10% relative contrast (V₁₀).

The display used for measurement of the capacitive threshold voltage consists of two plane-parallel glass outer plates at a separation of 20 µm, which each have on the insides an electrode layer and an unrubbed polyimide alignment layer on top, which cause a homeotropic edge alignment of the liquid-crystal molecules.

The display or test cell used for measurement of the tilt angle consists of two plane-parallel glass outer plates at a separation of 4 µm, which each have on the insides an electrode layer and a polyimide alignment layer on top, where the two polyimide layers are rubbed antiparallel to one another and cause a homeotropic edge alignment of the liquid-crystal molecules.

Unless indicated otherwise, the VHR is determined at 20°C (VHR₂₀) and after 5 minutes in an oven at 100°C (VHR₁₀₀) in a commercially available instrument Model 6254 from TOYO Corporation, Japan. The voltage used has a frequency of in a range from 1 Hz to 60 Hz, unless indicated more precisely.

The accuracy of the VHR measurement values depends on the respective value of the VHR. The accuracy decreases with decreasing values. The deviations generally observed in the case of values in the various magnitude ranges are compiled in their order of magnitude in the following table.

| VHR range | | Deviation (relative) |
|---|---|---|
| VHR values | | A_{G}VHR/VHR /% |
| from | to | Approx. |
| 99.6% | 100% | +/-0.1 |
| 99.0% | 99.6% | +/-0.2 |
| 98% | 99% | +/- 0.3 |
| 95% | 98% | +/- 0.5 |
| 90% | 95% | +/-1 |
| 80% | 90% | +/- 2 |
| 60% | 80% | +/- 4 |
| 40% | 60% | +/- 8 |
| 20% | 40% | +/- 10 |
| 10% | 20% | +/- 20 |

The stability to UV irradiation is investigated in a "Suntest CPS", a commercial instrument from Heraeus, Germany. The sealed test cells are irradiated for between 30 min and 2.0 hours, unless explicitly indicated, without additional heating. The irradiation power in the wavelength range from 300 nm to 800 nm is 765 W/m² V. A UV "cut-off' filter having an edge wavelength of 310 nm is used in order to simulate the so-called window glass mode. In each series of experiments, at least four test cells are investigated for each condition, and the respective results are indicated as averages of the corresponding individual measurements.

The decrease in the voltage holding ratio (ΔVHR) usually caused by the exposure, for example by UV irradiation or by LCD backlighting, is determined in accordance with the following equation (1): $Δ VHR \left(t\right) = VHR \left(t\right) - VHR \left(t=0\right)$

In order to investigate the low-temperature stability, also known as "LTS", i.e. the stability of the LC mixture to spontaneous crystallisation of individual components at low temperatures, bottles containing 1 g of LC/RM mixture are stored at -10°C, and it is regularly checked whether the mixtures have crystallised out.

The ion density from which the resistivity is calculated is measured using the commercially available LC Material Characteristics Measurement System Model 6254 from Toyo Corporation, Japan, using VHR test cells with AL16301 Polyimide (JSR Corp., Japan) having a 3.2µm cell gap. The measurement is performed after 5 min of storage in an oven at 60 °C or 100 °C.

The so-called "HTP" denotes the helical twisting power of an optically active or chiral substance in an LC medium (in µm). Unless indicated otherwise, the HTP is measured in the commercially available nematic LC host mixture MLD-6260 (Merck KGaA) at a temperature of 20°C.

Unless explicitly noted otherwise, all concentrations in the present application are indicated in per cent by weight and relate to the corresponding mixture as a whole, comprising all solid or liquid-crystalline components, without solvents. All physical properties are determined in accordance with "Merck Liquid Crystals, Physical Properties of Liquid Crystals", Status November 1997, Merck KGaA, Germany, and apply for a temperature of 20°C, unless explicitly indicated otherwise.

The following mixture examples having negative dielectric anisotropy are suitable, in particular, for liquid-crystal displays which have at least one planar alignment layer, such as, for example, IPS and FFS displays, in particular UB-FFS (= ultra-bright FFS), and for VA displays.

### Mixture examples

**Comparative Mixture C1 is prepared as follows:**

| | | | |
|---|---|---|---|
| CCY-3-1 | 7.5 % | Clearing point [°C]: | 85.5 |
| CCY-3-O1 | 5.0 % | Δn (589 nm, 20°C): | 0.1053 |
| CLY-3-O2 | 9.0 % | Δε (1 kHz, 20°C): | -3.4 |
| CPY-2-O2 | 10.0 % | ε_{∥} (1 kHz, 20°C): | 3.4 |
| CPY-3-O2 | 10.0 % | ε_{⊥} (1 kHz, 20°C): | 6.8 |
| PYP-2-3 | 6.0 % | K₁ [pN], (20°C): | 14.4 |
| CC-3-V | 25.0 % | K₃ [pN], (20°C): | 17.4 |
| CC-3-V1 | 8.5 % | V₀ [V], (20°C): | 2.41 |
| CC-2-3 | 3.0 % | γ₁ [mPa·s], (20°C): | 117 |
| CY-3-O2 | 13.0 % | | |
| CY-5-O2 | 3.0 % | | |

### Example C2

The mixture C2 is prepared from 99.9 % of mixture C1 and 0.1 % of a stabiliser of formula ST-1a-1.

**A nematic host mixture N1 is prepared as follows:**

| | | | |
|---|---|---|---|
| CCY-3-O2 | 10.00% | Clearing point [°C]: | 85 |
| CCY-5-O2 | 7.00% | Δn (589 nm, 20°C): | 0.1047 |
| CPY-2-O2 | 10.00% | Δε (1 kHz, 20°C): | -3.4 |
| CPY-3-O2 | 10.00% | ε_{∥} (1 kHz, 20°C): | 3.5 |
| PYP-2-3 | 5.50% | ε_{⊥}(1 kHz, 20°C): | 6.9 |
| B-2O-O5 | 4.00% | K₁ [pN], (20°C): | 14.6 |
| CC-3-V | 32.00% | K₃ [pN], (20°C): | 17.4 |
| CC-3-V1 | 10.00% | V₀ [V], (20°C): | 2.37 |
| CY-3-O2 | 10.00% | γ₁ [mPa·s], (20°C): | 108 |
| CY-5-O2 | 1.50% | | |

### Example Mixtures M1 to M4

To the host mixture N1, the stabilisers ST-1a-1 and ST-1b-1 are added in the amounts indicated in table 1.

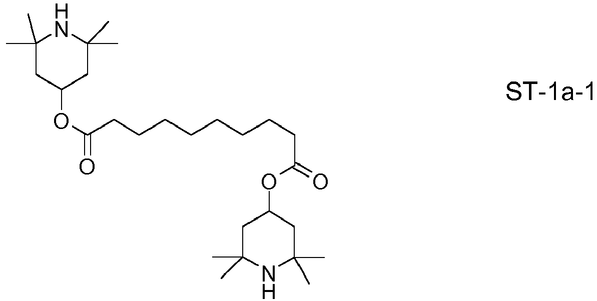

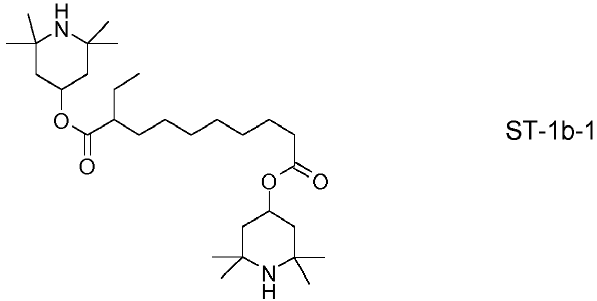

**Table 1.**

| Example | Mixture | concentration [%] | | |
|---|---|---|---|---|
| | | N1 | ST-1a-1 | ST-1b-1 |
| 1 | N1 | 100.00 | - | - |
| 2 | M1 | 99.90 | 0.10 | - |
| 3 | M2 | 99.97 | - | 0.03 |
| 4 | M3 | 99.95 | - | 0.05 |
| 5 | M4 | 99.90 | - | 0.10 |

The Voltage Holding Ratio (VHR) of the above mixtures was measured after storage at 60°C in an oven for 5 min, as described above. The following values were obtained (table 2):

**Table 2: VHR values**

| Mixture | VHR [%] at 60 Hz | VHR [%] at 3 Hz |
|---|---|---|
| N1 | 97.1 | 78.2 |
| M1 | 99.2 | 90.4 |
| M2 | 99.1 | 89.3 |
| M3 | 99.2 | 89.5 |
| M4 | 99.0 | 87.3 |

| | | |
|---|---|---|
| all values measured at 1V, 60°C | | |

As can be seen from table 2, the VHR is significantly improved for the mixtures M1 to M4 containing stabilisers ST-1a-1 or ST-1b-1 compared to the unstabilised host mixture N1.

Long term reliability tests are performed with the above mixtures in LC TV panels: The long-term reliability test includes two parts: one is the rolling pattern test and the other is the so-called and more severe NDS test. For the rolling pattern test, various alternating images are displayed on the screen for 1000 h at a storage temperature of 60 °C.
For the NDS test, images of a mosaic pattern is displayed on one half of the screen and a full white image is displayed on the other half of the screen for 2100 h at an ambient temperature of 60 °C. After the test, the panel is visually inspected for changes of the image quality (table 3).

**Table 3: Panel test results.**

| | Mixture | | | |
|---|---|---|---|---|
| | C1 | C2 | N1 | M1 |
| Short term image sticking | N/A | ◊ | N/A | ○ |
| Rolling pattern test | ○ | ○ | ○ | ○ |
| NDS test | × | ○ | × | ○ |

| | | | | |
|---|---|---|---|---|
| N/A not available × not good ◊ moderate ○ good (passed) | | | | |

Mixture C1 without stabiliser does not pass the NDS test. Addition of stabiliser ST-1a-1 to mixture C1 gives mixture C2 which passes the NDS test but has only moderate properties in terms of image sticking. While the host mixture N1 also does not pass the NDS test, the mixture M1 according to the invention including a stabiliser of formula ST and a compound of formula I passes the rolling pattern test as well as the NDS test and also has improved image sticking properties compared to mixture C2 without a compound of formula I.

In addition, resistivity measurements were performed. The results are summarised in table 4.

**Table 4: Resistivity values**

| Mixture | Resistivity [GΩ] at 60°C | Resistivity [GΩ] at 100°C |
|---|---|---|
| N1 | 2.66 | 0.55 |
| C2 | 1.35 | 0.09 |
| M1 | 1.15 | 0.08 |
| M2 | 1.11 | 0.10 |
| M3 | 1.02 | 0.09 |
| M4 | 0.76 | 0.07 |

| | | |
|---|---|---|
| all values measured at ±10V, 1Hz | | |

For liquid crystalline media it is basically desirable to achieve a high resistivity. From table 4 it can be seen that all mixtures have a sufficiently high resistivity in the GΩ range, which is why they are all very well suitable for the operation of a liquid crystal display. The resistivity is lower for the mixtures M1 to M4 containing stabilisers ST-1a-1 or ST-1b-1 compared to the unstabilised host mixture N1. As expected, the resistivity decreases with increased temperatures.

Without wishing to be bound by theory, and although this has not yet been fully evaluated, it is assumed that the combination of
1) a VHR value that is on a similar high level or higher than the VHR of a corresponding medium without a compound of formula I and a stabiliser according to the invention,
   with
2) a resistivity value that is lower than the resistivity value of a corresponding medium without compound of formula I and a stabiliser according to the invention,
   leads to an improvement (lower degree) of image sticking or even to the total absence of image sticking.

As a result, the data above show that the liquid crystalline media according to the invention, comprising a compound of formula I and a stabiliser of formula ST, have much improved reliability compared to the unstabilised host mixture. While the host N1 without stabiliser fails under the long term NDS pattern test conditions, unexpectedly, under the same conditions the mixture M1 pass the Rolling Pattern Test as well as the NDS Pattern Test and also shows improved short term image sticking.

## Claims

1. Liquid-crystalline medium, **characterised in that** it comprises one or more compounds of the formula I, 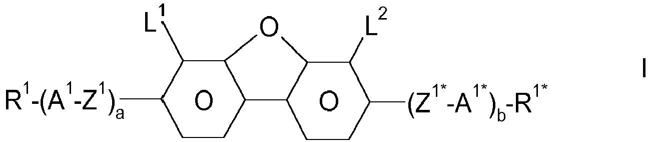 in which
R¹ and R^{1*} each, independently of one another, denote H, an alkyl or alkoxy radical having 1 to 15 C atoms, where, in addition, one or more CH₂ groups in these radicals may each be replaced, independently of one another, by -C≡C-, -CF₂O-, -OCF₂-, -CH=CH-, 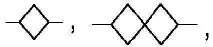 -O-, -CO-O-, -O-CO- in such a way that O atoms are not linked directly to one another, and in which, in addition, one or more H atoms may be replaced by halogen,
A¹ and A¹* each, independently of one another, denote
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo[2.2.2]octylene, naphthalene-2,6-diyl, deca-hydronaphthalene-2,6-diyl, 1,2,3,4-tetrahydro-naphthalene-2,6-diyl, phenanthrene-2,7-diyl and fluorene-2,7-diyl, wherein the radicals a), b) and c) may be mono- or polysubstituted by halogen atoms,
Z¹ and Z¹* each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond, and
L¹ and L² each, independently of one another, denote F, Cl, CF₃ or CHF₂,
a and b each, independently of one another, are 0 or 1,
and
one or more compounds the formula ST, 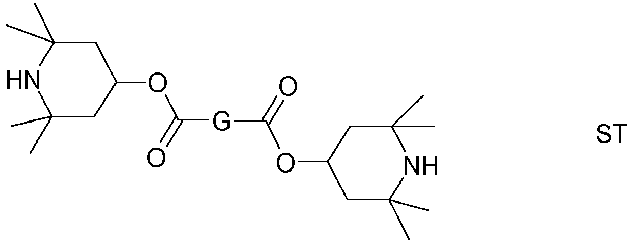 in which
G denotes a single bond or a divalent aliphatic or cycloaliphatic radical having 1 to 20 C atoms.

2. Liquid-crystalline medium according to Claim 1, **characterised in that** the medium comprises one or more compounds of the formulae I-1 to I-10, 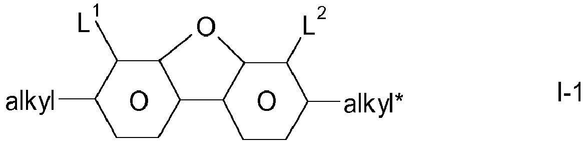 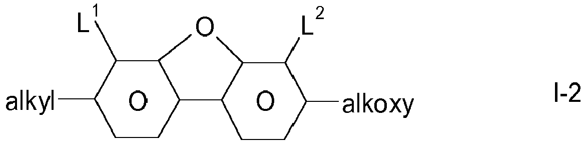 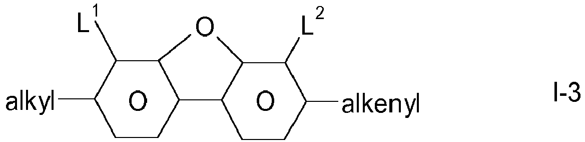 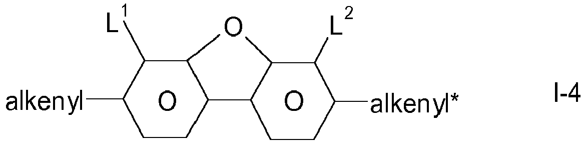 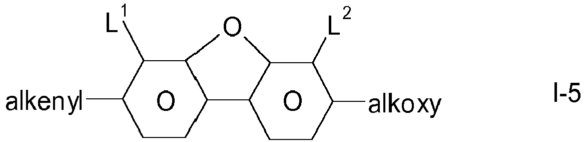 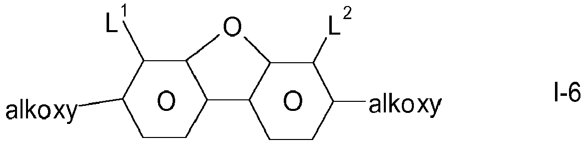 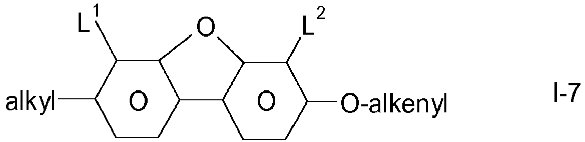 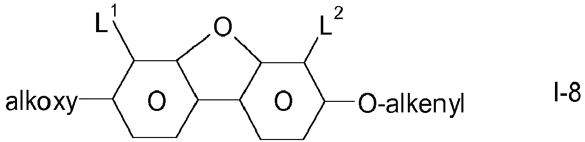 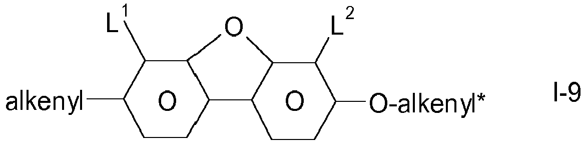 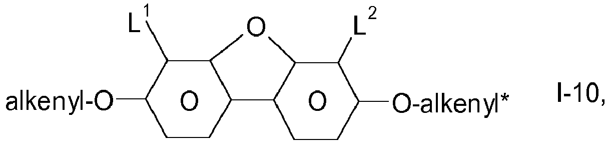 in which
alkyl and alkyl* each, independently of one another, denote a straight-chain alkyl radical having 1-6 C atoms,
alkenyl and alkenyl* each, independently of one another, denote a straight-chain alkenyl radical having 2-6 C atoms,
alkoxy and alkoxy* each, independently of one another, denote a straight-chain alkoxy radical having 1-6 C atoms, and
L¹ and L² each, independently of one another, denote F, Cl, CF₃ or CHF₂.

3. Liquid-crystalline medium according to Claim 1 or 2, **characterised in that** it comprises one or more compounds of formula I-6 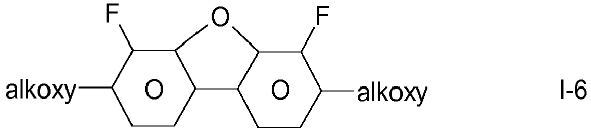 in which alkoxy has the meaning indicated in claim 2.

4. Liquid-crystalline medium according to Claim 1 or 2, wherein L¹ and L² in the formula I each denote F.

5. Liquid-crystalline medium according to one or more of Claims 1 to 4, **characterised in that** it comprises one or more compounds of the formula ST-1 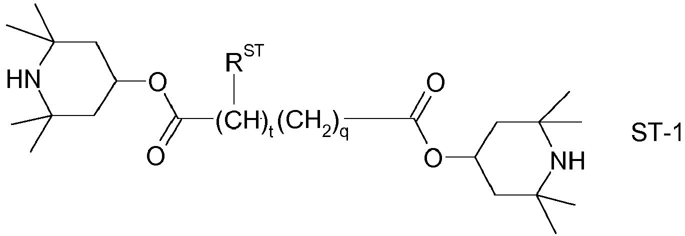 in which
R^{ST} denotes H or alkyl having 1 to 6 C atoms,
t is 0 or 1, and
q is 0, 1, 2, 3, 4, 5, 6, 7, 8, or 9.

6. Liquid-crystalline medium according to one or more of Claims 1 to 5, **characterised in that** it additionally comprises one or more compounds selected from the group of the compounds of the formulae IIA, IIB and IIC, 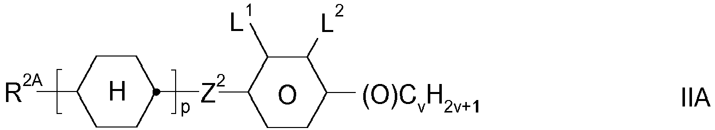 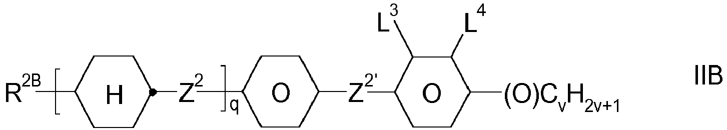 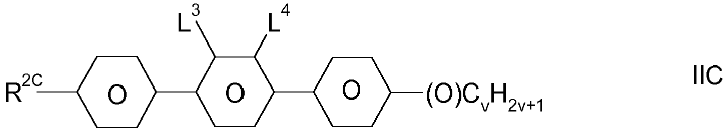 in which
R^{2A}, R^{2B} and R^{2C} each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 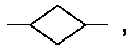 -C≡C-, -CF₂O-, -OCF₂-, -OC-O- or -O-CO- in such a way that O atoms are not linked directly to one another,
L¹⁻⁴ each, independently of one another, denote F or Cl,
Z² and Z² each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 0, 1 or 2,
q denotes 0 or 1, and
v denotes 1 to 6.

7. Liquid-crystalline medium according to one or more of Claims 1 to 6, **characterised in that** the medium additionally comprises one or more compounds of the formulae L-1 to L-11, 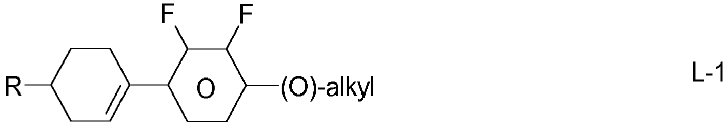 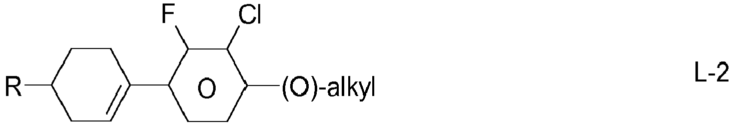 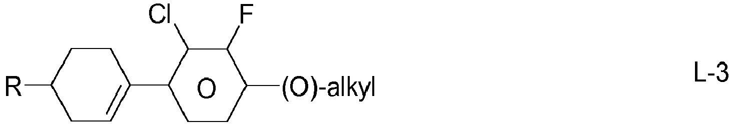 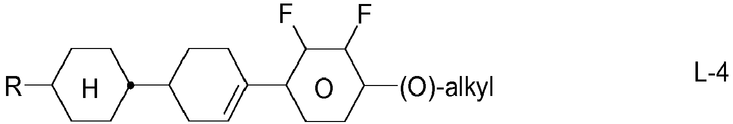 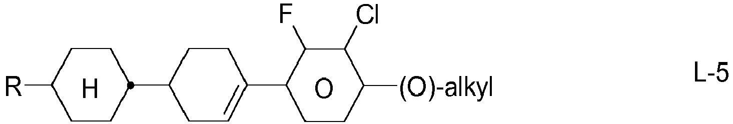 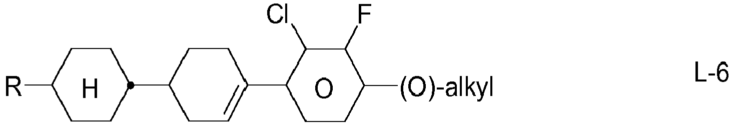 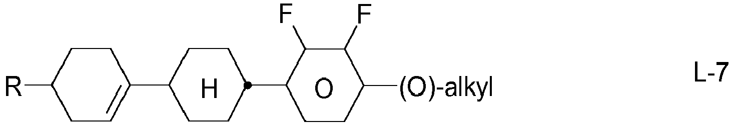 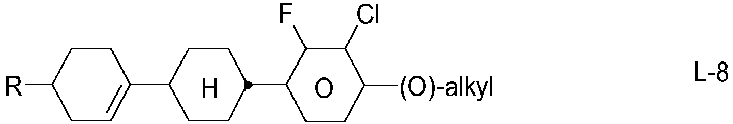 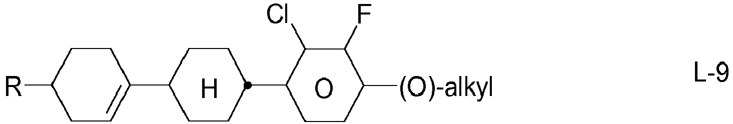 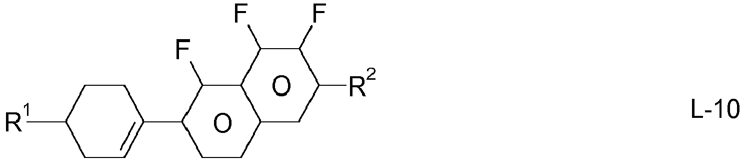 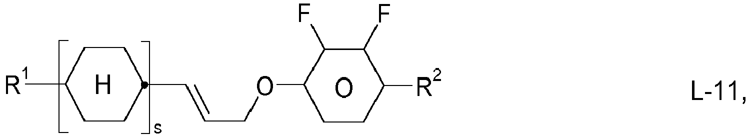 in which
R, R¹ and R² each, independently of one another, have the meanings indicated for R^{2A} in Claim 5 and alkyl denotes an alkyl radical having 1-6 C atoms, and
s denotes 1 or 2.

8. Liquid-crystalline medium according to one or more of Claims 1 to 7, **characterised in that** the medium additionally comprises one or more compounds of the formulae O-1 to O-18, 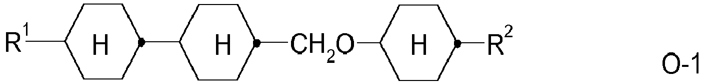 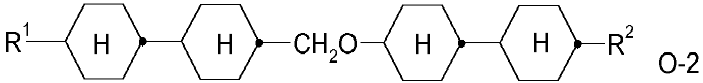 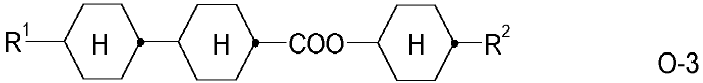 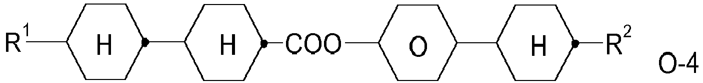 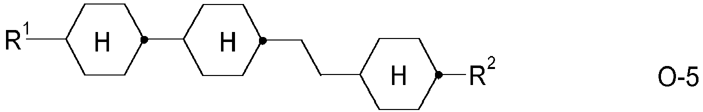 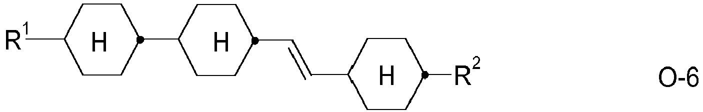 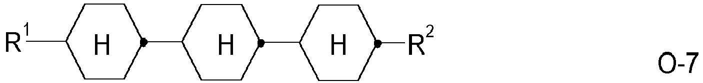 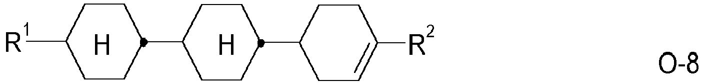 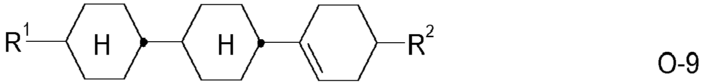 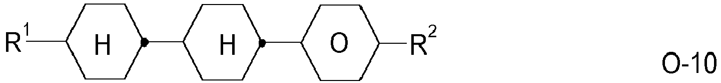 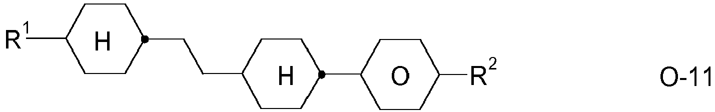 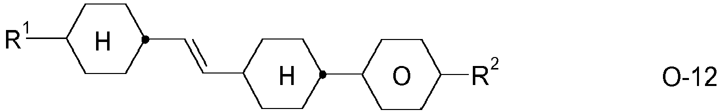 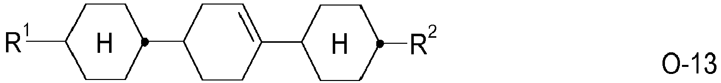 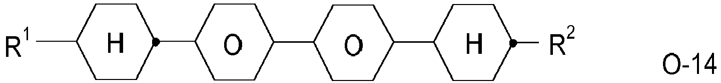 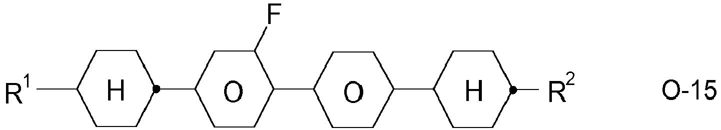 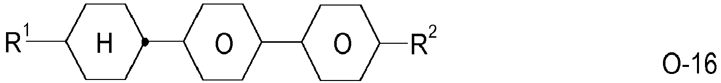 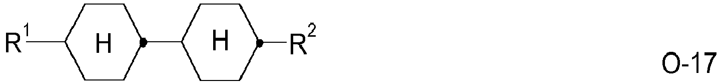 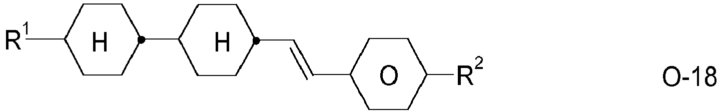 in which
R¹ and R² each, independently of one another, have the meanings indicated for R^{2A} in Claim 6.

9. Liquid-crystalline medium according to one or more of Claims 1 to 8, **characterised in that** the medium comprises one or more compounds selected from the group of the compounds of the formulae 0-6, 0-7 and 0-17, 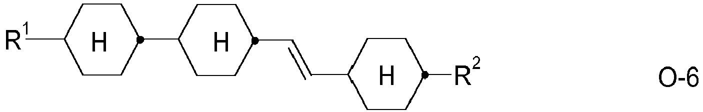 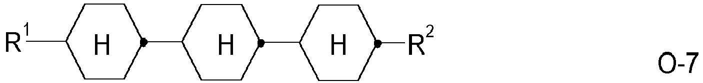 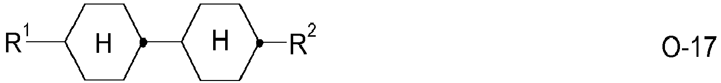 in which
R¹ denotes alkyl or alkenyl having 1-6 or 2-6 C atoms, respectively, and R² denotes alkenyl having 2-6 C atoms.

10. Liquid-crystalline medium according to one or more of Claims 1 to 9, **characterised in that** the proportion of compounds of the formula I in the mixture as a whole is 1 - 40% by weight.

11. Liquid-crystalline medium according to one or more of Claims 1 to 10, **characterised in that** the proportion of compounds of the formula ST in the mixture as a whole is in the range of from 0.005 % to 1 %.

12. Process for the preparation of a liquid-crystalline medium according to one or more of Claims 1 to 11, **characterised in that** one or more compounds of the formula I are mixed with one or more further liquid-crystalline compounds, and one or more compounds of the formula ST are added.

13. Use of the liquid-crystalline medium according to one or more of Claims 1 to 11 in electro-optical displays.

14. Electro-optical display having active-matrix addressing, **characterised in that** it contains, as dielectric, a liquid-crystalline medium according to one or more of Claims 1 to 11.

15. Electro-optical display according to Claim 15, wherein the electro-optical display is a VA, PSA, PA-VA, SS-VA, SA-VA, PS-VA, PALC, IPS, PS-IPS, FFS, UB-FFS, U-IPS or PS-FFS display.
